# EUROPEAN PATENT APPLICATION

(11) **EP 4 817 738 A1**
(43) Date of publication of application: **07.10.2026**
(21) Application number: 24897526.0
(22) Date of filing: 26.11.2024
(51) Int. Cl.: B01J 35/57, B01D 53/94, B01J 23/63, F01N 3/10

(54) **EXHAUST GAS PURIFICATION CATALYST**

(30) Priority: 30.11.2023 JP 2023203131
(71) Applicant: Mitsui Kinzoku Company, Limited, Tokyo 141-8584 (JP)
(72) Inventor: IWASHINA, Katsuya, Ageo-shi, Saitama 362-0025 (JP); YUKI, Hinata, Ageo-shi, Saitama 362-0025 (JP); IDO, Youhei, Ageo-shi, Saitama 362-0025 (JP); AIHARA, Keigo, Ageo-shi, Saitama 362-0025 (JP); KURAMOCHI, Satoru, Ageo-shi, Saitama 362-0025 (JP)
(74) Representative: Novagraaf Technologies
(86) International application number: PCT/JP2024/041770
(87) International publication number: WO 2025/115841

(57) **Abstract**

An object of the present invention is to provide an exhaust gas purification catalyst having improved methane purification performance during high-speed operation of an internal combustion engine, and to achieve this object, the present invention provides an exhaust gas purification catalyst (1A) including a first catalyst layer (20) containing Pd, a second catalyst layer (30) containing Pt, Ce, and an alkaline earth metal element, and a third catalyst layer (40) containing Rh and/or a fourth catalyst layer (50) containing Rh, wherein a mass of Pt in terms of metal in the second catalyst layer (30) is 1.0 g/L or more, wherein in the second catalyst layer (30), a ratio of a mass of Ce in terms of CeO₂ to a mass of Pt in terms of metal is 6.0 or more and 20.0 or less, and wherein in the second catalyst layer (30), a ratio of a mass of Ce in terms of CeO₂ to a mass of the alkaline earth metal element in terms of oxide is 2.0 or more and 18.0 or less.

## Description

### FIELD OF INVENTION

The present invention relates to an exhaust gas purification catalyst.

### BACKGROUND ART

Exhaust gas emitted from internal combustion engines of automobiles, motorcycles, and the like contains harmful components such as hydrocarbons (HC), carbon monoxide (CO), and nitrogen oxides (NOx). For the purpose of purifying and detoxifying these harmful components, noble metal elements such as Pt, Pd, and Rh are used as catalytically active components of exhaust gas purification catalysts.

HC emitted from internal combustion engines contains methane (CH₄). As an exhaust gas purification catalyst suitable for methane purification, Patent Document 1 discloses an exhaust gas purification catalyst including a substrate and a catalyst layer provided on the substrate, wherein the catalyst layer includes a Pd layer provided on an upstream side, a Pt layer provided on a downstream side, and an Rh layer laminated on both the Pd layer and the Pt layer, and wherein the Pt layer is substantially free of alkaline earth metal elements.

### CITATION LIST

### PATENT DOCUMNET

Patent Document 1: Japanese Patent No. 6775052

### SUMMARY OF INVENTION

### TECHNICAL PROBLEM

It is desirable that an air/fuel ratio (A/F ratio) supplied to an internal combustion engine is controlled near a stoichiometric air/fuel ratio (stoichiometry). However, an actual air/fuel ratio fluctuates to a rich state (fuel-rich atmosphere) or a lean state (fuel-lean atmosphere) around stoichiometry depending on operating conditions of the internal combustion engine, and therefore an atmosphere of exhaust gas also fluctuates between a rich state and a lean state. When exhaust gas is in a lean state, Pt is oxidized and methane purification performance of Pt decreases. When exhaust gas is switched from a lean state to a rich state, oxidized Pt is reduced and methane purification performance of Pt is recovered. Since alkaline earth metal elements have electron-donating properties, when an alkaline earth metal element is present near Pt, electrons are donated from the alkaline earth metal element to Pt. Therefore, when a Pt layer contains an alkaline earth metal element, Pt tends to adsorb oxygen more easily and tends to be stabilized as an oxide. That is, when the Pt layer contains an alkaline earth metal element, even if exhaust gas is switched from a lean state to a rich state, methane purification performance of Pt is less likely to be recovered. For this reason, in Patent Document 1, the Pt layer is specified to be substantially free of alkaline earth metal elements.

In Patent Document 1, no investigation has been conducted regarding methane purification performance during high-speed operation of an internal combustion engine. When the present inventor investigated methane purification performance during high-speed operation of an internal combustion engine, it was found that the exhaust gas purification catalyst disclosed in Patent Document 1 does not provide sufficient methane purification performance during high-speed operation of an internal combustion engine.

Accordingly, an object of the present invention is to provide an exhaust gas purification catalyst having improved methane purification performance during high-speed operation of an internal combustion engine.

### SOLUTION TO PROBLEM

In order to solve the above problem, the present invention provides the following exhaust gas purification catalyst.
(1) An exhaust gas purification catalyst including:
   a substrate extending in an exhaust gas flow direction and having a first substrate portion located on an upstream side in the exhaust gas flow direction and a second substrate portion located on a downstream side in the exhaust gas flow direction;
   a first catalyst layer provided on the first substrate portion;
   a second catalyst layer provided on the second substrate portion; and
   a third catalyst layer provided on an upper side of the first catalyst layer and/or a fourth catalyst layer provided on an upper side of the second catalyst layer,
   wherein the first catalyst layer contains Pd,
   wherein the second catalyst layer contains Pt, Ce, and an alkaline earth metal element,
   wherein the third catalyst layer and the fourth catalyst layer each contain Rh,
   wherein a mass of Pt in terms of metal in the second catalyst layer is 1.0 g/L or more based on a volume of a portion of the second substrate portion on which the second catalyst layer is provided,
   wherein in the second catalyst layer, a ratio of a mass of Ce in terms of CeO₂ to a mass of Pt in terms of metal is 6.0 or more and 20.0 or less, and
   wherein in the second catalyst layer, a ratio of a mass of Ce in terms of CeO₂ to a mass of the alkaline earth metal element in terms of oxide is 2.0 or more and 18.0 or less.
(2) The exhaust gas purification catalyst according to (2), wherein the second catalyst layer contains a Ce-Zr-based complex oxide as a Ce source.
(3) The exhaust gas purification catalyst according to (2), wherein a content of Ce in terms of CeO₂ in the Ce-Zr-based complex oxide is 18% by mass or more and 70% by mass or less based on a mass of the Ce-Zr-based complex oxide.
(4) The exhaust gas purification catalyst according to (3), wherein the content of Ce in terms of CeO₂ in the Ce-Zr-based complex oxide is 25% by mass or more and 63% by mass or less based on the mass of the Ce-Zr-based complex oxide.
(5) The exhaust gas purification catalyst according to any one of (2) to (4), wherein a content of the Ce-Zr-based complex oxide in the second catalyst layer is 20% by mass or more and 80% by mass or less based on a mass of the second catalyst layer.
(6) The exhaust gas purification catalyst according to any one of (2) to (5), wherein at least a part of Pt in the second catalyst layer is supported on the Ce-Zr-based complex oxide in the second catalyst layer.
(7) The exhaust gas purification catalyst according to any one of (1) to (6), wherein the second catalyst layer contains an alkaline earth metal compound as an alkaline earth metal element source, and wherein the alkaline earth metal compound is selected from an oxide thereof, a carbonate thereof, and a sulfate thereof.
(8) The exhaust gas purification catalyst according to any one of (1) to (7), wherein the second catalyst layer contains one or more alkaline earth metal elements selected from Ca, Sr, and Ba.
(9) The exhaust gas purification catalyst according to any one of (1) to (8), wherein the third catalyst layer and the fourth catalyst layer each contain Pt.
(10) The exhaust gas purification catalyst according to (9), wherein the third catalyst layer and the fourth catalyst layer each contain Ce.
(11) The exhaust gas purification catalyst according to (10), wherein the third catalyst layer and the fourth catalyst layer each contain a Ce-Zr-based complex oxide as a Ce source.
(12) The exhaust gas purification catalyst according to (11), wherein at least a part of Pt in the third catalyst layer is supported on the Ce-Zr-based complex oxide in the third catalyst layer, and wherein at least a part of Pt in the fourth catalyst layer is supported on the Ce-Zr-based complex oxide in the fourth catalyst layer.

### ADVANTAGEOUS EFFECT OF INVENTION

According to the present invention, an exhaust gas purification catalyst having improved methane purification performance during high-speed operation of an internal combustion engine is provided.

### BRIEF DESCRIPTION OF DRAWINGS

Fig. 1 is a partial end view showing a state in which an exhaust gas purification catalyst according to a first embodiment of the present invention is disposed in an exhaust gas passage of an internal combustion engine.
Fig. 2 is an end view taken along line A-A of Fig. 1.
Fig. 3 is an end view taken along line B-B of Fig. 1.
Fig. 4 is an enlarged view of a region indicated by reference sign R1 in Fig. 2.
Fig. 5 is an enlarged view of a region indicated by reference sign R2 in Fig. 3.
Fig. 6 is an end view taken along line C-C of Fig. 1.
Fig. 7 is an end view of an exhaust gas purification catalyst according to a second embodiment of the present invention (an end view corresponding to Fig. 6).

### DETAILED DESCRIPTION OF INVENTION

### <<Descriptions of terms>>

Hereinafter, terms used in the present specification will be described. The following descriptions apply to the entire specification unless otherwise specified. The following description regarding a catalyst layer applies to any catalyst layer (that is, the first catalyst layer 20, the second catalyst layer 30, the third catalyst layer 40, and the fourth catalyst layer 50).

The term "metal element" includes metalloid elements such as Si and B.

### <Rare earth element>

The term "rare earth element" includes Sc, Y, La, Ce, Pr, Nd, Pm, Sm, Eu, Gd, Tb, Dy, Ho, Er, Tm, Yb, and Lu.

### <Noble metal element>

The term "noble metal element" includes Pt, Pd, Rh, Ru, Os, Ir, Au, and Ag.

### <Oxide>

The term "oxide" has the following meanings. An oxide of a rare earth element other than Ce, Pr, and Tb refers to a sesquioxide (M₂O₃, where M represents a rare earth element other than Ce, Pr, and Tb). An oxide of Ce refers to CeO₂. An oxide of Pr refers to Pr₆O₁₁. An oxide of Tb refers to Tb₄O₇. An oxide of Al refers to Al₂O₃. An oxide of Zr refers to ZrO₂. An oxide of Si refers to SiO₂. An oxide of B refers to B₂O₃. An oxide of Cr refers to Cr₂O₃. An oxide of Mg refers to MgO. An oxide of Ca refers to CaO. An oxide of Sr refers to SrO. An oxide of Ba refers to BaO. An oxide of Fe refers to Fe₃O₄. An oxide of Mn refers to Mn₃O₄. An oxide of Ni refers to NiO. An oxide of Ti refers to TiO₂. An oxide of Zn refers to ZnO. An oxide of Sn refers to SnO₂.

### <Mass of metal element in terms of metal>

**The** expression "mass of a metal element in terms of metal" refers to a mass of a metal composed of the metal element, determined on the assumption that the metal element exists as the metal.

### <Mass of metal element in terms of oxide>

**The** expression "mass of a metal element in terms of oxide" refers to a mass of an oxide of the metal element, determined on the assumption that the metal element exists as the oxide. **The** meaning of the "oxide" of a metal element is as described above.

### <Mass of metal element in terms of carbonate>

**The** expression "mass of a metal element in terms of carbonate" refers to a mass of a carbonate of the metal element, determined on the assumption that the metal element exists as the carbonate.

### <Mass of metal element in terms of sulfate>

**The** expression "mass of a metal element in terms of sulfate" refers to a mass of a sulfate of the metal element, determined on the assumption that the metal element exists as the sulfate.

### <Mass of catalyst layer>

**The** expression "mass of a catalyst layer" refers to a total mass calculated by classifying all metal elements contained in the catalyst layer into noble metal elements, alkaline earth metal elements, and metal elements other than noble metal elements and alkaline earth metal elements, determining masses of the noble metal elements in terms of metal, determining masses of the alkaline earth metal elements in terms of carbonate when hydroxides, acetates, nitrates, or carbonates of alkaline earth metal elements are used as raw materials for the catalyst layer, or masses of the alkaline earth metal elements in terms of sulfate when sulfates of alkaline earth metal elements are used as raw materials for the catalyst layer, determining masses of the metal elements other than noble metal elements and alkaline earth metal elements in terms of oxide, and totalizing the determined masses. **In** other words, the expression "mass of a catalyst layer" refers to a calculated mass obtained by totalizing masses of noble metal elements contained in the catalyst layer in terms of metal, masses of alkaline earth metal elements contained in the catalyst layer in terms of carbonate or sulfate, and masses of metal elements other than noble metal elements and alkaline earth metal elements contained in the catalyst layer in terms of oxide.

When information (for example, a composition and an amount) on raw materials used for producing a catalyst layer is known, a mass of the catalyst layer can be determined from the information on the raw materials used for producing the catalyst layer.

### <Content of metal element in terms of metal or oxide in catalyst layer>

**The** expression "content of a metal element in terms of metal in a catalyst layer" is defined by the formula: (a content of a metal element in terms of metal in a catalyst layer (% by mass)) = (a mass of the metal element in terms of metal in the catalyst layer) / (a mass of the catalyst layer) x 100. **The** meanings of the "mass of the metal element in terms of metal" and the "mass of the catalyst layer" are as described above.

**The** expression "content of a metal element in terms of oxide in a catalyst layer" is defined by the formula: (a content of a metal element in terms of oxide in a catalyst layer (% by mass) = (a mass of the metal element in terms of oxide in the catalyst layer) / (a mass of the catalyst layer) x 100. **The** meanings of the "mass of the metal element in terms of oxide" and the "mass of the catalyst layer" are as described above.

When information (for example, a composition and an amount) on raw materials used for forming a catalyst layer is known, a content of a metal element in terms of metal or oxide in the catalyst layer (% by mass) can be determined from the information on the raw materials.

When information on raw materials used for forming a catalyst layer is not known, a content of a metal element in terms of metal or oxide in the catalyst layer (% by mass) can be determined by a conventional method such as scanning electron microscopy-energy dispersive X-ray analysis (SEM-EDX). Specifically, the determination is performed as follows.

Elemental analysis of the catalyst layer is performed using a conventional method such as SEM-EDX to identify the types of constituent elements of the catalyst layer and to determine the mole percentage of each metal element identified. For each of 10 fields of view in SEM, the mole percentage of each metal element is determined, and the average mole percentage of each metal element determined from the 10 fields of view is defined as the mole percentage of each metal element in the catalyst layer.

For each noble metal element in the catalyst layer, Value U is determined from the following formula: 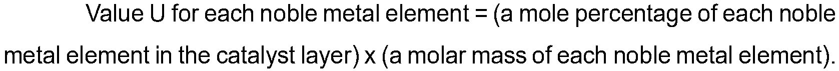 Value U for each noble metal element = (a mole percentage of each noble metal element in the catalyst layer) x (a molar mass of each noble metal element).

For each alkaline earth metal element in the catalyst layer, Value V1 is determined from the following formula: 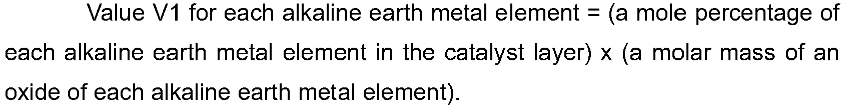 Value V1 for each alkaline earth metal element = (a mole percentage of each alkaline earth metal element in the catalyst layer) x (a molar mass of an oxide of each alkaline earth metal element).

For each alkaline earth metal element in the catalyst layer, Value V2 is determined from the following formula: 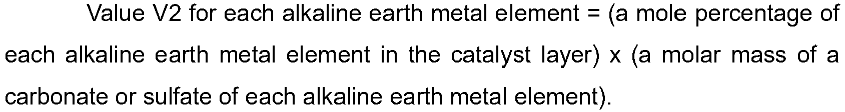 Value V2 for each alkaline earth metal element = (a mole percentage of each alkaline earth metal element in the catalyst layer) x (a molar mass of a carbonate or sulfate of each alkaline earth metal element).

The expression "molar mass of a carbonate or sulfate of an alkaline earth metal element" refers to, when a hydroxide, acetate, nitrate, or carbonate of the alkaline earth metal element is used as a raw material for the catalyst layer, a molar mass of a carbonate of the alkaline earth metal element, and when a sulfate of the alkaline earth metal element is used as a raw material for the catalyst layer, a molar mass of a sulfate of the alkaline earth metal element.

For each metal element other than noble metal elements and alkaline earth metal elements in the catalyst layer, Value W is determined from the following formula: 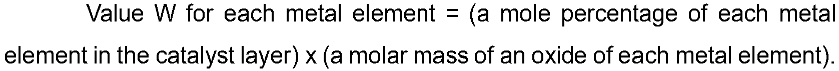 Value W for each metal element = (a mole percentage of each metal element in the catalyst layer) x (a molar mass of an oxide of each metal element).

A content of each noble metal element in terms of metal in the catalyst layer (% by mass) is determined from the following formula: 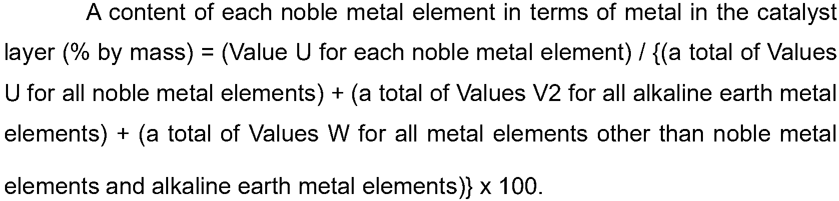 A content of each noble metal element in terms of metal in the catalyst layer (% by mass) = (Value U for each noble metal element) / {(a total of Values U for all noble metal elements) + (a total of Values V2 for all alkaline earth metal elements) + (a total of Values W for all metal elements other than noble metal elements and alkaline earth metal elements)} x 100.

A content of each alkaline earth metal element in terms of oxide in the catalyst layer (% by mass) is determined from the following formula: 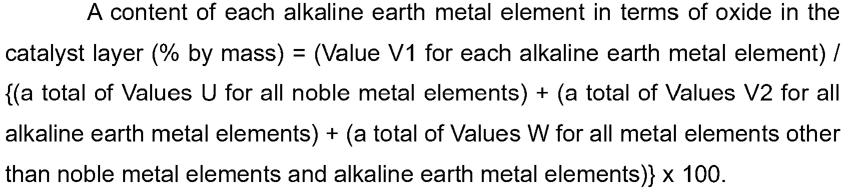 A content of each alkaline earth metal element in terms of oxide in the catalyst layer (% by mass) = (Value V1 for each alkaline earth metal element) / {(a total of Values U for all noble metal elements) + (a total of Values V2 for all alkaline earth metal elements) + (a total of Values W for all metal elements other than noble metal elements and alkaline earth metal elements)} x 100.

A content of each metal element other than noble metal elements and alkaline earth metal elements in terms of oxide in the catalyst layer (% by mass) is determined from the following formula: 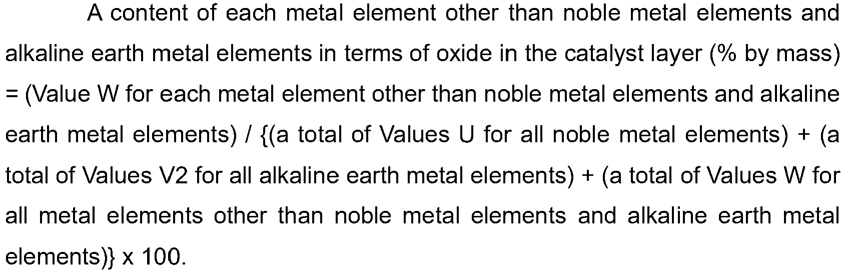 A content of each metal element other than noble metal elements and alkaline earth metal elements in terms of oxide in the catalyst layer (% by mass) = (Value W for each metal element other than noble metal elements and alkaline earth metal elements) / {(a total of Values U for all noble metal elements) + (a total of Values V2 for all alkaline earth metal elements) + (a total of Values W for all metal elements other than noble metal elements and alkaline earth metal elements)} x 100.

### <Al-based oxide>

The term "Al-based oxide" refers to an oxide containing Al, wherein Al is the metal element with the highest mass-based content among metal elements constituting the oxide. However, it should be noted that an oxide falling within the scope of a Ce-Zr-based complex oxide is excluded from the scope of the Al-based oxide. The Ce-Zr-based complex oxide will be described later. The Al-based oxide is distinguished from alumina used as a binder. In the present specification, alumina used as a binder may be referred to as an "alumina binder".

The Al-based oxide is, for example, in particulate form. The Al-based oxide is used as a carrier for a catalytically active component. From the viewpoint of improving supportability for a catalytically active component, the Al-based oxide is preferably porous.

The Al-based oxide preferably has a particle size suitable for use as a carrier for a catalytically active component. The average particle diameter of the Al-based oxide is preferably 1 µm or more and 35 µm or less, more preferably 2 µm or more and 25 µm or less, and still more preferably 3 µm or more and 15 µm or less. Each of the above lower limits may be combined with any of the above upper limits. The method for measuring the average particle diameter of the Al-based oxide is as follows: A sample containing the Al-based oxide is observed using a scanning electron microscope, the unidirectional particle diameter (Feret diameter) of 100 Al-based oxide particles arbitrarily selected from the field of view is measured, and an average value thereof is defined as the average particle diameter of the Al-based oxide.

The Al-based oxide generally has higher heat resistance than other inorganic oxides. Therefore, when a catalyst layer contains the Al-based oxide, the heat resistance of the catalyst layer is improved, and the exhaust gas purification performance of the catalyst layer is improved.

The Al-based oxide may contain one or more metal elements other than Al (hereinafter referred to as "additional element M1"). The additional element M1 can be selected, for example, from rare earth elements (for example, Ce, Y, Pr, La, Nd, Sm, Eu, Gd, and the like), alkaline earth metal elements (for example, Mg, Ca, Sr, Ba, and the like), B, Si, Zr, Cr, and the like.

In the Al-based oxide, the additional element M1 may form a solid solution phase (for example, a solid solution phase of Al₂O₃ and an oxide of the additional element M1), may form a single phase (for example, an oxide phase of the additional element M1) that is a crystalline phase or an amorphous phase, or may form both a solid solution phase and a single phase. However, it is preferable that at least a part of the additional element M1 forms a solid solution phase.

Examples of the Al-based oxide include alumina (Al₂O₃), an oxide obtained by modifying a surface of alumina with the additional element M1, an oxide obtained by dissolving the additional element M1 in alumina, and the like. Examples of the Al-based oxide containing the additional element M1 include alumina-silica, alumina-zirconia, alumina-chromia, alumina-ceria, alumina-lanthana, and the like.

From the viewpoint of improving heat resistance of the Al-based oxide, a content of Al in terms of Al₂O₃ in the Al-based oxide is preferably 80% by mass or more, more preferably 85% by mass or more, and still more preferably 90% by mass or more, based on a mass of the Al-based oxide. The upper limit is 100% by mass.

The content of Al in terms of Al₂O₃ in the Al-based oxide is defined by the formula: (a mass of Al in terms of Al₂O₃ in the Al-based oxide) / (a mass of the Al-based oxide) x 100. The "mass of the Al-based oxide" refers to a total mass of oxides of metal elements, determined on the assumption that each metal element in the Al-based oxide exists as an oxide. The meaning of the "oxide" of a metal element is as described above.

From the viewpoint of improving heat resistance of the Al-based oxide, the Al-based oxide preferably contains one or more rare earth elements. The rare earth element can be selected, for example, from La, Y, Nd, Pr, Sm, Eu, Gd, and the like. In one embodiment, the Al-based oxide contains La. The Al-based oxide may contain, in addition to La, one or more other rare earth elements.

From the viewpoint of improving heat resistance of the Al-based oxide, a content of a rare earth element in terms of oxide in the Al-based oxide is preferably 0.1% by mass or more and 20% by mass or less, more preferably 0.3% by mass or more and 15% by mass or less, and still more preferably 0.5% by mass or more and 10% by mass or less, based on the mass of the Al-based oxide. Each of the above lower limits may be combined with any of the above upper limits. The "content of a rare earth element in terms of oxide in the Al-based oxide" refers to, when the Al-based oxide contains one rare earth element, a content of the one rare earth element in terms of oxide, and when the Al-based oxide contains two or more rare earth elements, a total content of the two or more rare earth elements in terms of oxide.

The content of a rare earth element in terms of oxide in the Al-based oxide is defined by the formula: (a mass of a rare earth element in terms of oxide in the Al-based oxide) / (a mass of the Al-based oxide) x 100. The meanings of the "mass of the Al-based oxide" and the "oxide" of a metal element are as described above.

When a composition of the Al-based oxide is known, a content of each metal element in terms of oxide in the Al-based oxide can be determined from the composition of the Al-based oxide.

When a composition of the Al-based oxide is not known, a content of each metal element in terms of oxide in the Al-based oxide can be determined by analyzing a sample containing the Al-based oxide by energy dispersive X-ray spectroscopy (EDX) to obtain an elemental mapping, and performing EDX elemental analysis on a designated particle in the obtained element mapping. Specifically, Al-based oxide particles and other particles are qualitatively identified by elemental mapping with color-coding, and compositional analysis (elemental analysis) is performed on a designated Al-based oxide particle, whereby a content of each metal element in terms of oxide in the designated Al-based oxide particle can be determined.

### <Ce-based oxide>

The term "Ce-based oxide" refers to an oxide containing Ce, wherein Ce is the metal element with the highest mass-based content among metal elements constituting the oxide. However, it should be noted that an oxide falling within the scope of a Ce-Zr-based complex oxide is excluded from the scope of the Ce-based oxide. The Ce-Zr-based complex oxide will be described later. The Ce-based oxide is distinguished from ceria used as a binder. In the present specification, ceria used as a binder may be referred to as a "ceria binder".

The Ce-based oxide is, for example, in particulate form. The Ce-based oxide is used as a carrier for a catalytically active component. From the viewpoint of improving supportability for a catalytically active component, the Ce-based oxide is preferably porous.

The Ce-based oxide preferably has a particle diameter suitable for use as a carrier for a catalytically active component. The average particle diameter of the Ce-based oxide is preferably 1 µm or more and 35 µm or less, more preferably 2 µm or more and 25 µm or less, and still more preferably 3 µm or more and 15 µm or less. Each of the above lower limits may be combined with any of the above upper limits. The method for measuring the average particle diameter of the Ce-based oxide is the same as the method for measuring the average particle diameter of the Al-based oxide.

The Ce-based oxide has an oxygen storage capacity (an ability to store oxygen when an oxygen concentration in exhaust gas is high and to release oxygen when the oxygen concentration in the exhaust gas is low), and mitigates fluctuations in oxygen concentration in exhaust gas to expand an operating window of a catalytically active component. Therefore, when a catalyst layer contains the Ce-based oxide, the exhaust gas purification performance of the catalyst layer is improved.

**The** Ce-based oxide may contain one or more metal elements other than Ce (hereinafter referred to as "additional element M2"). **The** additional element M2 can be selected, for example, from rare earth elements other than Ce (for example, La, Y, Nd, Pr, Sm, Eu, Gd, and the like), alkaline earth metal elements (for example, Mg, Ca, Sr, Ba, and the like), Fe, Mn, Ni, Zr, Al, and the like.

**In** the Ce-based oxide, the additional element M2 may form a solid solution phase (for example, a solid solution phase of CeO₂ and an oxide of the additional element M2), may form a single phase (for example, an oxide phase of the additional element M2) that is a crystalline phase or an amorphous phase, or may form both a solid solution phase and a single phase. However, it is preferable that at least a part of the additional element M2 forms a solid solution phase.

Examples of the Ce-based oxide include ceria (CeO₂), an oxide obtained by modifying a surface of ceria with the additional element M2, an oxide obtained by dissolving the additional element M2 in ceria, and the like.

From the viewpoint of improving oxygen storage capacity of the Ce-based oxide, a content of Ce in terms of CeO₂ in the Ce-based oxide is preferably 80% by mass or more, more preferably 85% by mass or more, and still more preferably 90% by mass or more, based on a mass of the Ce-based oxide. **The** upper limit is 100% by mass.

**The** content of Ce in terms of CeO₂ in the Ce-based oxide is defined by the formula: (a mass of Ce in terms of CeO₂ in the Ce-based oxide) / (a mass of the Ce-based oxide) x 100. **The** "mass of the Ce-based oxide" refers to a total mass of oxides of metal elements, determined on the assumption that each metal element in the Ce-based oxide exists as an oxide. **The** meaning of the "oxide" of a metal element is as described above.

A content of each metal element in terms of oxide in the Ce-based oxide can be determined in the same manner as the content of each metal element in terms of oxide in the Al-based oxide.

### <Zr-based oxide>

**The** term "Zr-based oxide" refers to an oxide containing Zr, wherein Zr is the metal element with the highest mass-based content among metal elements constituting the oxide. However, it should be noted that an oxide falling within the scope of a Ce-Zr-based complex oxide is excluded from the scope of the Zr-based oxide. **The** Ce-Zr-based complex oxide will be described later. **The** Zr-based oxide is distinguished from zirconia used as a binder. **In** the present specification, zirconia used as a binder may be referred to as a "zirconia binder".

**The** Zr-based oxide is, for example, in particulate form. **The** Zr-based oxide is used as a carrier for a catalytically active component. From the viewpoint of improving supportability for a catalytically active component, the Zr-based oxide is preferably porous.

**The** Zr-based oxide preferably has a particle diameter suitable for use as a carrier for a catalytically active component. **The** average particle diameter of the Zr-based oxide is preferably 0.1 µm or more and 10 µm or less, more preferably 1 µm or more and 5 µm or less. Each of the above lower limits may be combined with any of the above upper limits. **The** method for measuring the average particle diameter of the Zr-based oxide is the same as the method for measuring the average particle diameter of the Al-based oxide.

**The** Zr-based oxide has high heat resistance. Therefore, when a catalyst layer contains the Zr-based oxide, the heat resistance of the catalyst layer is improved, and the exhaust gas purification performance of the catalyst layer is improved.

**The** Zr-based oxide may contain one or more metal elements other than Zr (hereinafter referred to as "additional element M3"). **The** additional element M3 can be selected, for example, from rare earth elements (for example, Ce, Y, Pr, La, Nd, Sm, Eu, Gd, and the like), alkaline earth metal elements (for example, Mg, Ca, Sr, Ba, and the like), B, Si, Al, Cr, and the like.

**In** the Zr-based oxide, the additional element M3 may form a solid solution phase (for example, a solid solution phase of ZrO₂ and an oxide of the additional element M3), may form a single phase (for example, an oxide phase of the additional element M3) that is a crystalline phase or an amorphous phase, or may form both a solid solution phase and a single phase. However, it is preferable that at least a part of the additional element M3 forms a solid solution phase.

Examples of the Zr-based oxide include zirconia (ZrO₂), an oxide obtained by modifying a surface of zirconia with the additional element M3, an oxide obtained by dissolving the additional element M3 in zirconia, and the like.

From the viewpoint of improving heat resistance of the Zr-based oxide, a content of Zr in terms of ZrO₂ in the Zr-based oxide is preferably 70% by mass or more, more preferably 75% by mass or more, and still more preferably 80% by mass or more, based on a mass of the Zr-based oxide. The upper limit is 100% by mass.

The content of Zr in terms of ZrO₂ in the Zr-based oxide is defined by the formula: (a mass of Zr in terms of ZrO₂ in the Zr-based oxide) / (a mass of the Zr-based oxide) x 100. The "mass of the Zr-based oxide" refers to a total mass of oxides of metal elements, determined on the assumption that each metal element in the Zr-based oxide exists as an oxide. The meaning of the "oxide" of a metal element is as described above.

A content of each metal element in terms of oxide in the Zr-based oxide can be determined in the same manner as the content of each metal element in terms of oxide in the Al-based oxide.

### <Ce-Zr-based complex oxide>

The term "Ce-Zr-based complex oxide" refers to a complex oxide containing Ce and Zr, wherein a content of Ce in terms of CeO₂ in the complex oxide is 5% by mass or more and 95% by mass or less based on a mass of the complex oxide, and a content of Zr in terms of ZrO₂ in the complex oxide is 5% by mass or more and 95% by mass or less based on the mass of the complex oxide.

The content of Ce in terms of CeO₂ in the Ce-Zr-based complex oxide is defined by the formula: (a mass of Ce in terms of CeO₂ in the Ce-Zr-based complex oxide) / (the mass of the Ce-Zr-based complex oxide) x 100, and the content of Zr in terms of ZrO₂ in the Ce-Zr-based complex oxide is defined by the formula: (a mass of Zr in terms of ZrO₂ in the Ce-Zr-based complex oxide) / (the mass of the Ce-Zr-based complex oxide) x 100. The "mass of the Ce-Zr-based complex oxide" refers to a total mass of oxides of metal elements, determined on the assumption that each metal element in the Ce-Zr-based complex oxide exists as an oxide. The meaning of the "oxide" of a metal element is as described above.

A content of each metal element in terms of oxide in the Ce-Zr-based complex oxide can be determined in the same manner as the content of each metal element in terms of oxide in the Al-based oxide.

The Ce-Zr-based complex oxide is, for example, in particulate form. The Ce-Zr-based complex oxide is used as a carrier for a catalytically active component. From the viewpoint of improving supportability for a catalytically active component, the Ce-Zr-based complex oxide is preferably porous.

The Ce-Zr-based complex oxide preferably has a particle diameter suitable for use as a carrier for a catalytically active component. The average particle diameter of the Ce-Zr-based complex oxide is preferably 1 µm or more and 35 µm or less, and more preferably 3 µm or more and 15 µm or less. Each of the above lower limits may be combined with any of the above upper limits. The method for measuring the average particle diameter of the Ce-Zr-based complex oxide is the same as the method for measuring the average particle diameter of the Al-based oxide.

The Ce-Zr-based complex oxide has an oxygen storage capacity and mitigates fluctuations in oxygen concentration in exhaust gas to expand an operating window of a catalytically active component. Therefore, when a catalyst layer contains the Ce-Zr-based complex oxide, the exhaust gas purification performance of the catalyst layer is improved.

The Ce-Zr-based complex oxide may contain one or more metal elements other than Ce and Zr (hereinafter referred to as "additional element M4"). The additional element M4 can be selected, for example, from rare earth elements other than Ce (for example, La, Y, Nd, Pr, Sm, Eu, Gd, and the like), alkaline earth metal elements (for example, Mg, Ca, Sr, Ba, and the like), Fe, Mn, Ni, Al, and the like.

In the Ce-Zr-based complex oxide, Ce may form a solid solution phase (for example, a solid solution phase of CeO₂ and ZrO₂), may form a single phase (for example, a single CeO₂ phase) that is a crystalline phase or an amorphous phase, or may form both a solid solution phase and a single phase. However, it is preferable that at least a part of Ce forms a solid solution phase.

In the Ce-Zr-based complex oxide, Zr may form a solid solution phase (for example, a solid solution phase of CeO₂ and ZrO₂), may form a single phase (for example, a single ZrO₂ phase) that is a crystalline phase or an amorphous phase, or may form both a solid solution phase and a single phase. However, it is preferable that at least a part of Zr forms a solid solution phase.

When the Ce-Zr-based complex oxide contains the additional element M4, the additional element M4 may form a solid solution phase (for example, a solid solution phase of CeO₂ and an oxide of the additional element M4, a solid solution phase of ZrO₂ and an oxide of the additional element M4, or a solid solution phase of CeO₂, ZrO₂, and an oxide of the additional element M4), may form a single phase (for example, a single oxide phase of the additional element M4) that is a crystalline phase or an amorphous phase, or may form both a solid solution phase and a single phase. However, it is preferable that at least a part of the additional element M4 forms a solid solution phase.

From the viewpoint of improving heat resistance of the Ce-Zr-based complex oxide, the Ce-Zr-based complex oxide preferably contains one or more rare earth elements. The rare earth element can be selected, for example, from La, Y, Nd, Pr, Sm, Eu, Gd, and the like.

### <<First Embodiment>>

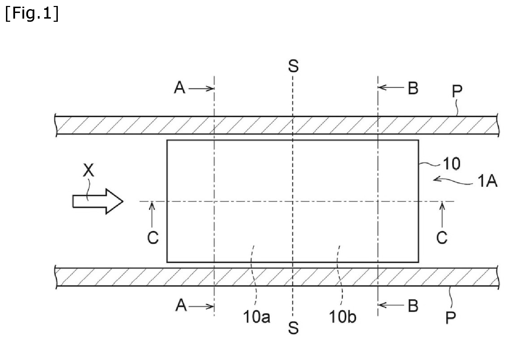

Hereinafter, an exhaust gas purification catalyst 1A according to a first embodiment (hereinafter referred to as "catalyst 1A") will be described with reference to Figs. 1 to 6.

As shown in Fig. 1, the catalyst 1A is disposed in an exhaust gas passage in an exhaust pipe P of an internal combustion engine. The internal combustion engine may be an internal combustion engine using gasoline as a fuel, such as a gasoline engine, or may be an internal combustion engine using natural gas (for example, compressed natural gas (CNG)) as a fuel, such as a natural gas engine. Exhaust gas emitted from an internal combustion engine using gasoline as a fuel and exhaust gas emitted from an internal combustion engine using natural gas as a fuel both contain methane. Exhaust gas emitted from the internal combustion engine flows through the exhaust gas passage in the exhaust pipe P from one end to the other end of the exhaust pipe P and is purified by the catalyst 1A provided in the exhaust pipe P. In the drawings, an exhaust gas flow direction is indicated by reference sign X. In the present specification, an upstream side in the exhaust gas flow direction X may be referred to as an "exhaust gas inflow side" or an "upstream side", and a downstream side in the exhaust gas flow direction X may be referred to as an "exhaust gas outflow side" or a "downstream side". In the present specification, the term "length" refers to a dimension in the exhaust gas flow direction X unless otherwise specified.

In the exhaust gas passage in the exhaust pipe P, another exhaust gas purification catalyst may be disposed on an upstream side and/or a downstream side of the catalyst 1A.

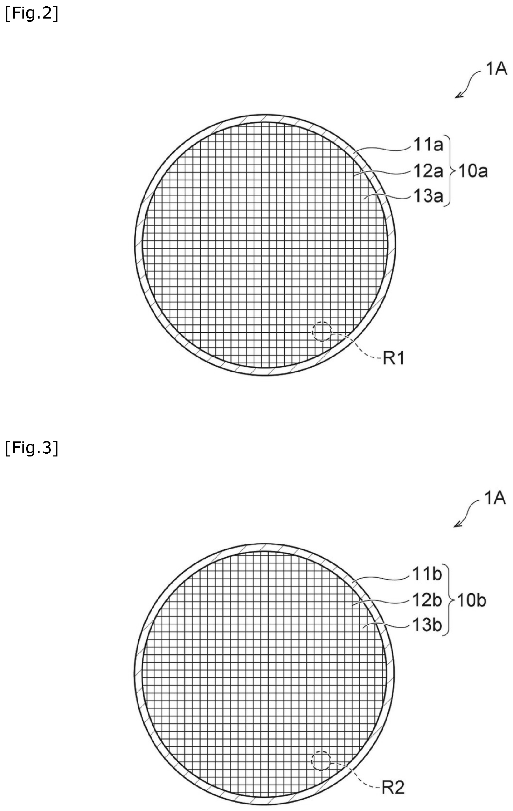

As shown in Figs. 2 to 6, the catalyst 1A includes: a substrate 10 having a first substrate portion 10a located on an upstream side and a second substrate portion 10b located on a downstream side; a first catalyst layer 20 provided on the first substrate portion 10a; a second catalyst layer 30 provided on the second substrate portion 10b; a third catalyst layer 40 provided on an upper side of the first catalyst layer 20; and a fourth catalyst layer 50 provided on an upper side of the second catalyst layer 30.

Either one of the third catalyst layer 40 and the fourth catalyst layer 50 may be omitted. Accordingly, the present invention includes both an embodiment having the third catalyst layer 40 and not having the fourth catalyst layer 50, and an embodiment having the fourth catalyst layer 50 and not having the third catalyst layer 40. However, from the viewpoint of further improving methane purification performance of the catalyst 1A, it is preferable that the catalyst 1A includes both the third catalyst layer 40 and the fourth catalyst layer 50.

The catalyst 1A is characterized in that: the first catalyst layer 20 contains Pd; the second catalyst layer 30 contains Pt, Ce, and an alkaline earth metal element; the third catalyst layer 40 and the fourth catalyst layer 50 each contain Rh; a mass of Pt in terms of metal in the second catalyst layer 30 is 1.0 g/L or more based on a volume of a portion of the second substrate portion 10b on which the second catalyst layer 30 is provided; in the second catalyst layer 30, a ratio of a mass of Ce in terms of CeO₂ to a mass of Pt in terms of metal is 6.0 or more and 20.0 or less; and in the second catalyst layer 30, a ratio of a mass of Ce in terms of CeO₂ to a mass of the alkaline earth metal element in terms of oxide is 2.0 or more and 18.0 or less.

Hereinafter, effects of the catalyst 1A will be described.

It is desirable that an air/fuel ratio (A/F ratio) supplied to an internal combustion engine is controlled near a stoichiometric air/fuel ratio (stoichiometry). However, an actual air/fuel ratio fluctuates to a rich state (fuel-rich atmosphere) or a lean state (fuel-lean atmosphere) around stoichiometry depending on operating conditions of the internal combustion engine, and therefore an atmosphere of exhaust gas also fluctuates between a rich state and a lean state. When exhaust gas is in a lean state, Pt is oxidized and methane purification performance of Pt decreases. When exhaust gas is switched from a lean state to a rich state, oxidized Pt is reduced and methane purification performance of Pt is recovered. Since alkaline earth metal elements have electron-donating properties, when an alkaline earth metal element is present near Pt, electrons are donated from the alkaline earth metal element to Pt. Therefore, when a Pt layer contains an alkaline earth metal element, Pt tends to adsorb oxygen more easily and tends to be stabilized as an oxide. That is, when the Pt layer contains an alkaline earth metal element, even if exhaust gas is switched from a lean state to a rich state, methane purification performance of Pt is less likely to be recovered. For this reason, in Patent Document 1, the Pt layer is specified to be substantially free of alkaline earth metal elements.

When a catalyst is placed in an atmosphere that violently fluctuates from a lean state to a rich state and from a rich state to a lean state, as described in Patent Document 1, it is preferable that the Pt layer substantially does not contain alkaline earth metal elements from the viewpoint of preventing Pt from being stabilized as an oxide.

However, during high-speed operation of an internal combustion engine, an atmosphere in which a catalyst is placed is almost constant, that is, a rich state or a stoichiometric state. Therefore, it is not necessary to limit a content of an alkaline earth metal element in a Pt layer from the viewpoint of preventing Pt from being stabilized as an oxide.

In a rich state and a stoichiometric state, methane purification by Pt mainly proceeds by steam reforming reactions represented by the following formulas 1 to 3. Since steam reforming reactions are equilibrium reactions, concentrations of reactants and products in a reaction system are important for the steam reforming reactions to proceed.

Formula 1: CH₄ + H₂O ⇔ CO + 3H₂

Formula 2: CO + H₂O ⇔ CO₂ + H₂

Formula 3: CH₄ + 2H₂O ⇔ CO₂ + 4H₂

### Effects of the first catalyst layer 20

When the reaction of Formula 1 proceeds to the right, CO is produced. Therefore, CO in exhaust gas contacting the second catalyst layer 30 inhibits the reaction of Formula 1 by Pt in the second catalyst layer 30 from proceeding to the right. Since the first catalyst layer 20 is located on an upstream side of the second catalyst layer 30, exhaust gas contacts the first catalyst layer 20 and then contacts the second catalyst layer 30. When exhaust gas contacts the first catalyst layer 20, Pd in the first catalyst layer 20 purifies and removes CO in the exhaust gas. Therefore, a CO concentration in exhaust gas after contacting the first catalyst layer 20 (that is, exhaust gas contacting the second catalyst layer 30) is reduced. As a result of the reduction in the CO concentration in exhaust gas contacting the second catalyst layer 30, the reaction of Formula 1 by Pt in the second catalyst layer 30 more easily proceeds to the right. Accordingly, by the first catalyst layer 20 containing Pd, methane purification performance by Pt in the second catalyst layer 30 during high-speed operation of the internal combustion engine is improved.

### Effects of the second catalyst layer 30

Pt has higher catalytic activity for steam reforming reactions than other noble metal elements. Therefore, higher methane purification activity is obtained as an amount of Pt used increases. Accordingly, by the second catalyst layer 30 containing Pt and by the mass of Pt in terms of metal in the second catalyst layer 30 being 1.0 g/L or more based on the volume of the portion of the second substrate portion 10b on which the second catalyst layer 30 is provided, methane purification performance by Pt in the second catalyst layer 30 during high-speed operation of the internal combustion engine is improved.

Ce has oxygen storage capacity and releases O₂. When H₂ generated in the reactions of Formulas 1, 2, and 3 by Pt in the second catalyst layer 30 reacts with O₂ released by the oxygen storage capacity of Ce in the second catalyst layer 30 to generate H₂O, H₂O on the left sides of Formulas 1, 2, and 3 increases and H₂ on the right sides of Formulas 1, 2, and 3 decreases, and the reactions of Formulas 1, 2, and 3 by Pt in the second catalyst layer 30 more easily proceed to the right. As a result, methane purification by Pt in the second catalyst layer 30 is promoted. Accordingly, by the second catalyst layer 30 containing Ce, methane purification performance by Pt in the second catalyst layer 30 during high-speed operation of the internal combustion engine is improved.

Alkaline earth metal elements have CO₂ capture capability. When CO₂ is captured by the alkaline earth metal element in the second catalyst layer 30, CO₂ on the right sides of Formulas 2 and 3 decreases, and the reactions of Formulas 2 and 3 by Pt in the second catalyst layer 30 more easily proceed to the right. As a result, methane purification by Pt in the second catalyst layer 30 is promoted. Accordingly, by the second catalyst layer 30 containing the alkaline earth metal element, methane purification performance by Pt in the second catalyst layer 30 during high-speed operation of the internal combustion engine is improved.

As described above, H₂ decreases due to oxygen storage capacity of Ce, and CO₂ decreases due to the alkaline earth metal element. Even if a decrease in either CO₂ or H₂ is sufficient, when a decrease in the other is not sufficient, the reactions of Formulas 2 and 3 by Pt in the second catalyst layer 30 do not easily proceed to the right. Accordingly, in order to effectively promote methane purification by Pt in the second catalyst layer 30, a balance between a content of the alkaline earth metal element and a content of Ce in the second catalyst layer 30 is important. Therefore, in the second catalyst layer 30, the ratio of the mass of Ce in terms of CeO₂ to the mass of the alkaline earth metal element in terms of oxide is adjusted to be 2.0 or more and 18.0 or less. As a result, methane purification performance by Pt in the second catalyst layer 30 during high-speed operation of the internal combustion engine is improved.

As described above, Ce in the second catalyst layer 30 contributes to improvement of methane purification performance during high-speed operation of the internal combustion engine. However, Ce in the second catalyst layer 30 promotes oxidation of Pt in the second catalyst layer 30 and reduces methane purification performance of Pt in the second catalyst layer 30. Therefore, when a relative amount of Ce with respect to Pt in the second catalyst layer 30 is excessive, methane purification performance by Pt in the second catalyst layer 30 during high-speed operation of the internal combustion engine is reduced. Accordingly, in the second catalyst layer 30, the ratio of the mass of Ce in terms of CeO₂ to the mass of Pt in terms of metal is adjusted to be 6.0 or more and 20.0 or less. As a result, methane purification performance by Pt in the second catalyst layer 30 during high-speed operation of the internal combustion engine is improved.

### Effects of the third catalyst layer 40 and the fourth catalyst layer 50

When the reaction of Formula 1 proceeds to the right, CO is produced. Therefore, CO in exhaust gas contacting the second catalyst layer 30 inhibits the reaction of Formula 1 by Pt in the second catalyst layer 30 from proceeding to the right. **In** addition, NOx in exhaust gas contacting the second catalyst layer 30 promotes deactivation of the alkaline earth metal element in the second catalyst layer 30 by forming a nitrate. Since the third catalyst layer 40 is located on an upstream side of the second catalyst layer 30 and the fourth catalyst layer 50 is located on an upper side of the second catalyst layer 30, exhaust gas contacts the third catalyst layer 40 and/or the fourth catalyst layer 50 and then contacts the second catalyst layer 30. When exhaust gas contacts the third catalyst layer 40 and/or the fourth catalyst layer 50, Rh in the third catalyst layer 40 and/or Rh in the fourth catalyst layer 50 purifies and removes CO and NOx in the exhaust gas. Therefore, CO and NOx concentrations in exhaust gas after contacting the third catalyst layer 40 and/or the fourth catalyst layer 50 (that is, exhaust gas contacting the second catalyst layer 30) are reduced. As a result of the reduction in the CO concentration in exhaust gas contacting the second catalyst layer 30, the reaction of Formula 1 by Pt in the second catalyst layer 30 more easily proceeds to the right. **In** addition, as a result of the reduction in the NOx concentration in exhaust gas contacting the second catalyst layer 30, formation of a nitrate by the alkaline earth metal element in the second catalyst layer 30 and resulting deactivation are prevented, and CO₂ capture capability of the alkaline earth metal element in the second catalyst layer 30 is effectively exhibited. As a result, the reactions of Formulas 2 and 3 by Pt in the second catalyst layer 30 more easily proceed to the right. Accordingly, by the third catalyst layer 40 and the fourth catalyst layer 50 each containing Rh, methane purification performance by Pt in the second catalyst layer 30 during high-speed operation of the internal combustion engine is improved.

By the combined effects of the first catalyst layer 20, the second catalyst layer 30, the third catalyst layer 40, and the fourth catalyst layer 50 as described above, the catalyst 1A can exhibit improved methane purification performance during high-speed operation of the internal combustion engine.

From the viewpoint of further improving methane purification performance of the catalyst 1A, it is preferable that the second catalyst layer 30 contains a Ce-Zr-based complex oxide as a Ce source, and that at least a part of Pt in the second catalyst layer 30 is supported on the Ce-Zr-based complex oxide in the second catalyst layer 30.

When Pt is supported on the Ce-Zr-based complex oxide, H₂ generated in the reactions of Formulas 1, 2, and 3 by Pt rapidly reacts with O₂ released by oxygen storage capacity of the Ce-Zr-based complex oxide, and therefore the reactions of Formulas 1, 2, and 3 by Pt more easily proceed to the right. As a result, methane purification by Pt is promoted. Accordingly, by the second catalyst layer 30 containing a Ce-Zr-based complex oxide as a Ce source and by at least a part of Pt in the second catalyst layer 30 being supported on the Ce-Zr-based complex oxide in the second catalyst layer 30, methane purification performance by Pt in the second catalyst layer 30 during high-speed operation of the internal combustion engine is improved.

From the viewpoint of further improving methane purification performance of the catalyst 1A, it is preferable that the third catalyst layer 40 and the fourth catalyst layer 50 each contain Pt in addition to Rh.

Exhaust gas contacting the third catalyst layer 40 and exhaust gas contacting the fourth catalyst layer 50 have a higher CO concentration than exhaust gas contacting the second catalyst layer 30. When a CO concentration in exhaust gas is relatively high, Pt mainly catalyzes the reaction of Formula 2 among the reactions of Formulas 1, 2, and 3. Therefore, Pt in the third catalyst layer 40 and Pt in the fourth catalyst layer 50 mainly catalyze the reaction of Formula 2 among the reactions of Formulas 1, 2, and 3. By Pt in the third catalyst layer 40 and Pt in the fourth catalyst layer 50 catalyzing the reaction of Formula 2 to remove CO in exhaust gas, a CO concentration in exhaust gas after contacting the third catalyst layer 40 and/or the fourth catalyst layer 50 (that is, exhaust gas contacting the second catalyst layer 30) is reduced. As a result of the reduction in the CO concentration in exhaust gas contacting the second catalyst layer 30, the reaction of Formula 1 by Pt in the second catalyst layer 30 more easily proceeds to the right. Accordingly, by the third catalyst layer 40 and the fourth catalyst layer 50 each containing Pt in addition to Rh, methane purification performance by Pt in the second catalyst layer 30 during high-speed operation of the internal combustion engine is improved.

H₂ generated in the reaction of Formula 2 by Pt in the third catalyst layer 40 promotes reduction purification of NOx by Rh in the third catalyst layer 40, and H₂ generated in the reaction of Formula 2 by Pt in the fourth catalyst layer 50 promotes reduction purification of NOx by Rh in the fourth catalyst layer 50. Therefore, a NOx concentration in exhaust gas after contacting the third catalyst layer 40 and/or the fourth catalyst layer 50 (that is, exhaust gas contacting the second catalyst layer 30) is reduced. As a result of the reduction in the NOx concentration in exhaust gas contacting the second catalyst layer 30, formation of a nitrate by the alkaline earth metal element in the second catalyst layer 30 and resulting deactivation are prevented, and CO₂ capture capability of the alkaline earth metal element in the second catalyst layer 30 is effectively exhibited. As a result, the reactions of Formulas 2 and 3 by Pt in the second catalyst layer 30 more easily proceed to the right. Accordingly, by the third catalyst layer 40 and the fourth catalyst layer 50 each containing Pt in addition to Rh, methane purification performance by Pt in the second catalyst layer 30 during high-speed operation of the internal combustion engine is improved.

From the viewpoint of further improving methane purification performance of the catalyst 1A, it is preferable that the third catalyst layer 40 and the fourth catalyst layer 50 each contain Ce in addition to Rh and Pt.

A part of H₂ generated in the reaction of Formula 2 by Pt in the third catalyst layer 40 remains without being consumed by reduction purification of NOx by Rh in the third catalyst layer 40. The remaining H₂ inhibits the reaction of Formula 2 by Pt in the third catalyst layer 40 from proceeding to the right. When the remaining H₂ reacts with O₂ released by oxygen storage capacity of Ce in the third catalyst layer 40 to generate H₂O, H₂O on the left side of Formula 2 increases and H₂ on the right side of Formula 2 decreases, and the reaction of Formula 2 by Pt in the third catalyst layer 40 more easily proceeds to the right. As a result, the reaction of Formula 2 by Pt in the third catalyst layer 40 is promoted. The above description regarding the third catalyst layer 40 also applies to the fourth catalyst layer 50. Accordingly, by the third catalyst layer 40 and the fourth catalyst layer 50 each containing Ce in addition to Rh and Pt, a CO concentration in exhaust gas after contacting the third catalyst layer 40 and/or the fourth catalyst layer 50 (that is, exhaust gas contacting the second catalyst layer 30) is reduced, and the reaction of Formula 1 by Pt in the second catalyst layer 30 more easily proceeds to the right, whereby methane purification performance by Pt in the second catalyst layer 30 during high-speed operation of the internal combustion engine is improved.

From the viewpoint of further improving methane purification performance of the catalyst 1A, it is preferable that the third catalyst layer 40 and the fourth catalyst layer 50 each contain a Ce-Zr-based complex oxide as a Ce source, that at least a part of Pt in the third catalyst layer 40 is supported on the Ce-Zr-based complex oxide in the third catalyst layer 40, and that at least a part of Pt in the fourth catalyst layer 50 is supported on the Ce-Zr-based complex oxide in the fourth catalyst layer 50.

When Pt is supported on the Ce-Zr-based complex oxide, H₂ generated in the reaction of Formula 2 by Pt rapidly reacts with O₂ released by oxygen storage capacity of the Ce-Zr-based complex oxide, and therefore the reactions of Formulas 1 to 3 by Pt more easily proceed to the right. As a result, the reaction of Formula 2 by Pt is promoted. Accordingly, by the third catalyst layer 40 and the fourth catalyst layer 50 each containing a Ce-Zr-based complex oxide as a Ce source, by at least a part of Pt in the third catalyst layer 40 being supported on the Ce-Zr-based complex oxide in the third catalyst layer 40, and by at least a part of Pt in the fourth catalyst layer 50 being supported on the Ce-Zr-based complex oxide in the fourth catalyst layer 50, a CO concentration in exhaust gas after contacting the third catalyst layer 40 and/or the fourth catalyst layer 50 (that is, exhaust gas contacting the second catalyst layer 30) is reduced, and the reaction of Formula 1 by Pt in the second catalyst layer 30 more easily proceeds to the right, whereby methane purification performance by Pt in the second catalyst layer 30 during high-speed operation of the internal combustion engine is improved.

### <Substrate>

As shown in Fig. 1, the catalyst 1A includes a substrate 10.

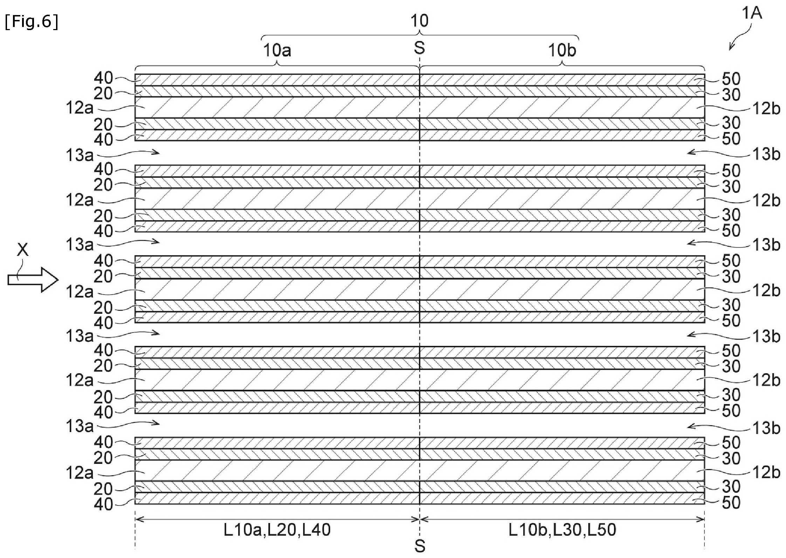

As shown in Figs. 1 and 6, the substrate 10 extends in the exhaust gas flow direction X.

As shown in Figs. 1 and 6, the substrate 10 is disposed in the exhaust gas passage in the exhaust pipe P such that an axial direction of the substrate 10 coincides or substantially coincides with the exhaust gas flow direction X.

As shown in Figs. 1 to 6, the substrate 10 has a first substrate portion 10a located on an upstream side in the exhaust gas flow direction X and a second substrate portion 10b located on a downstream side in the exhaust gas flow direction X.

As shown in Figs. 1 and 6, the first substrate portion 10a and the second substrate portion 10b each extend in the exhaust gas flow direction X and have an end on the exhaust gas inflow side and an end on the exhaust gas outflow side.

As shown in Figs. 1 and 6, the first substrate portion 10a and the second substrate portion 10b are each disposed in the exhaust gas passage in the exhaust pipe P such that an axial direction of the first substrate portion 10a and an axial direction of the second substrate portion 10b coincide or substantially coincide with the exhaust gas flow direction X.

As shown in Figs. 1 and 6, it is preferable that the axial direction of the first substrate portion 10a and the axial direction of the second substrate portion 10b coincide or substantially coincide with each other.

The first substrate portion 10a and the second substrate portion 10b are integrated, and an end on the exhaust gas outflow side of the first substrate portion 10a and an end on the exhaust gas inflow side of the second substrate portion 10b are continuous with each other. In the drawings, a boundary between the end on the exhaust gas outflow side of the first substrate portion 10a and the end on the exhaust gas inflow side of the second substrate portion 10b is indicated by reference sign S.

Hereinafter, with respect to common features of the first substrate portion 10a and the second substrate portion 10b, description will be made collectively for the first substrate portion 10a and the second substrate portion 10b. In such a case, expressions such as "substrate portions 10a, 10b", "tubular members 11a, 11b", "partition walls 12a, 12b", "cells 13a, 13b", and "lengths L10a, L10b" are used. These expressions mean, for the first substrate portion 10a, "substrate portion 10a", "tubular member 11a", "partition wall 12a", "cells 13a", and "length L10a", and mean, for the second substrate portion 10b, "substrate portion 10b", "tubular member 11b", "partition wall 12b", "cells 13b", and "length L10b".

The materials constituting the substrate portions 10a, 10b can be appropriately selected from known materials. Examples of the materials constituting the substrate portions 10a, 10b include ceramic materials and metal materials, and ceramic materials are preferable. Examples of ceramic materials include carbide ceramics such as silicon carbide, titanium carbide, tantalum carbide, and tungsten carbide, nitride ceramics such as aluminum nitride, silicon nitride, boron nitride, and titanium nitride, and oxide ceramics such as alumina, zirconia, cordierite, mullite, zircon, aluminum titanate, and magnesium titanate. Examples of metal materials include alloys such as stainless steel.

The material constituting the first substrate portion 10a and the material constituting the second substrate portion 10b are usually the same.

As shown in Figs. 2 to 6, the substrate portions 10a, 10b include tubular members 11a, 11b, partition walls 12a, 12b provided inside the tubular members 11a, 11b, and cells 13a, 13b separated from each other by the partition walls 12a, 12b. The substrate portions 10a, 10b are preferably honeycomb structures.

As shown in Figs. 2 and 3, the tubular members 11a, 11b define outer shapes of the substrate portions 10a, 10b, and axial directions of the tubular members 11a, 11b coincide with the axial directions of the substrate portions 10a, 10b. As shown in Figs. 2 and 3, the tubular members 11a, 11b have hollow cylindrical shapes, but may have other shapes such as hollow elliptic cylindrical shapes or polygonal tubular shapes.

As shown in Figs. 2 and 3, the partition walls 12a, 12b are provided inside the tubular members 11a, 11b. As shown in Figs. 2 to 6, the partition walls 12a, 12b are present between adjacent cells 13a, 13b, whereby the adjacent cells 13a, 13b are separated from each other by the partition walls 12a, 12b. The partition walls 12a, 12b may have a porous structure through which exhaust gas can pass. The partition walls 12a, 12b have a thickness of, for example, 20 µm or more and 1500 µm or less.

As shown in Fig. 6, the cells 13a, 13b extend in the exhaust gas flow direction X and have an end on the exhaust gas inflow side and an end on the exhaust gas outflow side. As shown in Fig. 6, both the end on the exhaust gas inflow side and the end on the exhaust gas outflow side of the cells 13a, 13b are open.

As shown in Fig. 6, the end (opening) on the exhaust gas outflow side of the cell 13a and the end (opening) on the exhaust gas inflow side of the cell 13b are continuous with each other such that one exhaust gas flow path extending in the exhaust gas flow direction X is formed by one cell 13a and one cell 13b.

Exhaust gas that flows into the cell 13a from the end (opening) on the exhaust gas inflow side of the cell 13a flows out from the end (opening) on the exhaust gas outflow side of the cell 13a. Exhaust gas that flows out from the end (opening) on the exhaust gas outflow side of the cell 13a flows into the cell 13b from the end (opening) on the exhaust gas inflow side of the cell 13b and flows out from the end (opening) on the exhaust gas outflow side of the cell 13b. Such a type is referred to as a flow-through type.

As shown in Figs. 2 to 5, a shape in a plan view of the end (opening) on the exhaust gas inflow side of the cells 13a, 13b is a quadrangular shape, but may be other shapes such as hexagonal shapes or octagonal shapes. The same applies to a shape in a plan view of the end (opening) on the exhaust gas outflow side of the cells 13a, 13b.

A cell density per square inch of the substrate portions 10a, 10b is, for example, 100 cells or more and 1000 cells or less. The cell density per square inch of the substrate portions 10a, 10b means a total number of the cells 13a, 13b per square inch in a cross section obtained by cutting the substrate portions 10a, 10b along a plane perpendicular to the exhaust gas flow direction X.

The substrate portions 10a, 10b have lengths L10a, L10b.

A volume of the substrate portions 10a, 10b is, for example, 0.1 L or more and 20 L or less. The volume of the substrate portions 10a, 10b means an apparent volume of the substrate portions 10a, 10b. For example, when the substrate portions 10a, 10b have a cylindrical shape and an outer diameter of the substrate portions 10a, 10b is 2r, the volume of the substrate portions 10a, 10b is represented by the formula: the volume of the substrate portions 10a, 10b = π x r² x (the lengths L10a, L10b).

A percentage of the length L10a of the first substrate portion 10a relative to a sum of the length L10a of the first substrate portion 10a and the length L10b of the second substrate portion 10b (L10a / (L10a + L10b) x 100) is preferably 15% or more and 80% or less, more preferably 18% or more and 70% or less, and still more preferably 20% or more and 60% or less. Each of the above lower limits may be combined with any of the above upper limits. In one example, the percentage of the length L10a of the first substrate portion 10a relative to the sum of the length L10a of the first substrate portion 10a and the length L10b of the second substrate portion 10b (L10a / (L10a + L10b) x 100) is 50%.

A percentage of the length L10b of the second substrate portion 10b relative to the sum of the length L10a of the first substrate portion 10a and the length L10b of the second substrate portion 10b (L10b / (L10a + L10b) x 100) is preferably 20% or more and 85% or less, more preferably 30% or more and 82% or less, and still more preferably 40% or more and 80% or less. Each of the above lower limits may be combined with any of the above upper limits. In one example, the percentage of the length L10b of the second substrate portion 10b relative to the sum of the length L10a of the first substrate portion 10a and the length L10b of the second substrate portion 10b (L10b / (L10a + L10b) x 100) is 50%.

### <First catalyst layer>

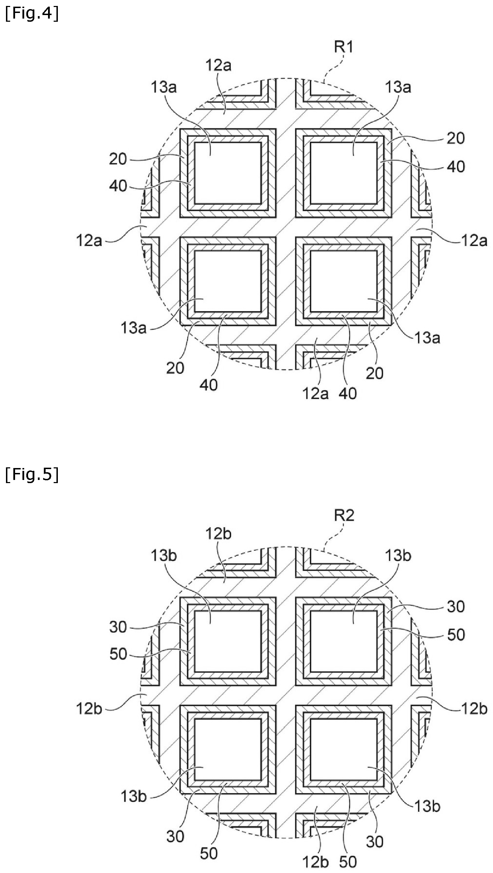

As shown in Figs. 4 and 6, the catalyst 1A includes a first catalyst layer 20 provided on the first substrate portion 10a.

As shown in Figs. 4 and 6, the first catalyst layer 20 is provided on a surface on the cell 13a side of the partition wall 12a. The "surface on the cell 13a side of the partition wall 12a" refers to an outer surface of the partition wall 12a, the outer surface extending in the exhaust gas flow direction X and being in contact with the cell 13a. The first catalyst layer 20 may be provided directly or via another layer on the surface on the cell 13a side of the partition wall 12a. However, the first catalyst layer 20 is usually provided directly on the surface on the cell 13a side of the partition wall 12a. **The** "first catalyst layer 20 provided on the first substrate portion 10a" includes both an embodiment wherein the first catalyst layer 20 is provided directly on the surface on the cell 13a side of the partition wall 12a, and an embodiment wherein the first catalyst layer 20 is provided via another layer on the surface on the cell 13a side of the partition wall 12a.

**The** first catalyst layer 20 may be composed of a structure raised from the surface on the cell 13a side of the partition wall 12a toward the cell 13a side (hereinafter referred to as a "raised structure"), or may be composed of a structure existing inside the partition wall 12a (hereinafter referred to as an "internal structure"), or may have both the raised structure and the internal structure. **The** "first catalyst layer 20 provided on the first substrate portion 10a" includes an embodiment wherein the first catalyst layer 20 is composed of the raised structure, an embodiment wherein the first catalyst layer 20 is composed of the internal structure, and an embodiment wherein the first catalyst layer 20 has both the raised structure and the internal structure.

As shown in Fig. 6, the first catalyst layer 20 extends along the exhaust gas flow direction X from the end on the exhaust gas inflow side of the partition wall 12a to the end on the exhaust gas outflow side of the partition wall 12a. **The** first catalyst layer 20 may extend along the exhaust gas flow direction X from the end on the exhaust gas inflow side of the partition wall 12a so as not to reach the end on the exhaust gas outflow side of the partition wall 12a, or may extend along a direction opposite to the exhaust gas flow direction X from the end on the exhaust gas outflow side of the partition wall 12a so as not to reach the end on the exhaust gas inflow side of the partition wall 12a.

From the viewpoint of achieving a good balance between improvement in CO purification performance of the first catalyst layer 20 and suppression of pressure loss caused by the first catalyst layer 20, a mass (mass after calcining) of the first catalyst layer 20 per unit volume of a portion of the first substrate portion 10a on which the first catalyst layer 20 is provided is preferably 80 g/L or more and 250 g/L or less, more preferably 90 g/L or more and 220 g/L or less, and still more preferably 100 g/L or more and 200 g/L or less. Each of the above lower limits may be combined with any of the above upper limits.

The mass of the first catalyst layer 20 per unit volume of the portion of the first substrate portion 10a on which the first catalyst layer 20 is provided is calculated by the formula: (a mass of the first catalyst layer 20) / ((the volume of the first substrate portion 10a) x (an average length L20 of the first catalyst layer 20 / the length L10a of the first substrate portion 10a)).

An example of the method for measuring the average length L20 of the first catalyst layer 20 is as follows.

A sample extending in the axial direction of the first substrate portion 10a and having the same length as the length L10a of the first substrate portion 10a is cut out from the first substrate portion 10a. The sample is, for example, in the form of a cylinder with a diameter of 25.4 mm. The diameter of the sample can be changed as necessary. When the first catalyst layer 20 extends along the exhaust gas flow direction X from the end on the exhaust gas inflow side of the partition wall 12a, the sample is cut at 5 mm intervals along planes perpendicular to the axial direction of the first substrate portion 10a to obtain cut pieces, which are referred to as the first cut piece, the second cut piece and so on up to the n-th cut piece, sequentially from the end on the exhaust gas inflow side of the sample. When the first catalyst layer 20 extends along a direction opposite to the exhaust gas flow direction X from the end on the exhaust gas outflow side of the partition wall 12a, the sample is cut at 5 mm intervals along planes perpendicular to the axial direction of the first substrate portion 10a to obtain cut pieces, which are referred to as the first cut piece, the second cut piece and so on up to the n-th cut piece, sequentially from the end on the exhaust gas outflow side of the sample. In either case, the length of each cut piece is 5 mm. The composition of each cut piece is analyzed using an X-ray fluorescence analyzer (XRF) such as an energy-dispersive X-ray analyzer (EDX) or a wavelength-dispersive X-ray analyzer (WDX), an inductively coupled plasma atomic emission spectrometer (ICP-AES), a scanning electron microscope-energy dispersive X-ray analysis (SEM-EDX), or the like, and based on the composition of each cut piece, it is confirmed whether or not each cut piece includes a part of the first catalyst layer 20.

For a cut piece that apparently includes a part of the first catalyst layer 20, it is not necessarily required to perform the compositional analysis. For example, it is possible to confirm whether or not each cut piece includes a part of the first catalyst layer 20 by observing a cross section thereof using a scanning electron microscope (SEM), an electron probe microanalyzer (EPMA), or the like. When observing the cross section, elemental mapping of the cross section may be performed.

After confirming whether or not each cut piece includes a part of the first catalyst layer 20, the length of the first catalyst layer 20 included in the sample is calculated based on the following formula: 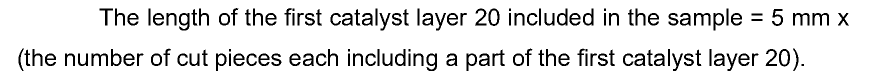 The length of the first catalyst layer 20 included in the sample = 5 mm x (the number of cut pieces each including a part of the first catalyst layer 20).

For example, when each of the first cut piece to the k-th cut piece includes a part of the first catalyst layer 20, whereas each of the (k+1)-th to n-th cut pieces does not include a part of the first catalyst layer 20, the length of the first catalyst layer 20 included in the sample is (5 x k) mm.

An example of the method for more specifically measuring the length of the first catalyst layer 20 included in the sample is as follows.

The k-th cut piece (when the first catalyst layer 20 extends along the exhaust gas flow direction X from the end on the exhaust gas inflow side of the partition wall 12a, the cut piece obtained from the position closest to the end on the exhaust gas outflow side of the sample among the cut pieces each including a part of the first catalyst layer 20, and when the first catalyst layer 20 extends along a direction opposite to the exhaust gas flow direction X from the end on the exhaust gas outflow side of the partition wall 12a, the cut piece obtained from the position closest to the end on the exhaust gas inflow side of the sample among the cut pieces each including a part of the first catalyst layer 20) is cut along the axial direction of the first substrate portion 10a, and a part of the first catalyst layer 20 existing in the resulting cross section is observed using SEM, EPMA, or the like, to measure the length of the part of the first catalyst layer 20 included in the k-th cut piece. Then, the length of the first catalyst layer 20 included in the sample is calculated based on the following formula: 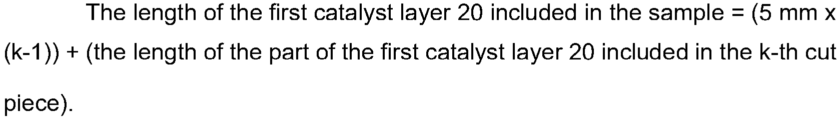 The length of the first catalyst layer 20 included in the sample = (5 mm x (k-1)) + (the length of the part of the first catalyst layer 20 included in the k-th cut piece).

For 8 to 16 samples arbitrarily cut out from the catalyst 1A, the length of the first catalyst layer 20 included in each sample is measured, and the average value of the measured lengths is defined as the average length L20 of the first catalyst layer 20.

From the viewpoint of further improving CO purification performance of the first catalyst layer 20, a percentage of the average length L20 of the first catalyst layer 20 relative to the length L10a of the first substrate portion 10a (L20 / L10a x 100) is preferably 80% or more, more preferably 90% or more, and still more preferably 95% or more. The upper limit may be 100% or may exceed 100%. As described later, when a portion on the exhaust gas outflow side of the first catalyst layer 20 overlaps with a portion on the exhaust gas inflow side of the second catalyst layer 30, the percentage exceeds 100%. When the percentage exceeds 100%, the upper limit of the percentage is preferably 600% or less, more preferably 400% or less, and still more preferably 300% or less. Each of the above lower limits may be combined with any of the above upper limits. When the first substrate portion 10a and the second substrate portion 10b are integrated, and when the first substrate portion 10a and the second substrate portion 10b are separate and the end on the exhaust gas outflow side of the first substrate portion 10a and the end on the exhaust gas inflow side of the second substrate portion 10b are in contact with each other, the percentage may exceed 100%. However, when the first substrate portion 10a and the second substrate portion 10b are separate and a gap is formed between the end on the exhaust gas outflow side of the first substrate portion 10a and the end on the exhaust gas inflow side of the second substrate portion 10b, the percentage does not exceed 100%.

From the viewpoint of further improving CO purification performance of the first catalyst layer 20, a percentage of the average length L20 of the first catalyst layer 20 relative to the sum of the length L10a of the first substrate portion 10a and the length L10b of the second substrate portion 10b (L20 / (L10a + L10b) x 100) is preferably 15% or more and 80% or less, more preferably 18% or more and 70% or less, and still more preferably 20% or more and 60% or less. Each of the above lower limits may be combined with any of the above upper limits.

The first catalyst layer 20 contains Pd.

Pd is contained in the first catalyst layer 20 in a form capable of functioning as a catalytically active component, for example, in a form of a catalytically active component containing Pd, such as metallic Pd, an alloy containing Pd, or a compound containing Pd (for example, an oxide of Pd). From the viewpoint of further improving CO purification performance of the first catalyst layer 20, the catalytically active component containing Pd is preferably in particulate form.

From the viewpoint of further improving CO purification performance of the first catalyst layer 20, a mass of Pd in terms of metal in the first catalyst layer 20, based on a volume of the portion of the first substrate portion 10a on which the first catalyst layer 20 is provided, is preferably 0.5 g/L or more, more preferably 0.7 g/L or more, and still more preferably 1.0 g/L or more. The upper limit can be appropriately adjusted in consideration of a balance between CO purification performance and cost. The upper limit is preferably 7.0 g/L or less, more preferably 6.0 g/L or less, and still more preferably 5.0 g/L or less. Each of the above lower limits may be combined with any of the above upper limits.

The mass of Pd in terms of metal in the first catalyst layer 20, based on the volume of the portion of the first substrate portion 10a on which the first catalyst layer 20 is provided, is calculated by the formula: (the mass of the first catalyst layer 20 per unit volume of the portion of the first substrate portion 10a on which the first catalyst layer 20 is provided) x (a content of Pd in terms of metal in the first catalyst layer 20).

From the viewpoint of further improving CO purification performance of the first catalyst layer 20, the content of Pd in terms of metal in the first catalyst layer 20, based on the mass of the first catalyst layer 20, is preferably 0.01% by mass or more, more preferably 0.05% by mass or more, and still more preferably 0.10% by mass or more. The upper limit can be appropriately adjusted in consideration of a balance between CO purification performance and cost. The upper limit is preferably 15% by mass or less, more preferably 12% by mass or less, and still more preferably 10% by mass or less. Each of the above lower limits may be combined with any of the above upper limits.

The first catalyst layer 20 may contain one or more noble metal elements other than Pd.

The noble metal element other than Pd can be selected, for example, from Pt, Rh, Ru, Os, Ir, Au, Ag, and the like. The noble metal element other than Pd is contained in the first catalyst layer 20 in a form capable of functioning as a catalytically active component, for example, in a form of a catalytically active component containing the noble metal element other than Pd, such as a metal, an alloy containing the noble metal element, or a compound containing the noble metal element (for example, an oxide of the noble metal element). From the viewpoint of further improving CO purification performance of the first catalyst layer 20, the catalytically active component containing the noble metal element other than Pd is preferably in particulate form.

When the first catalyst layer 20 contains Pd and a noble metal element other than Pd, Pd and the noble metal element other than Pd may form an alloy, which may reduce active sites of Pd involved in CO purification performance. Therefore, it is preferable that a content of a noble metal element other than Pd in terms of metal in the first catalyst layer 20 is small. Specifically, the content of a noble metal element other than Pd in terms of metal in the first catalyst layer 20, based on a total mass of all noble metal elements in terms of metal in the first catalyst layer 20, is preferably 30% by mass or less, more preferably 20% by mass or less, and still more preferably 10% by mass or less. The lower limit is 0% by mass.

The "content of a noble metal element other than Pd in terms of metal in the first catalyst layer 20" refers to, when the first catalyst layer 20 contains one noble metal element other than Pd, a content of the one noble metal element in terms of metal, and when the first catalyst layer 20 contains two or more noble metal elements other than Pd, a total content of the two or more noble metal elements in terms of metal.

It is preferable that the first catalyst layer 20 contains one or more carriers, and that at least a part of a catalytically active component is supported on the one or more carriers.

The expression "at least a part of a catalytically active component is supported on a carrier" refers to a state in which at least a part of the catalytically active component is physically or chemically adsorbed or retained on an outer surface of the carrier and/or an inner surface of pores of the carrier. This definition applies to any catalyst layer (that is, the first catalyst layer 20, the second catalyst layer 30, the third catalyst layer 40, and the fourth catalyst layer 50).

For a given catalyst layer, whether at least a part of a catalytically active component is supported on a carrier can be confirmed, for example, using SEM-EDX or the like. Specifically, when an elemental mapping obtained by analyzing a cross section of the catalyst layer using SEM-EDX shows that at least a part of a catalytically active component and a carrier are present in the same region, it can be determined that at least a part of the catalytically active component is supported on the carrier.

The carrier can be selected, for example, from an inorganic oxide. The inorganic oxide is, for example, in particulate form. From the viewpoint of improving supportability for a catalytically active component, the inorganic oxide is preferably porous. The inorganic oxide may have oxygen storage capacity (OSC) or may not have oxygen storage capacity. The inorganic oxide used as a carrier is distinguished from an inorganic oxide used as a binder (for example, an inorganic oxide-based binder such as an alumina binder, a zirconia binder, a titania binder, or a silica binder).

Examples of the inorganic oxide include an Al-based oxide, a Ce-based oxide, a Ce-Zr-based complex oxide, an oxide of a rare earth element other than Ce, zirconia (ZrO₂), silica (SiO₂), titania (TiO₂), zeolite (aluminosilicate), and an oxide based on MgO, ZnO, SnO₂, or the like.

From the viewpoint of improving heat resistance and/or oxygen storage capacity of the first catalyst layer 20 and thereby further improving CO purification performance of the first catalyst layer 20, the carrier is preferably selected from an Al-based oxide, a Ce-based oxide, and a Ce-Zr-based complex oxide, and more preferably selected from an Al-based oxide and a Ce-Zr-based complex oxide. In one embodiment, the first catalyst layer 20 contains an Al-based oxide and a Ce-Zr-based complex oxide as carriers.

From the viewpoint of further improving CO purification performance of the first catalyst layer 20, the first catalyst layer 20 preferably contains Ce.

From the viewpoint of further improving CO purification performance of the first catalyst layer 20, a content of Ce in terms of CeO₂ in the first catalyst layer 20, based on the mass of the first catalyst layer 20, is preferably 10% by mass or more, more preferably 12% by mass or more, and still more preferably 15% by mass or more. The upper limit can be appropriately adjusted in consideration of a balance between CO purification performance and cost. The upper limit is preferably 40% by mass or less, more preferably 35% by mass or less, and still more preferably 30% by mass or less. Each of the above lower limits may be combined with any of the above upper limits.

From the viewpoint of further improving CO purification performance of the first catalyst layer 20, the first catalyst layer 20 preferably has a large oxygen storage capacity. On the other hand, when the content of Ce in terms of CeO₂ in the first catalyst layer 20 is increased in order to improve oxygen storage capacity of the first catalyst layer 20, noble metal elements in the first catalyst layer 20 tend to be oxidized. Pd has a property that CO purification performance is less likely to decrease even when oxidized, as compared with other noble metal elements such as Rh and Pt. Therefore, by the first catalyst layer 20 containing Pd as a catalytically active component, a large oxygen storage capacity can be effectively achieved without reducing CO purification performance. Furthermore, when the first catalyst layer 20 has a large oxygen storage capacity, the effect extends not only to the first catalyst layer 20 but also to the second catalyst layer 30 located downstream of the first catalyst layer 20, and exhaust gas contacting the second catalyst layer 30 becomes suitable for methane purification by the second catalyst layer 30.

For a given catalyst layer, the "content of Ce in terms of CeO₂ in the catalyst layer" refers to, when the catalyst layer contains one Ce source, a content of Ce in terms of CeO₂ derived from the one Ce source, and when the catalyst layer contains two or more Ce sources, a total content of Ce in terms of CeO₂ derived from the two or more Ce sources. This definition applies to any catalyst layer (that is, the first catalyst layer 20, the second catalyst layer 30, the third catalyst layer 40, and the fourth catalyst layer 50).

From the viewpoint of further improving CO purification performance of the first catalyst layer 20, in the first catalyst layer 20, a ratio of the mass of Ce in terms of CeO₂ to the mass of Pd in terms of metal is preferably 1 or more and 100 or less, more preferably 2 or more and 90 or less, and still more preferably 3 or more and 80 or less. Each of the above lower limits may be combined with any of the above upper limits.

When the first catalyst layer 20 contains Ce, the first catalyst layer 20 contains one or more Ce sources.

The Ce source is, for example, an oxide containing Ce. Examples of the oxide containing Ce include a Ce-based oxide, a Ce-Zr-based complex oxide, an Al-based oxide containing Ce, a Zr-based oxide containing Ce, a ceria binder, and the like.

From the viewpoint of further improving CO purification performance of the first catalyst layer 20, the first catalyst layer 20 preferably contains a Ce-Zr-based complex oxide as a Ce source. The first catalyst layer 20 may contain, in addition to the Ce-Zr-based complex oxide, one or more other Ce sources.

From the viewpoint of further improving CO purification performance of the first catalyst layer 20, a content of the Ce-Zr-based complex oxide in the first catalyst layer 20, based on the mass of the first catalyst layer 20, is preferably 20% by mass or more and 80% by mass or less, more preferably 25% by mass or more and 70% by mass or less, and still more preferably 30% by mass or more and 60% by mass or less. Each of the above lower limits may be combined with any of the above upper limits.

The content of the Ce-Zr-based complex oxide in the first catalyst layer 20 is defined by the formula: (a mass of the Ce-Zr-based complex oxide in the first catalyst layer 20) / (the mass of the first catalyst layer 20) x 100.

When information (for example, a composition and an amount) on raw materials used for forming the first catalyst layer 20 is known, the content of the Ce-Zr-based complex oxide in the first catalyst layer 20 can be determined from the information on the raw materials used for forming the first catalyst layer 20.

When information on raw materials used for forming the first catalyst layer 20 is not known, the content of the Ce-Zr-based complex oxide in the first catalyst layer 20 can be determined by a conventional method such as SEM-EDX. Specifically, the determination is performed as follows.
(1) For a sample obtained from the first catalyst layer 20, elemental analysis is performed using a conventional method such as SEM-EDX to identify the types of constituent elements in the entire sample and to determine the content (% by mass) of each identified metal element in terms of oxide.
(2) For a sample obtained from the first catalyst layer 20, elemental mapping is performed using a conventional method such as SEM-EDX to identify the types of particles contained in the sample (for example, a Ce-Zr-based complex oxide, an Al-based oxide, and the like).
(3) For each type of particle, elemental analysis is performed using SEM-EDX on a plurality of particles arbitrarily selected (for example, 50 particles) to identify the types of constituent elements of the particles and to determine the content (% by mass) of each identified metal element in terms of oxide. For each type of particle, the average value of the content (% by mass) of each identified metal element in terms of oxide is calculated, and the average value is defined as the content (% by mass) of each identified metal element in terms of oxide in each type of particle.
(4) By creating and solving equations representing relationships among the content (% by mass) of each identified metal element in terms of oxide in the sample, the content (% by mass) of each identified metal element in terms of oxide in each type of particle, and the content (% by mass) of each type of particle in the sample, the content (% by mass) of each type of particle in the sample is calculated, and the calculated value is defined as the content (% by mass) of each type of particle in the first catalyst layer 20.

From the viewpoint of further improving CO purification performance of the first catalyst layer 20, a proportion of a mass of Ce in terms of CeO₂ derived from the Ce-Zr-based complex oxide to a mass of Ce in terms of CeO₂ in the first catalyst layer 20 is preferably 80% by mass or more, more preferably 85% by mass or more, and still more preferably 90% by mass or more. The upper limit is 100% by mass.

Hereinafter, preferred embodiments of the Ce-Zr-based complex oxide that may be contained in the first catalyst layer 20 will be described.

From the viewpoint of improving oxygen storage capacity of the Ce-Zr-based complex oxide, a content of Ce in terms of CeO₂ in the Ce-Zr-based complex oxide, based on a mass of the Ce-Zr-based complex oxide, is preferably 7% by mass or more, and more preferably 10% by mass or more. The upper limit can be appropriately adjusted in consideration of heat resistance, structural stability, contents of other components, and the like. The upper limit is preferably 90% by mass or less, and more preferably 85% by mass or less. Each of the above lower limits may be combined with any of the above upper limits.

From the viewpoint of improving heat resistance of the Ce-Zr-based complex oxide, a content of Zr in terms of ZrO₂ in the Ce-Zr-based complex oxide, based on the mass of the Ce-Zr-based complex oxide, is preferably 7% by mass or more, and more preferably 10% by mass or more. The upper limit can be appropriately adjusted in consideration of oxygen storage capacity, structural stability, contents of other components, and the like. The upper limit is preferably 90% by mass or less, and more preferably 85% by mass or less. Each of the above lower limits may be combined with any of the above upper limits.

From the viewpoint of improving oxygen storage capacity and heat resistance of the Ce-Zr-based complex oxide, a total of the content of Ce in terms of CeO₂ and the content of Zr in terms of ZrO₂ in the Ce-Zr-based complex oxide, based on the mass of the Ce-Zr-based complex oxide, is preferably 70% by mass or more, more preferably 75% by mass or more, and still more preferably 80% by mass or more. The upper limit is 100% by mass.

From the viewpoint of improving heat resistance of the Ce-Zr-based complex oxide, a content of a rare earth element in terms of oxide in the Ce-Zr-based complex oxide, based on the mass of the Ce-Zr-based complex oxide, is preferably 0.1% by mass or more and 30% by mass or less, more preferably 0.5% by mass or more and 25% by mass or less, and still more preferably 1% by mass or more and 20% by mass or less. Each of the above lower limits may be combined with any of the above upper limits.

The "content of a rare earth element in terms of oxide in the Ce-Zr-based complex oxide" refers to, when the Ce-Zr-based complex oxide contains one rare earth element, a content of the one rare earth element in terms of oxide, and when the Ce-Zr-based complex oxide contains two or more rare earth elements, a total content of the two or more rare earth elements in terms of oxide. This definition applies to a Ce-Zr-based complex oxide contained in any catalyst layer (that is, the first catalyst layer 20, the second catalyst layer 30, the third catalyst layer 40, and the fourth catalyst layer 50).

From the viewpoint of improving catalytic activity of Pd in the first catalyst layer 20 and thereby further improving CO purification performance of the first catalyst layer 20, the first catalyst layer 20 preferably contains an alkaline earth metal element. The first catalyst layer 20 may contain one alkaline earth metal element or may contain two or more alkaline earth metal elements.

The alkaline earth metal element can be selected, for example, from Mg, Ca, Sr, Ba, and the like, and is preferably selected from Ca, Sr, and Ba, and more preferably selected from Sr and Ba.

From the viewpoint of further improving CO purification performance of the first catalyst layer 20, a content of an alkaline earth metal element in terms of oxide in the first catalyst layer 20, based on the mass of the first catalyst layer 20, is preferably 0.1% by mass or more, more preferably 0.3% by mass or more, and still more preferably 0.5% by mass or more. The upper limit can be appropriately adjusted in consideration of a balance between CO purification performance and cost. The upper limit is preferably 20% by mass or less, more preferably 18% by mass or less, and still more preferably 15% by mass or less. Each of the above lower limits may be combined with any of the above upper limits.

For a given catalyst layer, the "content of an alkaline earth metal element in terms of oxide in the catalyst layer" refers to, when the catalyst layer contains one alkaline earth metal element, a content of the one alkaline earth metal element in terms of oxide, and when the catalyst layer contains two or more alkaline earth metal elements, a total content of the two or more alkaline earth metal elements in terms of oxide. This definition applies to any catalyst layer (that is, the first catalyst layer 20, the second catalyst layer 30, the third catalyst layer 40, and the fourth catalyst layer 50).

For a given catalyst layer, the "content of an alkaline earth metal element in terms of oxide in the catalyst layer" refers to, when the catalyst layer contains one alkaline earth metal element source, a content of an alkaline earth metal element in terms of oxide derived from the one alkaline earth metal element source, and when the catalyst layer contains two or more alkaline earth metal element sources, a total content of alkaline earth metal elements in terms of oxide derived from the two or more alkaline earth metal element sources. This definition applies to any catalyst layer (that is, the first catalyst layer 20, the second catalyst layer 30, the third catalyst layer 40, and the fourth catalyst layer 50).

When the first catalyst layer 20 contains an alkaline earth metal element, the first catalyst layer 20 contains one or more alkaline earth metal element sources.

Examples of the alkaline earth metal element source include an alkaline earth metal compound. The alkaline earth metal compound is a compound containing an alkaline earth metal element. The alkaline earth metal compound is preferably selected from an oxide, a carbonate, and a sulfate, and more preferably selected from an oxide and a carbonate.

In elemental mapping obtained by analyzing a cross section of a catalyst layer by SEM-EDX, when an alkaline earth metal element and an O element are present in the same region and the alkaline earth metal element and a C element or an S element are not present in the same region, it can be determined that the alkaline earth metal element exists in an oxide form in the catalyst layer. When an alkaline earth metal element, an O element and a C element are present in the same region, it can be determined that the alkaline earth metal element exists in a carbonate form in the catalyst layer. When an alkaline earth metal element, an O element and an S element are present in the same region, it can be determined that the alkaline earth metal element exists in a sulfate form in the catalyst layer.

When an acetate, a nitrate, or a hydroxide of an alkaline earth metal element is used as a raw material for a catalyst layer, the acetate, nitrate, or hydroxide becomes an oxide by calcining performed to form the catalyst layer, and the oxide reacts with CO₂ in air to become a carbonate. When a carbonate or a sulfate of an alkaline earth metal element is used as a raw material for a catalyst layer, the carbonate or sulfate remains as a carbonate or a sulfate, respectively, even after calcining.

The first catalyst layer 20 may contain other components such as a binder. Examples of the binder include inorganic oxide-based binders such as an alumina binder, a ceria binder, a zirconia binder, a titania binder, and a silica binder.

### <Second catalyst layer>

As shown in Figs. 5 and 6, the catalyst 1A includes a second catalyst layer 30 provided on the second substrate portion 10b.

As shown in Figs. 5 and 6, the second catalyst layer 30 is provided on a surface on the cell 13b side of the partition wall 12b. The "surface on the cell 13b side of the partition wall 12b" refers to an outer surface of the partition wall 12b, the outer surface extending in the exhaust gas flow direction X and being in contact with the cell 13b. The second catalyst layer 30 may be provided directly or via another layer on the surface on the cell 13b side of the partition wall 12b. However, the second catalyst layer 30 is usually provided directly on the surface on the cell 13b side of the partition wall 12b. The "second catalyst layer 30 provided on the second substrate portion 10b" includes both an embodiment wherein the second catalyst layer 30 is provided directly on the surface on the cell 13b side of the partition wall 12b, and an embodiment wherein the second catalyst layer 30 is provided via another layer on the surface on the cell 13b side of the partition wall 12b.

The second catalyst layer 30 may be composed of a structure raised from the surface on the cell 13b side of the partition wall 12b toward the cell 13b side (hereinafter referred to as a "raised structure"), or may be composed of a structure existing inside the partition wall 12b (hereinafter referred to as an "internal structure"), or may have both the raised structure and the internal portion. The "second catalyst layer 30 provided on the second substrate portion 10b" includes an embodiment wherein the second catalyst layer 30 is composed of the raised structure, an embodiment wherein the second catalyst layer 30 is composed of the internal structure, and an embodiment wherein the second catalyst layer 30 has both the raised structure and the internal structure.

As shown in Fig. 6, the second catalyst layer 30 extends along a direction opposite to the exhaust gas flow direction X from the end on the exhaust gas outflow side of the partition wall 12b to the end on the exhaust gas inflow side of the partition wall 12b. The second catalyst layer 30 may extend along the direction opposite to the exhaust gas flow direction X from the end on the exhaust gas outflow side of the partition wall 12b so as not to reach the end on the exhaust gas inflow side of the partition wall 12b, or may extend along the exhaust gas flow direction X from the end on the exhaust gas inflow side of the partition wall 12b so as not to reach the end on the exhaust gas outflow side of the partition wall 12b.

As shown in Fig. 6, the end on the exhaust gas outflow side of the first catalyst layer 20 and the end on the exhaust gas inflow side of the second catalyst layer 30 are in contact with each other at a boundary S. As shown in Fig. 6, the boundary S between the end on the exhaust gas outflow side of the first catalyst layer 20 and the end on the exhaust gas inflow side of the second catalyst layer 30 coincides with the boundary S between the end on the exhaust gas outflow side of the first substrate portion 10a and the end on the exhaust gas inflow side of the second substrate portion 10b.

A portion on the exhaust gas outflow side of the first catalyst layer 20 may overlap with a portion on the exhaust gas inflow side of the second catalyst layer 30 (that is, the portion on the exhaust gas outflow side of the first catalyst layer 20 may be located on an upper side of the portion on the exhaust gas inflow side of the second catalyst layer 30 and cover it). Alternatively, the portion on the exhaust gas inflow side of the second catalyst layer 30 may overlap with the portion on the exhaust gas outflow side of the first catalyst layer 20 (that is, the portion on the exhaust gas inflow side of the second catalyst layer 30 may be located on an upper side of the portion on the exhaust gas outflow side of the first catalyst layer 20 and cover it). The "portion on the exhaust gas outflow side of the first catalyst layer 20" refers to a portion of the first catalyst layer 20, the portion extending along a direction opposite to the exhaust gas flow direction X from the end on the exhaust gas outflow side of the first catalyst layer 20. The "portion on the exhaust gas inflow side of the second catalyst layer 30" refers to a portion of the second catalyst layer 30, the portion extending along the exhaust gas flow direction X from the end on the exhaust gas inflow side of the second catalyst layer 30.

The end on the exhaust gas outflow side of the first catalyst layer 20 and the end on the exhaust gas inflow side of the second catalyst layer 30 may not be in contact with each other. That is, a gap may be formed between the end on the exhaust gas outflow side of the first catalyst layer 20 and the end on the exhaust gas inflow side of the second catalyst layer 30.

From the viewpoint of achieving a good balance between improvement in methane purification performance of the second catalyst layer 30 and suppression of pressure loss caused by the second catalyst layer 30, a mass (mass after calcining) of the second catalyst layer 30 per unit volume of a portion of the second substrate portion 10b on which the second catalyst layer 30 is provided is preferably 80 g/L or more and 250 g/L or less, more preferably 90 g/L or more and 220 g/L or less, and still more preferably 100 g/L or more and 200 g/L or less. Each of the above lower limits may be combined with any of the above upper limits.

**The** mass of the second catalyst layer 30 per unit volume of the portion of the second substrate portion 10b on which the second catalyst layer 30 is provided is calculated by the formula: (a mass of the second catalyst layer 30) / ((the volume of the second substrate portion 10b) x (an average length L30 of the second catalyst layer 30 / the length L10b of the second substrate portion 10b)).

**The** above description regarding the method for measuring the average length L20 of the first catalyst layer 20 also applies to the method for measuring the average length L30 of the second catalyst layer 30. When applying the description, "the first catalyst layer 20" is read as "the second catalyst layer 30", and "the average length L20" is read as "the average length L30".

From the viewpoint of further improving methane purification performance of the second catalyst layer 30, a percentage of the average length L30 of the second catalyst layer 30 relative to the length L10b of the second substrate portion 10b (L30 / L10b x 100) is preferably 80% or more, more preferably 90% or more, and still more preferably 95% or more. **The** upper limit may be 100% or may exceed 100%. As described above, when the portion on the exhaust gas inflow side of the second catalyst layer 30 overlaps with the portion on the exhaust gas outflow side of the first catalyst layer 20, the percentage exceeds 100%. When the percentage exceeds 100%, the upper limit of the percentage is preferably 500% or less, more preferably 350% or less, and still more preferably 200% or less. Each of the above lower limits may be combined with any of the above upper limits. When the first substrate portion 10a and the second substrate portion 10b are integrated, and when the first substrate portion 10a and the second substrate portion 10b are separate and the end on the exhaust gas outflow side of the first substrate portion 10a and the end on the exhaust gas inflow side of the second substrate portion 10b are in contact with each other, the percentage may exceed 100%. However, when the first substrate portion 10a and the second substrate portion 10b are separate and a gap is formed between the end on the exhaust gas outflow side of the first substrate portion 10a and the end on the exhaust gas inflow side of the second substrate portion 10b, the percentage does not exceed 100%.

From the viewpoint of further improving methane purification performance of the second catalyst layer 30, a percentage of the average length L30 of the second catalyst layer 30 relative to the sum of the length L10a of the first substrate portion 10a and the length L10b of the second substrate portion 10b (L30 / (L10a + L10b) x 100) is preferably 20% or more and 95% or less, more preferably 30% or more and 92% or less, and still more preferably 40% or more and 90% or less. Each of the above lower limits may be combined with any of the above upper limits.

From the viewpoint of further improving CO purification performance of the first catalyst layer 20 and methane purification performance of the second catalyst layer 30, a percentage of a sum of the average length L20 of the first catalyst layer 20 and the average length L30 of the second catalyst layer 30 relative to the sum of the length L10a of the first substrate portion 10a and the length L10b of the second substrate portion 10b ((L20 + L30) / (L10a + L10b) x 100) is preferably 80% or more, more preferably 90% or more, and still more preferably 95% or more. **The** upper limit may be 100% or may exceed 100%. As described above, when the portion on the exhaust gas outflow side of the first catalyst layer 20 overlaps with the portion on the exhaust gas inflow side of the second catalyst layer 30, and when the portion on the exhaust gas inflow side of the second catalyst layer 30 overlaps with the portion on the exhaust gas outflow side of the first catalyst layer 20, the percentage exceeds 100%. **The** upper limit of the percentage is preferably 175% or less, more preferably 162% or less, and still more preferably 150% or less. Each of the above lower limits may be combined with any of the above upper limits. When the first substrate portion 10a and the second substrate portion 10b are integrated, and when the first substrate portion 10a and the second substrate portion 10b are separate and the end on the exhaust gas outflow side of the first substrate portion 10a and the end on the exhaust gas inflow side of the second substrate portion 10b are in contact with each other, the percentage may exceed 100%. However, when the first substrate portion 10a and the second substrate portion 10b are separate and a gap is formed between the end on the exhaust gas outflow side of the first substrate portion 10a and the end on the exhaust gas inflow side of the second substrate portion 10b, the percentage does not exceed 100%.

The second catalyst layer 30 contains Pt.

Pt is contained in the second catalyst layer 30 in a form capable of functioning as a catalytically active component, for example, in a form of a catalytically active component containing Pt, such as metallic Pt, an alloy containing Pt, or a compound containing Pt (for example, an oxide of Pt). From the viewpoint of further improving methane purification performance of the second catalyst layer 30, the catalytically active component containing Pt is preferably in particulate form.

A mass of Pt in terms of metal in the second catalyst layer 30, based on a volume of the portion of the second substrate portion 10b on which the second catalyst layer 30 is provided, is 1.0 g/L or more. From the viewpoint of further improving methane purification performance of the second catalyst layer 30, the mass of Pt in terms of metal in the second catalyst layer 30, based on the volume of the portion of the second substrate portion 10b on which the second catalyst layer 30 is provided, is preferably 1.1 g/L or more, more preferably 1.2 g/L or more. The upper limit can be appropriately adjusted in consideration of a balance between methane purification performance and cost. The upper limit is preferably 7.0 g/L or less, more preferably 6.0 g/L or less, and still more preferably 5.0 g/L or less. Each of the above lower limits may be combined with any of the above upper limits.

The mass of Pt in terms of metal in the second catalyst layer 30, based on the volume of the portion of the second substrate portion 10b on which the second catalyst layer 30 is provided, is calculated by the formula: (the mass of the second catalyst layer 30 per unit volume of the portion of the second substrate portion 10b on which the second catalyst layer 30 is provided) x (a content of Pt in terms of metal in the second catalyst layer 30). A mass of each of other metal elements in terms of oxide in the second catalyst layer 30, based on the volume of the portion of the second substrate portion 10b on which the second catalyst layer 30 is provided, is calculated in the same manner.

From the viewpoint of further improving methane purification performance of the second catalyst layer 30, the content of Pt in terms of metal in the second catalyst layer 30, based on the mass of the second catalyst layer 30, is preferably 0.40% by mass or more, more preferably 0.45% by mass or more, and still more preferably 0.50% by mass or more. The upper limit can be appropriately adjusted in consideration of a balance between methane purification performance and cost. The upper limit is preferably 9% by mass or less, more preferably 8% by mass or less, and still more preferably 7% by mass or less. Each of the above lower limits may be combined with any of the above upper limits.

The second catalyst layer 30 may contain one or more noble metal elements other than Pt.

The noble metal element other than Pt can be selected, for example, from Pd, Rh, Ru, Os, Ir, Au, Ag, and the like. The noble metal element other than Pt is contained in the second catalyst layer 30 in a form capable of functioning as a catalytically active component, for example, in a form of a catalytically active component containing the noble metal element other than Pt, such as a metal, an alloy containing the noble metal element, or a compound containing the noble metal element (for example, an oxide of the noble metal element). From the viewpoint of further improving methane purification performance, the catalytically active component containing the noble metal element other than Pt is preferably in particulate form.

When the second catalyst layer 30 contains Pt and a noble metal element other than Pt, Pt and the noble metal element other than Pt may form an alloy, which may reduce active sites of Pt involved in methane purification performance. Therefore, it is preferable that a content of a noble metal element other than Pt in terms of metal in the second catalyst layer 30 is small. Specifically, the content of a noble metal element other than Pt in terms of metal in the second catalyst layer 30, based on a total mass of all noble metal elements in terms of metal in the second catalyst layer 30, is preferably 30% by mass or less, more preferably 20% by mass or less, and still more preferably 10% by mass or less. The lower limit is 0% by mass.

The "content of a noble metal element other than Pt in terms of metal in the second catalyst layer 30" refers to, when the second catalyst layer 30 contains one noble metal element other than Pt, a content of the one noble metal element in terms of metal, and when the second catalyst layer 30 contains two or more noble metal elements other than Pt, a total content of the two or more noble metal elements in terms of metal.

It is preferable that the second catalyst layer 30 contains one or more carriers, and that at least a part of a catalytically active component is supported on the one or more carriers. The carrier can be selected, for example, from an inorganic oxide. Description of the inorganic oxide is the same as described above.

From the viewpoint of improving heat resistance and/or oxygen storage capacity of the second catalyst layer 30 and thereby further improving methane purification performance of the second catalyst layer 30, the carrier is preferably selected from an Al-based oxide, a Ce-based oxide, and a Ce-Zr-based complex oxide, and more preferably selected from an Al-based oxide and a Ce-Zr-based complex oxide. In one embodiment, the second catalyst layer 30 contains an Al-based oxide and a Ce-Zr-based complex oxide as carriers.

The second catalyst layer 30 contains Ce.

From the viewpoint of further improving methane purification performance of the second catalyst layer 30, a mass of Ce in terms of CeO₂ in the second catalyst layer 30, based on the volume of the portion of the second substrate portion 10b on which the second catalyst layer 30 is provided, is preferably 5 g/L or more, more preferably 8 g/L or more, and still more preferably 10 g/L or more. The upper limit can be appropriately adjusted in consideration of a balance between methane purification performance and cost. The upper limit is preferably 90 g/L or less, more preferably 80 g/L or less, and still more preferably 70 g/L or less. Each of the above lower limits may be combined with any of the above upper limits.

From the viewpoint of further improving methane purification performance of the second catalyst layer 30, a content of Ce in terms of CeO₂ in the second catalyst layer 30, based on the mass of the second catalyst layer 30, is preferably 5% by mass or more, more preferably 8% by mass or more, and still more preferably 10% by mass or more. The upper limit can be appropriately adjusted in consideration of a balance between methane purification performance and cost. The upper limit is preferably 40% by mass or less, more preferably 35% by mass or less, and still more preferably 30% by mass or less. Each of the above lower limits may be combined with any of the above upper limits.

The second catalyst layer 30 contains one or more Ce sources. Description of the Ce source is the same as described above.

From the viewpoint of further improving methane purification performance of the second catalyst layer 30, the second catalyst layer 30 preferably contains a Ce-Zr-based complex oxide as a Ce source. The second catalyst layer 30 may contain, in addition to the Ce-Zr-based complex oxide, one or more other Ce sources. In one embodiment, the second catalyst layer 30 contains a Ce-Zr-based complex oxide and a ceria binder as Ce sources.

From the viewpoint of further improving methane purification performance of the second catalyst layer 30, it is preferable that the second catalyst layer 30 contains a Ce-Zr-based complex oxide as a Ce source, and that at least a part of Pt in the second catalyst layer 30 is supported on the Ce-Zr-based complex oxide in the second catalyst layer 30.

From the viewpoint of further improving methane purification performance of the second catalyst layer 30, a percentage of a mass of Pt in terms of metal supported on the Ce-Zr-based complex oxide in the second catalyst layer 30 relative to a total mass of all Pt in terms of metal in the second catalyst layer 30 (hereinafter referred to as "percentage Q1") is preferably 20% by mass or more, more preferably 30% by mass or more, and still more preferably 40% by mass or more. The upper limit is 100% by mass.

The percentage Q1 is determined from the formula: Q11 / Q12 x 100, wherein Q11 represents a percentage (% by mass) of the mass of Pt in terms of metal supported on the Ce-Zr-based complex oxide in the second catalyst layer 30 relative to the mass of the second catalyst layer 30, and Q12 represents a percentage (% by mass) of the total mass of all Pt in terms of metal in the second catalyst layer 30 relative to the mass of the second catalyst layer 30.

Hereinafter, the method for determining Q11 will be described.

Q11 is determined from the following formula: 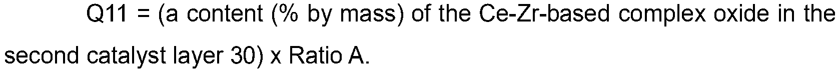 Q11 = (a content (% by mass) of the Ce-Zr-based complex oxide in the second catalyst layer 30) x Ratio A.

The content of the Ce-Zr-based complex oxide in the second catalyst layer 30 can be determined in the same manner as the content of the Ce-Zr-based complex oxide in the first catalyst layer 20.

The method for determining Ratio A is as follows.
(1) For the second catalyst layer 30, elemental mapping is performed using a conventional method such as SEM-EDX to identify the types of particles contained in the second catalyst layer 30 (for example, Ce-Zr-based complex oxides, carriers other than Ce-Zr-based complex oxides, and the like).
(2) Elemental analysis is performed using SEM-EDX on a plurality of Ce-Zr-based complex oxides arbitrarily selected (for example, 50 Ce-Zr-based complex oxides) including metal elements supported on the Ce-Zr-based complex oxides (hereinafter referred to as "supported elements"), to identify the types of constituent elements of the Ce-Zr-based complex oxides and supported elements, and to determine the content (% by mass) of each identified metal element in terms of oxide or metal. Specifically, for noble metal elements, contents (% by mass) of the noble metal elements in terms of metal are determined, and for metal elements other than noble metal elements, contents (% by mass) of the metal elements in terms of oxide are determined. From analysis results of the plurality of the Ce-Zr-based complex oxides (for example, 50 Ce-Zr-based complex oxides) and supported elements, the average value of the content (% by mass) of each identified metal element in terms of oxide or metal is calculated, and Ratio A is determined from the following formula: 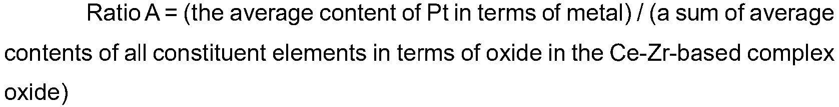
Ratio A = (the average content of Pt in terms of metal) / (a sum of average contents of all constituent elements in terms of oxide in the Ce-Zr-based complex oxide)

Hereinafter, the method for obtaining Q12 will be described.

Q12 is determined from the following formula: 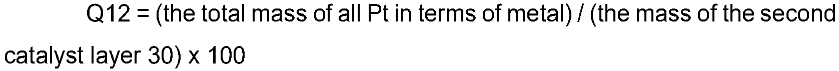 Q12 = (the total mass of all Pt in terms of metal) / (the mass of the second catalyst layer 30) x 100

Q12 can be determined in the same manner as the content of Pt in terms of metal in the second catalyst layer 30.

From the viewpoint of further improving methane purification performance of the second catalyst layer 30, the mass of the Ce-Zr-based complex oxide in the second catalyst layer 30, based on the volume of the portion of the second substrate portion 10b on which the second catalyst layer 30 is provided, is preferably 30 g/L or more, more preferably 35 g/L or more, and still more preferably 40 g/L or more. The upper limit can be appropriately adjusted in consideration of a balance between methane purification performance and cost. The upper limit is preferably 130 g/L or less, more preferably 125 g/L or less, and still more preferably 120 g/L or less. Each of the above lower limits may be combined with any of the above upper limits.

From the viewpoint of further improving methane purification performance of the second catalyst layer 30, the content of the Ce-Zr-based complex oxide in the second catalyst layer 30, based on the mass of the second catalyst layer 30, is preferably 20% by mass or more and 80% by mass or less, more preferably 25% by mass or more and 70% by mass or less, and still more preferably 30% by mass or more and 60% by mass or less. Each of the above lower limits may be combined with any of the above upper limits.

The content of the Ce-Zr-based complex oxide in the second catalyst layer 30 can be determined in the same manner as the content of the Ce-Zr-based complex oxide in the first catalyst layer 20.

From the viewpoint of further improving methane purification performance of the second catalyst layer 30, a proportion of a mass of Ce in terms of CeO₂ derived from the Ce-Zr-based complex oxide to a mass of Ce in terms of CeO₂ in the second catalyst layer 30 is preferably 70% by mass or more, more preferably 75% by mass or more, and still more preferably 80% by mass or more. The upper limit is 100% by mass.

Hereinafter, preferred embodiments of the Ce-Zr-based complex oxide that may be contained in the second catalyst layer 30 will be described.

From the viewpoint of improving oxygen storage capacity of the Ce-Zr-based complex oxide, a content of Ce in terms of CeO₂ in the Ce-Zr-based complex oxide, based on the mass of the Ce-Zr-based complex oxide, is preferably 18% by mass or more, more preferably 20% by mass or more, and still more preferably 25% by mass or more. The upper limit can be appropriately adjusted in consideration of heat resistance, structural stability, content of other components, and the like. The upper limit is preferably 70% by mass or less, more preferably 65% by mass or less, still more preferably 63% by mass or less, and still more preferably 58% by mass or less. Each of the above lower limits may be combined with any of the above upper limits.

From the viewpoint of improving heat resistance of the Ce-Zr-based complex oxide, a content of Zr in terms of ZrO₂ in the Ce-Zr-based complex oxide, based on the mass of the Ce-Zr-based complex oxide, is preferably 20% by mass or more, more preferably 25% by mass or more, and still more preferably 32% by mass or more. The upper limit can be appropriately adjusted in consideration of oxygen storage capacity, structural stability, content of other components, and the like. The upper limit is preferably 70% by mass or less, more preferably 65% by mass or less, and still more preferably 62% by mass or less. Each of the above lower limits may be combined with any of the above upper limits.

From the viewpoint of improving oxygen storage capacity and heat resistance of the Ce-Zr-based complex oxide, a total of the content of Ce in terms of CeO₂ and the content of Zr in terms of ZrO₂ in the Ce-Zr-based complex oxide, based on the mass of the Ce-Zr-based complex oxide, is preferably 70% by mass or more, more preferably 75% by mass or more, and still more preferably 80% by mass or more. The upper limit is 100% by mass.

From the viewpoint of improving heat resistance of the Ce-Zr-based complex oxide, a content of a rare earth element in terms of oxide in the Ce-Zr-based complex oxide, based on the mass of the Ce-Zr-based complex oxide, is preferably 0.1% by mass or more and 30% by mass or less, more preferably 0.5% by mass or more and 25% by mass or less, and still more preferably 1% by mass or more and 20% by mass or less. Each of the above lower limits may be combined with any of the above upper limits.

The second catalyst layer 30 contains an alkaline earth metal element. The second catalyst layer 30 may contain one alkaline earth metal element or may contain two or more alkaline earth metal elements.

The alkaline earth metal element can be selected, for example, from Mg, Ca, Sr, Ba, and the like, and is preferably selected from Ca, Sr, and Ba, and more preferably selected from Sr and Ba.

From the viewpoint of further improving methane purification performance of the second catalyst layer 30, a mass of an alkaline earth metal element in terms of oxide in the second catalyst layer 30, based on the volume of the portion of the second substrate portion 10b on which the second catalyst layer 30 is provided, is preferably 2.5 g/L or more, more preferably 3.0 g/L or more, and still more preferably 3.5 g/L or more. The upper limit can be appropriately adjusted in consideration of a balance between methane purification performance and cost. The upper limit is preferably 30 g/L or less, more preferably 25 g/L or less, and still more preferably 20 g/L or less. Each of the above lower limits may be combined with any of the above upper limits.

From the viewpoint of further improving methane purification performance of the second catalyst layer 30, a content of an alkaline earth metal element in terms of oxide in the second catalyst layer 30, based on the mass of the second catalyst layer 30, is preferably 0.1 % by mass or more, more preferably 0.3% by mass or more, and still more preferably 0.5% by mass or more. The upper limit can be appropriately adjusted in consideration of a balance between methane purification performance and cost. The upper limit is preferably 20% by mass or less, more preferably 18% by mass or less, and still more preferably 15% by mass or less. Each of the above lower limits may be combined with any of the above upper limits.

The second catalyst layer 30 contains one or more alkaline earth metal element sources. Description of the alkaline earth metal element source is the same as described above.

In the second catalyst layer 30, a ratio of a mass of Ce in terms of CeO₂ to a mass of Pt in terms of metal is 6.0 or more and 20.0 or less. From the viewpoint of further improving methane purification performance of the second catalyst layer 30, the ratio is preferably 7.0 or more and 19.0 or less, more preferably 8.0 or more and 18.0 or less. Each of the above lower limits may be combined with any of the above upper limits.

In the second catalyst layer 30, a ratio of a mass of Ce in terms of CeO₂ to a mass of an alkaline earth metal element in terms of oxide is 2.0 or more and 18.0 or less. From the viewpoint of further improving methane purification performance of the second catalyst layer 30, the ratio is preferably 2.5 or more, more preferably 3.0 or more. From the same viewpoint, the ratio is preferably 17.0 or less, still more preferably 16.0 or less, still more preferably 15.0 or less, still more preferably 14.0 or less, still more preferably 13.0 or less, and still more preferably 12.0 or less. Each of the above lower limits may be combined with any of the above upper limits.

The second catalyst layer 30 may contain other components such as a binder. Examples of the binder include inorganic oxide-based binders such as an alumina binder, a ceria binder, a zirconia binder, a titania binder, and a silica binder.

### <Third catalyst layer and fourth catalyst layer>

As shown in Figs. 4 and 6, the catalyst 1A includes a third catalyst layer 40 provided on an upper side of the first catalyst layer 20.

As shown in Fig. 6, the third catalyst layer 40 extends along the exhaust gas flow direction X from the end on the exhaust gas inflow side of the partition wall 12a to the end on the exhaust gas outflow side of the partition wall 12a. The third catalyst layer 40 may extend along the exhaust gas flow direction X from the end on the exhaust gas inflow side of the partition wall 12a so as not to reach the end on the exhaust gas outflow side of the partition wall 12a, or may extend along a direction opposite to the exhaust gas flow direction X from the end on the exhaust gas outflow side of the partition wall 12a so as not to reach the end on the exhaust gas inflow side of the partition wall 12a.

The expression "the third catalyst layer 40 is provided on an upper side of the first catalyst layer 20" means that a part or all of the third catalyst layer 40 is present on, among two main surfaces of the first catalyst layer 20, a main surface of the first catalyst layer 20 opposite to a main surface on the partition wall 12a side. The term "main surface of the first catalyst layer 20" refers to an outer surface of the first catalyst layer 20, the outer surface extending in the exhaust gas flow direction X. The third catalyst layer 40 may be provided directly or via another layer on the main surface of the first catalyst layer 20, but is usually provided directly on the main surface of the first catalyst layer 20. The third catalyst layer 40 may be provided so as to cover a part of the main surface of the first catalyst layer 20 or may be provided so as to cover the entire main surface of the first catalyst layer 20. The "third catalyst layer 40 provided on an upper side of the first catalyst layer 20" includes both an embodiment in which the third catalyst layer 40 is provided directly on the main surface of the first catalyst layer 20 and an embodiment in which the third catalyst layer 40 is provided via another layer on the main surface of the first catalyst layer 20.

From the viewpoint of achieving a good balance between improvement in CO and NOx purification performance of the third catalyst layer 40 and suppression of pressure loss caused by the third catalyst layer 40, a mass (mass after calcining) of the third catalyst layer 40 per unit volume of a portion of the first substrate portion 10a on which the third catalyst layer 40 is provided is preferably 20 g/L or more and 200 g/L or less, more preferably 30 g/L or more and 150 g/L or less, and still more preferably 40 g/L or more and 120 g/L or less. Each of the above lower limits may be combined with any of the above upper limits.

The mass of the third catalyst layer 40 per unit volume of the portion of the first substrate portion 10a on which the third catalyst layer 40 is provided is calculated by the formula: (a mass of the third catalyst layer 40) / ((the volume of the first substrate portion 10a) x (an average length L40 of the third catalyst layer 40 / the length L10a of the first substrate portion 10a)).

The above description regarding the method for measuring the average length L20 of the first catalyst layer 20 also applies to the method for measuring the average length L40 of the third catalyst layer 40. When applying the description, "the first catalyst layer 20" is read as "the third catalyst layer 40", and "the average length L20" is read as "the average length L40".

From the viewpoint of further improving CO and NOx purification performance of the third catalyst layer 40, a percentage of the average length L40 of the third catalyst layer 40 relative to the length L10a of the first substrate portion 10a (L40 / L10a x 100) is preferably 80% or more, more preferably 90% or more, and still more preferably 95% or more. The upper limit may be 100% or may exceed 100%. As described later, when a portion on the exhaust gas outflow side of the third catalyst layer 40 overlaps with a portion on the exhaust gas inflow side of the fourth catalyst layer 50, the percentage exceeds 100%. When the percentage exceeds 100%, the upper limit of the percentage is preferably 600% or less, more preferably 400% or less, and still more preferably 300% or less. Each of the above lower limits may be combined with any of the above upper limits. When the first substrate portion 10a and the second substrate portion 10b are integrated, and when the first substrate portion 10a and the second substrate portion 10b are separate and the end on the exhaust gas outflow side of the first substrate portion 10a and the end on the exhaust gas inflow side of the second substrate portion 10b are in contact with each other, the percentage may exceed 100%. However, when the first substrate portion 10a and the second substrate portion 10b are separate and a gap is formed between the end on the exhaust gas outflow side of the first substrate portion 10a and the end on the exhaust gas inflow side of the second substrate portion 10b, the percentage does not exceed 100%.

From the viewpoint of further improving CO and NOx purification performance of the third catalyst layer 40, a percentage of the average length L40 of the third catalyst layer 40 relative to the sum of the length L10a of the first substrate portion 10a and the length L10b of the second substrate portion 10b (L40 / (L10a + L10b) x 100) is preferably 15% or more and 80% or less, more preferably 18% or more and 70% or less, and still more preferably 20% or more and 60% or less. Each of the above lower limits may be combined with any of the above upper limits.

As shown in Figs. 5 and 6, the catalyst 1A includes a fourth catalyst layer 50 provided on an upper side of the second catalyst layer 30.

The fourth catalyst layer 50 extends along a direction opposite to the exhaust gas flow direction X from the end on the exhaust gas outflow side of the partition wall 12b to the end on the exhaust gas inflow side of the partition wall 12b. The fourth catalyst layer 50 may extend along the direction opposite to the exhaust gas flow direction X from the end on the exhaust gas outflow side of the partition wall 12b so as not to reach the end on the exhaust gas inflow side of the partition wall 12b, or may extend along the exhaust gas flow direction X from the end on the exhaust gas inflow side of the partition wall 12b so as not to reach the end on the exhaust gas outflow side of the partition wall 12b.

The expression "the fourth catalyst layer 50 is provided on an upper side of the second catalyst layer 30" means that a part or all of the fourth catalyst layer 50 is present on, among two main surfaces of the second catalyst layer 30, a main surface of the second catalyst layer 30 opposite to a main surface on the partition wall 12b side. The term "main surface of the second catalyst layer 30" refers to an outer surface of the second catalyst layer 30, the outer surface extending in the exhaust gas flow direction X. The fourth catalyst layer 50 may be provided directly or via another layer on the main surface of the second catalyst layer 30, but is usually provided directly on the main surface of the second catalyst layer 30. The fourth catalyst layer 50 may be provided so as to cover a part of the main surface of the second catalyst layer 30 or may be provided so as to cover the entire main surface of the second catalyst layer 30. The "fourth catalyst layer 50 provided on an upper side of the second catalyst layer 30" includes both an embodiment in which the fourth catalyst layer 50 is provided directly on the main surface of the second catalyst layer 30 and an embodiment in which the fourth catalyst layer 50 is provided via another layer on the main surface of the second catalyst layer 30.

From the viewpoint of achieving a good balance between improvement in CO and NOx purification performance of the fourth catalyst layer 50 and suppression of pressure loss caused by the fourth catalyst layer 50, a mass (mass after calcining) of the fourth catalyst layer 50 per unit volume of a portion of the second substrate portion 10b on which the fourth catalyst layer 50 is provided is preferably 20 g/L or more and 200 g/L or less, more preferably 30 g/L or more and 150 g/L or less, and still more preferably 40 g/L or more and 120 g/L or less. Each of the above lower limits may be combined with any of the above upper limits.

The mass of the fourth catalyst layer 50 per unit volume of the portion of the second substrate portion 10b on which the fourth catalyst layer 50 is provided is calculated by the formula: (a mass of the fourth catalyst layer 50) / ((the volume of the second substrate portion 10b) x (an average length L50 of the fourth catalyst layer 50 / the length L10b of the second substrate portion 10b)).

The above description regarding the method for measuring the average length L20 of the first catalyst layer 20 also applies to the method for measuring the average length L50 of the fourth catalyst layer 50. When applying the description, "the first catalyst layer 20" is read as "the fourth catalyst layer 50", and "the average length L20" is read as "the average length L50".

From the viewpoint of further improving CO and NOx purification performance of the fourth catalyst layer 50, a percentage of the average length L50 of the fourth catalyst layer 50 relative to the length L10b of the second substrate portion 10b (L50 / L10b x 100) is preferably 80% or more, more preferably 90% or more, and still more preferably 95% or more. The upper limit may be 100% or may exceed 100%. As described later, when a portion on the exhaust gas inflow side of the fourth catalyst layer 50 overlaps with a portion on the exhaust gas outflow side of the third catalyst layer 40, the percentage exceeds 100%. When the percentage exceeds 100%, the upper limit of the percentage is preferably 500% or less, more preferably 350% or less, and still more preferably 200% or less. Each of the above lower limits may be combined with any of the above upper limits. When the first substrate portion 10a and the second substrate portion 10b are integrated, and when the first substrate portion 10a and the second substrate portion 10b are separate and the end on the exhaust gas outflow side of the first substrate portion 10a and the end on the exhaust gas inflow side of the second substrate portion 10b are in contact with each other, the percentage may exceed 100%. However, when the first substrate portion 10a and the second substrate portion 10b are separate and a gap is formed between the end on the exhaust gas outflow side of the first substrate portion 10a and the end on the exhaust gas inflow side of the second substrate portion 10b, the percentage does not exceed 100%.

From the viewpoint of further improving CO and NOx purification performance of the fourth catalyst layer 50, a percentage of the average length L50 of the fourth catalyst layer 50 relative to the sum of the length L10a of the first substrate portion 10a and the length L10b of the second substrate portion 10b (L50 / (L10a + L10b) x 100) is preferably 20% or more and 95% or less, more preferably 30% or more and 92% or less, and still more preferably 40% or more and 90% or less. Each of the above lower limits may be combined with any of the above upper limits.

As shown in Fig. 6, the end on the exhaust gas outflow side of the third catalyst layer 40 and the end on the exhaust gas inflow side of the fourth catalyst layer 50 are in contact with each other at a boundary S. As shown in Fig. 6, the boundary S between the end on the exhaust gas outflow side of the third catalyst layer 40 and the end on the exhaust gas inflow side of the fourth catalyst layer 50 coincides with the boundary S between the end on the exhaust gas outflow side of the first substrate portion 10a and the end on the exhaust gas inflow side of the second substrate portion 10b.

A portion on the exhaust gas outflow side of the third catalyst layer 40 may overlap with a portion on the exhaust gas inflow side of the fourth catalyst layer 50 (that is, the portion on the exhaust gas outflow side of the third catalyst layer 40 may be located on an upper side of the portion on the exhaust gas inflow side of the fourth catalyst layer 50 and cover it). Alternatively, the portion on the exhaust gas inflow side of the fourth catalyst layer 50 may overlap with the portion on the exhaust gas outflow side of the third catalyst layer 40 (that is, the portion on the exhaust gas inflow side of the fourth catalyst layer 50 may be located on an upper side of the portion on the exhaust gas outflow side of the third catalyst layer 40 and cover it). The "portion on the exhaust gas outflow side of the third catalyst layer 40" refers to a portion of the third catalyst layer 40, the portion extending along a direction opposite to the exhaust gas flow direction X from the end on the exhaust gas outflow side of the third catalyst layer 40. The "portion on the exhaust gas inflow side of the fourth catalyst layer 50" refers to a portion of the fourth catalyst layer 50, the portion extending along the exhaust gas flow direction X from the end on the exhaust gas inflow side of the fourth catalyst layer 50.

When the end on the exhaust gas outflow side of the third catalyst layer 40 and the end on the exhaust gas inflow side of the fourth catalyst layer 50 are in contact with each other at the boundary S, the end on the exhaust gas outflow side of the third catalyst layer 40 and the end on the exhaust gas inflow side of the fourth catalyst layer 50 may be continuous with each other. That is, the third catalyst layer 40 and the fourth catalyst layer 50 may be integrated to form one catalyst layer.

The end on the exhaust gas outflow side of the third catalyst layer 40 and the end on the exhaust gas inflow side of the fourth catalyst layer 50 may not be in contact with each other. That is, a gap may be formed between the end on the exhaust gas outflow side of the third catalyst layer 40 and the end on the exhaust gas inflow side of the fourth catalyst layer 50.

**In** one embodiment, the third catalyst layer 40 extends along the exhaust gas flow direction X from the end on the exhaust gas inflow side of the partition wall 12a to the end on the exhaust gas outflow side of the partition wall 12a, and the end on the exhaust gas outflow side of the third catalyst layer 40 and the end on the exhaust gas inflow side of the fourth catalyst layer 50 are in contact with each other at the boundary S. **In** this embodiment, the end on the exhaust gas outflow side of the third catalyst layer 40 and the end on the exhaust gas inflow side of the fourth catalyst layer 50 may be continuous with each other. **In** this embodiment, the fourth catalyst layer 50 may extend along the exhaust gas flow direction X from the end on the exhaust gas inflow side of the partition wall 12b to the end on the exhaust gas outflow side of the partition wall 12b, or may extend along the exhaust gas flow direction X from the end on the exhaust gas inflow side of the partition wall 12b so as not to reach the end on the exhaust gas outflow side of the partition wall 12b.

**In** another embodiment, the fourth catalyst layer 50 extends along a direction opposite to the exhaust gas flow direction X from the end on the exhaust gas outflow side of the partition wall 12b to the end on the exhaust gas inflow side of the partition wall 12b, and the end on the exhaust gas outflow side of the third catalyst layer 40 and the end on the exhaust gas inflow side of the fourth catalyst layer 50 are in contact with each other at the boundary S. **In** this embodiment, the end on the exhaust gas outflow side of the third catalyst layer 40 and the end on the exhaust gas inflow side of the fourth catalyst layer 50 may be continuous with each other. **In** this embodiment, the third catalyst layer 40 may extend along a direction opposite to the exhaust gas flow direction X from the end on the exhaust gas outflow side of the partition wall 12a to the end on the exhaust gas inflow side of the partition wall 12a, or may extend along a direction opposite to the exhaust gas flow direction X from the end on the exhaust gas outflow side of the partition wall 12a so as not to reach the end on the exhaust gas inflow side of the partition wall 12a.

From the viewpoint of further improving CO and NOx purification performance of the third catalyst layer 40 and the fourth catalyst layer 50, a percentage of a sum of the average length L40 of the third catalyst layer 40 and the average length L50 of the fourth catalyst layer 50 relative to the sum of the length L10a of the first substrate portion 10a and the length L10b of the second substrate portion 10b ((L40 + L50) / (L10a + L10b) x 100) is preferably 80% or more, more preferably 90% or more, and still more preferably 95% or more. The upper limit may be 100% or may exceed 100%. As described above, when the portion on the exhaust gas outflow side of the third catalyst layer 40 overlaps with the portion on the exhaust gas inflow side of the fourth catalyst layer 50, and when the portion on the exhaust gas inflow side of the fourth catalyst layer 50 overlaps with the portion on the exhaust gas outflow side of the third catalyst layer 40, the percentage exceeds 100%. The upper limit of the percentage is preferably 175% or less, more preferably 162% or less, and still more preferably 150% or less. Each of the above lower limits may be combined with any of the above upper limits. When the first substrate portion 10a and the second substrate portion 10b are integrated, and when the first substrate portion 10a and the second substrate portion 10b are separate and the end on the exhaust gas outflow side of the first substrate portion 10a and the end on the exhaust gas inflow side of the second substrate portion 10b are in contact with each other, the percentage may exceed 100%. However, when the first substrate portion 10a and the second substrate portion 10b are separate and a gap is formed between the end on the exhaust gas outflow side of the first substrate portion 10a and the end on the exhaust gas inflow side of the second substrate portion 10b, the percentage does not exceed 100%.

Hereinafter, with respect to common features of the third catalyst layer 40 and the fourth catalyst layer 50, description will be made collectively for the third catalyst layer 40 and the fourth catalyst layer 50. In such a case, expressions such as "catalyst layers 40, 50", "lengths L40, L50", "substrate portions 10a, 10b", and "lengths L10a, L10b" are used. These expressions mean, for the third catalyst layer 40, "catalyst layer 40", "length L40", "substrate portion 10a", and "length L10a", and mean, for the fourth catalyst layer 50, "catalyst layer 50", "length L50", "substrate portion 10b", and "length L10b".

The catalyst layers 40, 50 contain Rh.

Rh is contained in the catalyst layers 40, 50 in a form capable of functioning as a catalytically active component, for example, in a form of a catalytically active component containing Rh, such as metallic Rh, an alloy containing Rh, or a compound containing Rh (for example, an oxide of Rh). From the viewpoint of further improving CO and NOx purification performance of the catalyst layers 40, 50, the catalytically active component containing Rh is preferably in particulate form.

From the viewpoint of further improving CO and NOx purification performance of the catalyst layers 40, 50, a mass of Rh in terms of metal in the catalyst layers 40, 50, based on a volume of the portion of the substrate portions 10a, 10b on which the catalyst layers 40, 50 are provided, is preferably 0.01 g/L or more, more preferably 0.02 g/L or more, and still more preferably 0.05 g/L or more. The upper limit can be appropriately adjusted in consideration of a balance between CO and NOx purification performance and cost. The upper limit is preferably 2.0 g/L or less, more preferably 1.0 g/L or less, and still more preferably 0.5 g/L or less. Each of the above lower limits may be combined with any of the above upper limits.

The mass of Rh in terms of metal in the catalyst layers 40, 50, based on the volume of the portion of the substrate portions 10a, 10b on which the catalyst layers 40, 50 are provided, is calculated by the formula: (the mass of the catalyst layers 40, 50 per unit volume of the portion of the substrate portions 10a, 10b on which the catalyst layers 40, 50 are provided) x (a content of Rh in terms of metal in the catalyst layers 40, 50).

From the viewpoint of further improving CO and NOx purification performance of the catalyst layers 40, 50, the content of Rh in terms of metal in the catalyst layers 40, 50, based on the mass of the catalyst layers 40, 50, is preferably 0.005% by mass or more, more preferably 0.010% by mass or more, and still more preferably 0.025% by mass or more. The upper limit can be appropriately adjusted in consideration of a balance between CO and NOx purification performance and cost. The upper limit is preferably 10% by mass or less, more preferably 5% by mass or less, and still more preferably 2.5% by mass or less. Each of the above lower limits may be combined with any of the above upper limits.

From the viewpoint of further improving CO purification performance of the catalyst layers 40, 50, the catalyst layers 40, 50 preferably contain Pt.

Pt is contained in the catalyst layers 40, 50 in a form capable of functioning as a catalytically active component, for example, in a form of a catalytically active component containing Pt, such as metallic Pt, an alloy containing Pt, or a compound containing Pt (for example, an oxide of Pt). From the viewpoint of further improving CO purification performance of the catalyst layers 40, 50, the catalytically active component containing Pt is preferably in particulate form.

From the viewpoint of further improving CO purification performance of the catalyst layers 40, 50, a mass of Pt in terms of metal in the catalyst layers 40, 50, based on the volume of the portion of the substrate portions 10a, 10b on which the catalyst layers 40, 50 are provided, is preferably 0.01 g/L or more, more preferably 0.05 g/L or more, and still more preferably 0.1 g/L or more. The upper limit can be appropriately adjusted in consideration of a balance between CO purification performance and cost. The upper limit is preferably 1.0 g/L or less, more preferably 0.5 g/L or less, and still more preferably 0.3 g/L or less. Each of the above lower limits may be combined with any of the above upper limits.

The mass of Pt in terms of metal in the catalyst layers 40, 50, based on the volume of the portion of the substrate portions 10a, 10b on which the catalyst layers 40, 50 are provided, is calculated by the formula: (the mass of the catalyst layers 40, 50 per unit volume of the portion of the substrate portions 10a, 10b on which the catalyst layers 40, 50 are provided) x (a content of Pt in terms of metal in the catalyst layers 40, 50).

From the viewpoint of further improving CO purification performance of the catalyst layers 40, 50, the content of Pt in terms of metal in the catalyst layers 40, 50, based on the mass of the catalyst layers 40, 50, is preferably 0.01% by mass or more, more preferably 0.05% by mass or more, and still more preferably 0.1% by mass or more. The upper limit can be appropriately adjusted in consideration of a balance between CO purification performance and cost. The upper limit is preferably 1.0% by mass or less, more preferably 0.5% by mass or less, and still more preferably 0.3% by mass or less. Each of the above lower limits may be combined with any of the above upper limits.

From the viewpoint of further improving CO and NOx purification performance of the catalyst layers 40, 50, in the catalyst layers 40, 50, a ratio of the mass of Pt in terms of metal to the mass of Rh in terms of metal is preferably 0.1 or more and 5 or less, more preferably 0.3 or more and 3 or less, and still more preferably 0.5 or more and 1 or less. Each of the above lower limits may be combined with any of the above upper limits.

The catalyst layers 40, 50 may contain one or more noble metal elements other than Rh and Pt.

The noble metal element other than Rh and Pt can be selected, for example, from Pd, Ru, Ir, Os, and the like. The noble metal element other than Rh and Pt is contained in the catalyst layers 40, 50 in a form capable of functioning as a catalytically active component, for example, in a form of a catalytically active component containing the noble metal element other than Rh and Pt, such as a metal, an alloy containing the noble metal element, or a compound containing the noble metal element (for example, an oxide of the noble metal element). From the viewpoint of further improving CO and NOx purification performance of the catalyst layers 40, 50, the catalytically active component containing the noble metal element other than Rh and Pt is preferably in particulate form.

A content of a noble metal element other than Rh and Pt in terms of metal in the catalyst layers 40, 50, based on a total mass of all noble metal elements in terms of metal in the catalyst layers 40, 50, is preferably 50% by mass or less, more preferably 45% by mass or less, and still more preferably 40% by mass or less. The lower limit is 0% by mass.

The "content of a noble metal element other than Rh and Pt in terms of metal in the catalyst layers 40, 50" refers to, when the catalyst layers 40, 50 contain one noble metal element other than Rh and Pt, a content of the one noble metal element in terms of metal, and when the catalyst layers 40, 50 contain two or more noble metal elements other than Rh and Pt, a total content of the two or more noble metal elements in terms of metal.

The catalyst layers 40, 50 preferably contain one or more carriers, and that at least a part of a catalytically active component is supported on the one or more carriers.

The carrier can be selected, for example, from an inorganic oxide. Description of the inorganic oxide is the same as described above.

From the viewpoint of improving heat resistance and/or oxygen storage capacity of the catalyst layers 40, 50 and thereby further improving CO and NOx purification performance of the catalyst layers 40, 50, the carrier is preferably selected from an Al-based oxide, a Ce-based oxide, and a Ce-Zr-based complex oxide, and more preferably selected from an Al-based oxide and a Ce-Zr-based complex oxide. **In** one embodiment, the catalyst layers 40, 50 contain an Al-based oxide and a Ce-Zr-based complex oxide as carriers.

From the viewpoint of improving oxygen storage capacity of the catalyst layers 40, 50 and thereby further improving CO and NOx purification performance of the catalyst layers 40, 50, the catalyst layers 40, 50 preferably contain Ce.

From the viewpoint of further improving CO and NOx purification performance of the catalyst layers 40, 50, a mass of Ce in terms of CeO₂ in the catalyst layers 40, 50, based on the volume of the portion of the substrate portions 10a, 10b on which the catalyst layers 40, 50 are provided, is preferably 1 g/L or more, more preferably 3 g/L or more, and still more preferably 5 g/L or more. The upper limit can be appropriately adjusted in consideration of a balance between CO and NOx purification performance and cost. The upper limit is preferably 50 g/L or less, more preferably 40 g/L or less, and still more preferably 30 g/L or less. Each of the above lower limits may be combined with any of the above upper limits.

From the viewpoint of further improving CO and NOx purification performance of the catalyst layers 40, 50, a content of Ce in terms of CeO₂ in the catalyst layers 40, 50, based on the mass of the catalyst layers 40, 50, is preferably 0.5% by mass or more, more preferably 1.0% by mass or more, and still more preferably 2.0% by mass or more. The upper limit can be appropriately adjusted in consideration of a balance between CO and NOx purification performance and cost. The upper limit is preferably 35% by mass or less, more preferably 30% by mass or less, and still more preferably 25% by mass or less. Each of the above lower limits may be combined with any of the above upper limits.

From the viewpoint of further improving CO purification performance of the catalyst layers 40, 50, in the catalyst layers 40, 50, a ratio of the mass of Ce in terms of CeO₂ to the mass of Pt in terms of metal is preferably 0.1 or more and 300 or less, more preferably 0.5 or more and 250 or less, and still more preferably 1 or more and 200 or less. Each of the above lower limits may be combined with any of the above upper limits.

Ce has an action of oxidizing Rh and reducing CO and NOx purification performance of Rh. From the viewpoint of suppressing a decrease in CO and NOx purification performance of Rh caused by Ce, the content of Ce in terms of CeO₂ in the catalyst layers 40, 50 is preferably smaller than the content of Ce in terms of CeO₂ in the second catalyst layer 30. A ratio of the content of Ce in terms of CeO₂ in the catalyst layers 40, 50 to the content of Ce in terms of CeO₂ in the second catalyst layer 30 is preferably 0.9 or less, preferably 0.7 or less, and preferably 0.4 or less. The lower limit can be appropriately adjusted in consideration of a balance between CO and NOx purification performance and cost. The lower limit is preferably 0.01 or more, more preferably 0.02 or more, and still more preferably 0.03 or more. Each of the above lower limits may be combined with any of the above upper limits.

When the catalyst layers 40, 50 contain Ce, the catalyst layers 40, 50 contain one or more Ce sources. Description of the Ce source is the same as described above.

From the viewpoint of further improving CO and NOx purification performance of the catalyst layers 40, 50, the catalyst layers 40, 50 preferably contain a Ce-Zr-based complex oxide as a Ce source. The catalyst layers 40, 50 may contain, in addition to the Ce-Zr-based complex oxide, one or more other Ce sources.

From the viewpoint of further improving CO purification performance of the catalyst layers 40, 50, it is preferable that the catalyst layers 40, 50 contain a Ce-Zr-based complex oxide as a Ce source, and that at least a part of Pt in the catalyst layers 40, 50 is supported on the Ce-Zr-based complex oxide in the catalyst layers 40, 50.

From the viewpoint of further improving CO purification performance of the catalyst layers 40, 50, a percentage of a mass of Pt in terms of metal supported on the Ce-Zr-based complex oxide in the catalyst layers 40, 50 relative to a total mass of all Pt in terms of metal in the catalyst layers 40, 50 (hereinafter referred to as "percentage Q2") is preferably 10% by mass or more, more preferably 20% by mass or more, and still more preferably 30% by mass or more. The upper limit is 100% by mass. The percentage Q2 can be determined in the same manner as the percentage Q1.

From the viewpoint of further improving CO and NOx purification performance of the catalyst layers 40, 50, a content of the Ce-Zr-based complex oxide in the catalyst layers 40, 50, based on the mass of the catalyst layers 40, 50, is preferably 5% by mass or more and 80% by mass or less, more preferably 10% by mass or more and 75% by mass or less, and still more preferably 15% by mass or more and 70% by mass or less. Each of the above lower limits may be combined with any of the above upper limits.

The content of the Ce-Zr-based complex oxide in the catalyst layers 40, 50 can be determined in the same manner as the content of the Ce-Zr-based complex oxide in the first catalyst layer 20.

From the viewpoint of further improving CO and NOx purification performance of the catalyst layers 40, 50, a proportion of a mass of Ce in terms of CeO₂ derived from the Ce-Zr-based complex oxide to a mass of Ce in terms of CeO₂ in the catalyst layers 40, 50 is preferably 80% by mass or more, more preferably 85% by mass or more, and still more preferably 90% by mass or more. The upper limit is 100% by mass.

Hereinafter, preferred embodiments of the Ce-Zr-based complex oxide that may be contained in the catalyst layers 40, 50 will be described.

From the viewpoint of improving oxygen storage capacity of the Ce-Zr-based complex oxide, a content of Ce in terms of CeO₂ in the Ce-Zr-based complex oxide, based on the mass of the Ce-Zr-based complex oxide, is preferably 7% by mass or more, more preferably 10% by mass or more. The upper limit can be appropriately adjusted in consideration of heat resistance, structural stability, content of other components, and the like. The upper limit is preferably 90% by mass or less, more preferably 85% by mass or less. Each of the above lower limits may be combined with any of the above upper limits.

From the viewpoint of improving heat resistance of the Ce-Zr-based complex oxide, a content of Zr in terms of ZrO₂ in the Ce-Zr-based complex oxide, based on the mass of the Ce-Zr-based complex oxide, is preferably 7% by mass or more, more preferably 10% by mass or more. The upper limit can be appropriately adjusted in consideration of oxygen storage capacity, structural stability, content of other components, and the like. The upper limit is preferably 90% by mass or less, more preferably 85% by mass or less. Each of the above lower limits may be combined with any of the above upper limits.

From the viewpoint of improving oxygen storage capacity and heat resistance of the Ce-Zr-based complex oxide, a total of the content of Ce in terms of CeO₂ and the content of Zr in terms of ZrO₂ in the Ce-Zr-based complex oxide, based on the mass of the Ce-Zr-based complex oxide, is preferably 70% by mass or more, more preferably 75% by mass or more, and still more preferably 80% by mass or more. The upper limit is 100% by mass.

From the viewpoint of improving heat resistance of the Ce-Zr-based complex oxide, a content of a rare earth element in terms of oxide in the Ce-Zr-based complex oxide, based on the mass of the Ce-Zr-based complex oxide, is preferably 0.1% by mass or more and 30% by mass or less, more preferably 0.5% by mass or more and 25% by mass or less, and still more preferably 1% by mass or more and 20% by mass or less. Each of the above lower limits may be combined with any of the above upper limits.

From the viewpoint of improving catalytic activity of Rh in the catalyst layers 40, 50 and thereby further improving CO and NOx purification performance of the catalyst layers 40, 50, the catalyst layers 40, 50 preferably contain an alkaline earth metal element. The catalyst layers 40, 50 may contain one alkaline earth metal element or may contain two or more alkaline earth metal elements.

The alkaline earth metal element can be selected, for example, from Mg, Ca, Sr, Ba, and the like, and is preferably selected from Ca, Sr, and Ba, and more preferably selected from Sr and Ba.

Alkaline earth metal elements have an action of oxidizing Rh and reducing CO and NOx purification performance of Rh. From the viewpoint of suppressing a decrease in CO and NOx purification performance of Rh caused by an alkaline earth metal element, a content of an alkaline earth metal element in terms of oxide in the catalyst layers 40, 50, based on the mass of the catalyst layers 40, 50, is preferably 10% by mass or less, more preferably 5% by mass or less, and still more preferably 3% by mass or less. The lower limit can be appropriately adjusted in consideration of a balance between CO and NOx purification performance and cost. The lower limit may be 0% by mass or may be more than 0% by mass. The lower limit may be, for example, 0.05% by mass or more, 0.1% by mass or more, or 0.15% by mass or more. Each of the above lower limits may be combined with any of the above upper limits.

The content of an alkaline earth metal element in terms of oxide in the catalyst layers 40, 50 can be determined in the same manner as the content of Ce in terms of CeO₂ in the first catalyst layer 20.

When the catalyst layers 40, 50 contain an alkaline earth metal element, the catalyst layers 40, 50 contain one or more alkaline earth metal element sources. Description of the alkaline earth metal element source is the same as described above.

The catalyst layers 40, 50 may contain other components such as a binder. Examples of the binder include inorganic oxide-based binders such as an alumina binder, a ceria binder, a zirconia binder, a titania binder, and a silica binder.

### <Manufacture of catalyst>

The catalyst 1A can be manufactured by forming the first catalyst layer 20 on the first substrate portion 10a, forming the second catalyst layer 30 on the second substrate portion 10b, forming the third catalyst layer 40 on the first catalyst layer 20, and forming the fourth catalyst layer 50 on the second catalyst layer 30. The third catalyst layer 40 and the fourth catalyst layer 50 may be formed on the first catalyst layer 20 and the second catalyst layer 30, respectively, after forming the first catalyst layer 20 and the second catalyst layer 30 on the first substrate portion 10a and the second substrate portion 10b, respectively. Alternatively, the first catalyst layer 20 may be formed on the first substrate portion 10a, the third catalyst layer 40 may be formed on the first catalyst layer 20, and thereafter the second catalyst layer 30 may be formed on the second substrate portion 10b and the fourth catalyst layer 50 may be formed on the second catalyst layer 30.

The first catalyst layer 20 can be formed by preparing a first slurry by mixing a noble metal element source (for example, a salt of a noble metal element such as Pd), and other components (for example, an inorganic oxide, a binder, a solvent, and the like), applying the first slurry onto the first substrate portion 10a, drying, and calcining.

The second catalyst layer 30 can be formed by preparing a second slurry by mixing a noble metal element source (for example, a salt of a noble metal element such as Pt), a Ce source (for example, a Ce-based oxide, a Ce-Zr-based complex oxide, a ceria binder, or the like), an alkaline earth metal element source (for example, an acetate, a nitrate, a hydroxide, a carbonate, a sulfate, or the like of an alkaline earth metal element), and other components (for example, an inorganic oxide other than the Ce source, a binder other than the Ce source, a solvent, and the like), applying the second slurry onto the second substrate portion 10b, drying, and calcining.

The third catalyst layer 40 can be formed by preparing a third slurry by mixing a noble metal element source (for example, a salt of a noble metal element such as Rh), and other components (for example, an inorganic oxide, a binder, a solvent, and the like), applying the third slurry onto the first catalyst layer 20, drying, and calcining.

The fourth catalyst layer 50 can be formed by preparing a fourth slurry by mixing a noble metal element source (for example, a salt of a noble metal element such as Rh), and other components (for example, an inorganic oxide, a binder, a solvent, and the like), applying the fourth slurry onto the second catalyst layer 30, drying, and calcining.

When the end on the exhaust gas outflow side of the third catalyst layer 40 and the end on the exhaust gas inflow side of the fourth catalyst layer 50 are continuous, that is, when the third catalyst layer 40 and the fourth catalyst layer 50 are integrated to form one catalyst layer, the integrated catalyst layer can be formed by preparing a fifth slurry by mixing a noble metal element source (for example, a salt of a noble metal element such as Rh), and other components (for example, an inorganic oxide, a binder, a solvent, and the like), applying the fifth slurry onto the first catalyst layer 20 and the second catalyst layer 30, drying, and calcining.

Examples of the noble metal element salt include nitrates, ammine complex salts, acetates, chlorides, and the like. Examples of the binder include an alumina binder, a zirconia binder, a titania binder, a silica binder, a ceria binder, and the like. Examples of the solvent include water, organic solvents, and the like.

A drying temperature is, for example, 70°C or more and 150°C or less, and a drying time is, for example, 5 minutes or more and 1 hour or less. A calcining temperature is, for example, 200°C or more and 700°C or less, and a calcining time is, for example, 0.5 hours or more and 5 hours or less. The calcining can be performed, for example, in an air atmosphere.

### <<Second Embodiment>>

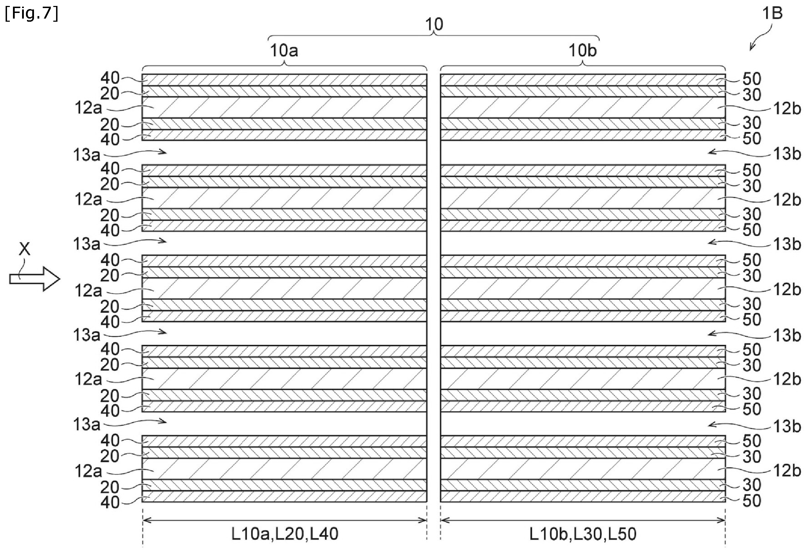

Hereinafter, an exhaust gas purification catalyst 1B according to a second embodiment (hereinafter referred to as "catalyst 1B") will be described with reference to Fig. 7.

In the catalyst 1B, members that are the same as those of the catalyst 1A are denoted by the same reference signs as those of the catalyst 1A. Unless otherwise specified below, the above description regarding the catalyst 1A also applies to the catalyst 1B.

The catalyst 1B differs from the catalyst 1A in that in the catalyst 1A, the first substrate portion 10a and the second substrate portion 10b are integrated, whereas in the catalyst 1B, the first substrate portion 10a and the second substrate portion 10b are separate.

The present invention includes both an embodiment in which the substrate 10 is constituted by one substrate as in the catalyst 1A and an embodiment in which the substrate 10 is constituted by two substrates as in the catalyst 1B.

As shown in Fig. 7, the first substrate portion 10a and the second substrate portion 10b are each disposed in the exhaust gas passage in the exhaust pipe P such that an axial direction of the first substrate portion 10a and an axial direction of the second substrate portion 10b coincide or substantially coincide with the exhaust gas flow direction X.

As shown in Fig. 7, the axial direction of the first substrate portion 10a and the axial direction of the second substrate portion 10b may coincide or substantially coincide with each other.

As shown in Fig. 7, a gap is formed between an end on the exhaust gas outflow side of the first substrate portion 10a and an end on the exhaust gas inflow side of the second substrate portion 10b. A distance between the end on the exhaust gas outflow side of the first substrate portion 10a and the end on the exhaust gas inflow side of the second substrate portion 10b is, for example, 5 mm to 1000 mm.

The expression "the substrate 10 extends in the exhaust gas flow direction X" includes an embodiment in which a gap is formed between the end on the exhaust gas outflow side of the first substrate portion 10a and the end on the exhaust gas inflow side of the second substrate portion 10b, and the axial directions of the first substrate portion 10a and the second substrate portion 10b coincide or substantially coincide with the exhaust gas flow direction X.

The end on the exhaust gas outflow side of the first substrate portion 10a and the end on the exhaust gas inflow side of the second substrate portion 10b may be in contact with each other. In this case, an arrangement of the first substrate portion 10a and the second substrate portion 10b may be the same as, for example, the arrangement shown in Fig. 6.

### EXAMPLES

### <Example 1A>

### (1) Preparation of slurry for forming first catalyst layer

To pure water, a palladium nitrate aqueous solution in an amount corresponding to 0.9 parts by mass in terms of Pd metal, a Ce-Zr-based complex oxide (content of Ce in terms of CeO₂: 40% by mass, content of Zr in terms of ZrO₂: 50% by mass, content of oxides of one or more rare earth elements other than Ce: 10% by mass) in an amount of 41.2 parts by mass, La₂O₃-modified alumina (La₂O₃ modification amount: 1% by mass) in an amount of 44.0 parts by mass, barium hydroxide in an amount corresponding to 4.6 parts by mass in terms of BaO (5.9 parts by mass in terms of BaCO₃), and a binder in an amount corresponding to 8.0 parts by mass in terms of solid content were added, followed by mixing and stirring to prepare a slurry for forming a first catalyst layer.

### (2) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 20% by mass, content of Zr in terms of ZrO₂: 70% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

### (3) Formation of first catalyst layer and second catalyst layer

As a substrate, a cordierite-made honeycomb porous substrate having axially extending cells partitioned by partition walls having a thickness of 95 µm to 125 µm (manufactured by NGK Insulators, Ltd., axial length: 120 mm, outer diameter: 83 mm, volume: 0.65 L, cell density: 600 cells per square inch) was prepared.

The portion of the substrate from an upstream end in the exhaust gas flow direction X to a position 40 mm downstream was immersed in the slurry for forming the first catalyst layer, and the slurry for forming the first catalyst layer was applied to an upstream side of the substrate. Next, the portion of the substrate from a downstream end in the exhaust gas flow direction X to a position 80 mm upstream was immersed in the slurry for forming the second catalyst layer, and the slurry for forming the second catalyst layer was applied to a downstream side of the substrate. Thereafter, the substrate coated with the slurry for forming the first catalyst layer and the slurry for forming the second catalyst layer was dried at 90°C and then calcined at 450°C. As a result, the first catalyst layer and the second catalyst layer were formed on the substrate without a gap in the exhaust gas flow direction X, that is, such that an end on the exhaust gas outflow side of the first catalyst layer and an end on the exhaust gas inflow side of the second catalyst layer were in contact with each other. The mass of the first catalyst layer per unit volume of a portion of the substrate on which the first catalyst layer was provided (washcoat amount) was 170 g/L. The mass of the second catalyst layer per unit volume of a portion of the substrate on which the second catalyst layer was provided (washcoat amount) was 170 g/L. The washcoat amount refers to a mass of the catalyst layer after calcining (the same applies hereinafter). Note that barium hydroxide in the slurry was converted into barium oxide by calcining, and the barium oxide reacted with CO₂ in air to be converted into barium carbonate.

### (4) Preparation of slurry for forming third catalyst layer and fourth catalyst layer

To pure water, a rhodium nitrate aqueous solution in an amount corresponding to 0.2 parts by mass in terms of Rh metal, a Ce-Zr-based complex oxide (content of Ce in terms of CeO₂: 15% by mass, content of Zr in terms of ZrO₂: 70% by mass, content of oxides of one or more rare earth elements other than Ce: 15% by mass) in an amount of 66.7 parts by mass, La₂O₃-modified alumina (La₂O₃ modification amount: 1% by mass) in an amount of 22.7 parts by mass, barium hydroxide in an amount corresponding to 0.3 parts by mass in terms of BaO (0.4 parts by mass in terms of BaCO₃), and a binder in an amount corresponding to 10.0 parts by mass in terms of solid content were added, followed by mixing and stirring to prepare a slurry for forming a third catalyst layer and a fourth catalyst layer.

### (5) Formation of third catalyst layer and fourth catalyst layer

The entire substrate on which the first catalyst layer and the second catalyst layer had been formed was immersed in the slurry for forming the third catalyst layer and the fourth catalyst layer, and the slurry for forming the third catalyst layer and the fourth catalyst layer were applied to the entire substrate on which the first catalyst layer and the second catalyst layer had been formed. Thereafter, the substrate coated with the slurry for forming the third catalyst layer and the fourth catalyst layer was dried at 90°C and then calcined at 450°C. As a result, the third catalyst layer and the fourth catalyst layer were formed on the first catalyst layer and the second catalyst layer, respectively, without a gap in the exhaust gas flow direction X, that is, such that an end on the exhaust gas outflow side of the third catalyst layer and an end on the exhaust gas inflow side of the fourth catalyst layer were continuous with each other and the third catalyst layer 40 and the fourth catalyst layer 50 were integrated to form one catalyst layer. The mass of the third catalyst layer per unit volume of a portion of the substrate on which the third catalyst layer was provided (washcoat amount) was 60 g/L. The mass of the fourth catalyst layer per unit volume of a portion of the substrate on which the fourth catalyst layer was provided (washcoat amount) was 60 g/L.

As described above, an exhaust gas purification catalyst of Example 1A including a substrate, a first catalyst layer provided on an upstream side of the substrate, a second catalyst layer provided on a downstream side of the substrate, a third catalyst layer provided on an upper side of the first catalyst layer, and a fourth catalyst layer provided on an upper side of the second catalyst layer was produced.

In the first catalyst layer of the exhaust gas purification catalyst of Example 1A, a mass of Pd in terms of metal was 1.5 g/L based on a volume of a portion of the substrate on which the first catalyst layer was provided.

In the second catalyst layer of the exhaust gas purification catalyst of Example 1A, a mass of Pt in terms of metal, a mass of Ce in terms of CeO₂, and a mass of Ba in terms of BaO were 2.5 g/L, 17.4 g/L, and 7.8 g/L, respectively, based on a volume of a portion of the substrate on which the second catalyst layer was provided. In the second catalyst layer of the exhaust gas purification catalyst of Example 1A, a ratio of the mass of Ce in terms of CeO₂ to the mass of Pt in terms of metal was 7.0, and a ratio of the mass of Ce in terms of CeO₂ to the mass of Ba in terms of BaO was 2.2.

In the third catalyst layer of the exhaust gas purification catalyst of Example 1A, a mass of Rh in terms of metal was 0.1 g/L based on a volume of a portion of the substrate on which the third catalyst layer was provided.

In the fourth catalyst layer of the exhaust gas purification catalyst of Example 1A, a mass of Rh in terms of metal was 0.1 g/L based on a volume of a portion of the substrate on which the fourth catalyst layer was provided.

### <Example 2A>

### (A) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 30% by mass, content of Zr in terms of ZrO₂: 60% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 2A was produced in the same manner as in Example 1A except that the slurry for forming the second catalyst layer prepared in (A) above was used.

In the second catalyst layer of the exhaust gas purification catalyst of Example 2A, a mass of Pt in terms of metal, a mass of Ce in terms of CeO₂, and a mass of Ba in terms of BaO were 2.5 g/L, 24.4 g/L, and 7.8 g/L, respectively, based on a volume of a portion of the substrate on which the second catalyst layer was provided. In the second catalyst layer of the exhaust gas purification catalyst of Example 2A, a ratio of the mass of Ce in terms of CeO₂ to the mass of Pt in terms of metal was 9.8, and a ratio of the mass of Ce in terms of CeO₂ to the mass of Ba in terms of BaO was 3.1.

### <Example 3A>

### (B) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 3A was produced in the same manner as in Example 1A except that the slurry for forming the second catalyst layer prepared in (B) above was used.

In the second catalyst layer of the exhaust gas purification catalyst of Example 3A, a mass of Pt in terms of metal, a mass of Ce in terms of CeO₂, and a mass of Ba in terms of BaO were 2.5 g/L, 31.4 g/L, and 7.8 g/L, respectively, based on a volume of a portion of the substrate on which the second catalyst layer was provided. In the second catalyst layer of the exhaust gas purification catalyst of Example 3A, a ratio of the mass of Ce in terms of CeO₂ to the mass of Pt in terms of metal was 12.6, and a ratio of the mass of Ce in terms of CeO₂ to the mass of Ba in terms of BaO was 4.0.

### <Example 4A>

### (C) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 50% by mass, content of Zr in terms of ZrO₂: 40% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 4A was produced in the same manner as in Example 1A except that the slurry for forming the second catalyst layer prepared in (C) above was used.

In the second catalyst layer of the exhaust gas purification catalyst of Example 4A, a mass of Pt in terms of metal, a mass of Ce in terms of CeO₂, and a mass of Ba in terms of BaO were 2.5 g/L, 38.4 g/L, and 7.8 g/L, respectively, based on a volume of a portion of the substrate on which the second catalyst layer was provided. In the second catalyst layer of the exhaust gas purification catalyst of Example 4A, a ratio of the mass of Ce in terms of CeO₂ to the mass of Pt in terms of metal was 15.4, and a ratio of the mass of Ce in terms of CeO₂ to the mass of Ba in terms of BaO was 4.9.

### <Example 5A>

### (D) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 55% by mass, content of Zr in terms of ZrO₂: 35% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 5A was produced in the same manner as in Example 1A except that the slurry for forming the second catalyst layer prepared in (D) above was used.

In the second catalyst layer of the exhaust gas purification catalyst of Example 5A, a mass of Pt in terms of metal, a mass of Ce in terms of CeO₂, and a mass of Ba in terms of BaO were 2.5 g/L, 41.9 g/L, and 7.8 g/L, respectively, based on a volume of a portion of the substrate on which the second catalyst layer was provided. In the second catalyst layer of the exhaust gas purification catalyst of Example 5A, a ratio of the mass of Ce in terms of CeO₂ to the mass of Pt in terms of metal was 16.8, and a ratio of the mass of Ce in terms of CeO₂ to the mass of Ba in terms of BaO was 5.4.

### <Example 6A>

### (E) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 60% by mass, content of Zr in terms of ZrO₂: 30% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 6A was produced in the same manner as in Example 1A except that the slurry for forming the second catalyst layer prepared in (E) above was used.

In the second catalyst layer of the exhaust gas purification catalyst of Example 6A, a mass of Pt in terms of metal, a mass of Ce in terms of CeO₂, and a mass of Ba in terms of BaO were 2.5 g/L, 45.4 g/L, and 7.8 g/L, respectively, based on a volume of a portion of the substrate on which the second catalyst layer was provided. In the second catalyst layer of the exhaust gas purification catalyst of Example 6A, a ratio of the mass of Ce in terms of CeO₂ to the mass of Pt in terms of metal was 18.2, and a ratio of the mass of Ce in terms of CeO₂ to the mass of Ba in terms of BaO was 5.8.

### <Example 7A>

### (F) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 65% by mass, content of Zr in terms of ZrO₂: 25% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 7A was produced in the same manner as in Example 1A except that the slurry for forming the second catalyst layer prepared in (F) above was used.

In the second catalyst layer of the exhaust gas purification catalyst of Example 7A, a mass of Pt in terms of metal, a mass of Ce in terms of CeO₂, and a mass of Ba in terms of BaO were 2.5 g/L, 48.9 g/L, and 7.8 g/L, respectively, based on a volume of a portion of the substrate on which the second catalyst layer was provided. In the second catalyst layer of the exhaust gas purification catalyst of Example 7A, a ratio of the mass of Ce in terms of CeO₂ to the mass of Pt in terms of metal was 19.6, and a ratio of the mass of Ce in terms of CeO₂ to the mass of Ba in terms of BaO was 6.3.

### <Example 8A>

### (G) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 30% by mass, content of Zr in terms of ZrO₂: 60% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium sulfate in an amount corresponding to 3.9 parts by mass in terms of BaO (5.9 parts by mass in terms of BaSO₄), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 8A was produced in the same manner as in Example 1A except that the slurry for forming the second catalyst layer prepared in (G) above was used.

In the second catalyst layer of the exhaust gas purification catalyst of Example 8A, a mass of Pt in terms of metal, a mass of Ce in terms of CeO₂, and a mass of Ba in terms of BaO were 2.5 g/L, 24.4 g/L, and 6.6 g/L, respectively, based on a volume of a portion of the substrate on which the second catalyst layer was provided. In the second catalyst layer of the exhaust gas purification catalyst of Example 8A, a ratio of the mass of Ce in terms of CeO₂ to the mass of Pt in terms of metal was 9.8, and a ratio of the mass of Ce in terms of CeO₂ to the mass of Ba in terms of BaO was 3.7.

### <Example 9A>

### (H) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 30.9 parts by mass, La₂O₃-modified alumina as a second carrier (La₂O₃ modification amount: 1% by mass) in an amount of 53.7 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 9A was produced in the same manner as in Example 1A except that the slurry for forming the second catalyst layer prepared in (H) above was used.

In the second catalyst layer of the exhaust gas purification catalyst of Example 9A, a mass of Pt in terms of metal, a mass of Ce in terms of CeO₂, and a mass of Ba in terms of BaO were 2.5 g/L, 24.4 g/L, and 7.8 g/L, respectively, based on a volume of a portion of the substrate on which the second catalyst layer was provided. In the second catalyst layer of the exhaust gas purification catalyst of Example 9A, a ratio of the mass of Ce in terms of CeO₂ to the mass of Pt in terms of metal was 9.8, and a ratio of the mass of Ce in terms of CeO₂ to the mass of Ba in terms of BaO was 3.1.

### <Example 10A>

### (I) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 58.8 parts by mass, La₂O₃-modified alumina as a second carrier (La₂O₃ modification amount: 1% by mass) in an amount of 25.8 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Example 10A was produced in the same manner as in Example 1A except that the slurry for forming the second catalyst layer prepared in (I) above was used.

In the second catalyst layer of the exhaust gas purification catalyst of Example 10A, a mass of Pt in terms of metal, a mass of Ce in terms of CeO₂, and a mass of Ba in terms of BaO were 2.5 g/L, 43.4 g/L, and 7.8 g/L, respectively, based on a volume of a portion of the substrate on which the second catalyst layer was provided. In the second catalyst layer of the exhaust gas purification catalyst of Example 10A, a ratio of the mass of Ce in terms of CeO₂ to the mass of Pt in terms of metal was 17.4, and a ratio of the mass of Ce in terms of CeO₂ to the mass of Ba in terms of BaO was 5.6.

### <Example 11A>

### (J) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 59.9 parts by mass, La₂O₃-modified alumina as a second carrier (La₂O₃ modification amount: 1% by mass) in an amount of 26.3 parts by mass, barium hydroxide in an amount corresponding to 3.3 parts by mass in terms of BaO (4.2 parts by mass in terms of BaCO₃), a ceria binder in an amount corresponding to 2.0 parts by mass in terms of solid content, and a binder not containing Ce in an amount corresponding to 6.1 parts by mass in terms of solid content were added, followed by mixing and stirring to prepare a slurry for forming a second catalyst layer.

An exhaust gas purification catalyst of Example 11A was produced in the same manner as in Example 1A except that the slurry for forming the second catalyst layer prepared in (J) above was used and that the washcoat amount of the second catalyst layer was set to 167 g/L.

In the second catalyst layer of the exhaust gas purification catalyst of Example 11A, a mass of Pt in terms of metal, a mass of Ce in terms of CeO₂, and a mass of Ba in terms of BaO were 2.5 g/L, 43.4 g/L, and 5.4 g/L, respectively, based on a volume of a portion of the substrate on which the second catalyst layer was provided. In the second catalyst layer of the exhaust gas purification catalyst of Example 11A, a ratio of the mass of Ce in terms of CeO₂ to the mass of Pt in terms of metal was 17.4, and a ratio of the mass of Ce in terms of CeO₂ to the mass of Ba in terms of BaO was 8.0.

### <Example 12A>

### (K) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 60.6 parts by mass, La₂O₃-modified alumina as a second carrier (La₂O₃ modification amount: 1% by mass) in an amount of 26.6 parts by mass, barium hydroxide in an amount corresponding to 2.4 parts by mass in terms of BaO (3.0 parts by mass in terms of BaCO₃), a ceria binder in an amount corresponding to 2.1 parts by mass in terms of solid content, and a binder not containing Ce in an amount corresponding to 6.2 parts by mass in terms of solid content were added, followed by mixing and stirring to prepare a slurry for forming a second catalyst layer.

An exhaust gas purification catalyst of Example 12A was produced in the same manner as in Example 1A except that the slurry for forming the second catalyst layer prepared in (K) above was used and that the washcoat amount of the second catalyst layer was set to 165 g/L.

In the second catalyst layer of the exhaust gas purification catalyst of Example 12A, a mass of Pt in terms of metal, a mass of Ce in terms of CeO₂, and a mass of Ba in terms of BaO were 2.5 g/L, 43.4 g/L, and 3.9 g/L, respectively, based on a volume of a portion of the substrate on which the second catalyst layer was provided. In the second catalyst layer of the exhaust gas purification catalyst of Example 12A, a ratio of the mass of Ce in terms of CeO₂ to the mass of Pt in terms of metal was 17.4, and a ratio of the mass of Ce in terms of CeO₂ to the mass of Ba in terms of BaO was 11.2.

### <Comparative Example 1A>

### (L) Preparation of slurry for forming second catalyst layer

To pure water, a diamminedinitroplatinum (II) solution in an amount corresponding to 1.5 parts by mass in terms of Pt metal, a Zr-based oxide as a first carrier (content of Zr in terms of ZrO₂: 90% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Comparative Example 1A was produced in the same manner as in Example 1A except that the slurry for forming the second catalyst layer prepared in (L) above was used.

In the second catalyst layer of the exhaust gas purification catalyst of Comparative Example 1A, a mass of Pt in terms of metal, a mass of Ce in terms of CeO₂, and a mass of Ba in terms of BaO were 2.5 g/L, 3.4 g/L, and 7.8 g/L, respectively, based on a volume of a portion of the substrate on which the second catalyst layer was provided. In the second catalyst layer of the exhaust gas purification catalyst of Comparative Example 1A, a ratio of the mass of Ce in terms of CeO₂ to the mass of Pt in terms of metal was 1.4, and a ratio of the mass of Ce in terms of CeO₂ to the mass of Ba in terms of BaO was 0.4.

### <Comparative Example 2A>

### (M) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 15% by mass, content of Zr in terms of ZrO₂: 75% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Comparative Example 2A was produced in the same manner as in Example 1A except that the slurry for forming the second catalyst layer prepared in (M) above was used.

In the second catalyst layer of the exhaust gas purification catalyst of Comparative Example 2A, a mass of Pt in terms of metal, a mass of Ce in terms of CeO₂, and a mass of Ba in terms of BaO were 2.5 g/L, 13.9 g/L, and 7.8 g/L, respectively, based on a volume of a portion of the substrate on which the second catalyst layer was provided. In the second catalyst layer of the exhaust gas purification catalyst of Comparative Example 2A, a ratio of the mass of Ce in terms of CeO₂ to the mass of Pt in terms of metal was 5.6, and a ratio of the mass of Ce in terms of CeO₂ to the mass of Ba in terms of BaO was 1.8.

### <Comparative Example 3A>

### (N) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 80% by mass, content of Zr in terms of ZrO₂: 10% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Comparative Example 3A was produced in the same manner as in Example 1A except that the slurry for forming the second catalyst layer prepared in (N) above was used.

In the second catalyst layer of the exhaust gas purification catalyst of Comparative Example 3A, a mass of Pt in terms of metal, a mass of Ce in terms of CeO₂, and a mass of Ba in terms of BaO were 2.5 g/L, 59.4 g/L, and 7.8 g/L, respectively, based on a volume of a portion of the substrate on which the second catalyst layer was provided. In the second catalyst layer of the exhaust gas purification catalyst of Comparative Example 3A, a ratio of the mass of Ce in terms of CeO₂ to the mass of Pt in terms of metal was 23.8, and a ratio of the mass of Ce in terms of CeO₂ to the mass of Ba in terms of BaO was 7.6.

### <Comparative Example 4A>

### (O) Preparation of slurry for forming second catalyst layer

To pure water, a diamminedinitroplatinum (II) solution in an amount corresponding to 1.5 parts by mass in terms of Pt metal, a Ce-based oxide as a first carrier (content of Ce in terms of CeO₂: 95% by mass, content of oxides of one or more rare earth elements other than Ce: 5% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Comparative Example 4A was produced in the same manner as in Example 1A except that the slurry for forming the second catalyst layer prepared in (O) above was used.

In the second catalyst layer of the exhaust gas purification catalyst of Comparative Example 4A, a mass of Pt in terms of metal, a mass of Ce in terms of CeO₂, and a mass of Ba in terms of BaO were 2.5 g/L, 69.9 g/L, and 7.8 g/L, respectively, based on a volume of a portion of the substrate on which the second catalyst layer was provided. In the second catalyst layer of the exhaust gas purification catalyst of Comparative Example 4A, a ratio of the mass of Ce in terms of CeO₂ to the mass of Pt in terms of metal was 28.0, and a ratio of the mass of Ce in terms of CeO₂ to the mass of Ba in terms of BaO was 9.0.

### <Comparative Example 5A>

### (P) Preparation of slurry for forming second catalyst layer

To pure water, a diamminedinitroplatinum (II) solution in an amount corresponding to 1.5 parts by mass in terms of Pt metal, a Ce-based oxide as a first carrier (content of Ce in terms of CeO₂: 100% by mass) in an amount of 41.2 parts by mass, La₂O₃-modified alumina as a second carrier (La₂O₃ modification amount: 1% by mass) in an amount of 43.4 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Comparative Example 5A was produced in the same manner as in Example 1A except that the slurry for forming the second catalyst layer prepared in (P) above was used.

In the second catalyst layer of the exhaust gas purification catalyst of Comparative Example 5A, a mass of Pt in terms of metal, a mass of Ce in terms of CeO₂, and a mass of Ba in terms of BaO were 2.5 g/L, 73.4 g/L, and 7.8 g/L, respectively, based on a volume of a portion of the substrate on which the second catalyst layer was provided. In the second catalyst layer of the exhaust gas purification catalyst of Comparative Example 5A, a ratio of the mass of Ce in terms of CeO₂ to the mass of Pt in terms of metal was 29.4, and a ratio of the mass of Ce in terms of CeO₂ to the mass of Ba in terms of BaO was 9.4.

### <Comparative Example 6A>

### (Q) Preparation of slurry for forming second catalyst layer

To pure water, a diamminedinitroplatinum (II) solution in an amount corresponding to 1.6 parts by mass in terms of Pt metal, a Ce-Zr-based complex oxide as a first carrier (content of Ce in terms of CeO₂: 30% by mass, content of Zr in terms of ZrO₂: 60% by mass, content of oxides of one or more rare earth elements other than Ce: 10% by mass) in an amount of 43.8 parts by mass, La₂O₃-modified alumina as a second carrier (La₂O₃ modification amount: 1% by mass) in an amount of 46.1 parts by mass, a ceria binder in an amount corresponding to 2.1 parts by mass in terms of solid content, and a binder not containing Ce in an amount corresponding to 6.4 parts by mass in terms of solid content were added, followed by mixing and stirring to prepare a slurry for forming a second catalyst layer.

An exhaust gas purification catalyst of Comparative Example 6A was produced in the same manner as in Example 1A except that the slurry for forming the second catalyst layer prepared in (Q) above was used and that the washcoat amount of the second catalyst layer was set to 160 g/L.

In the second catalyst layer of the exhaust gas purification catalyst of Comparative Example 6A, a mass of Pt in terms of metal and a mass of Ce in terms of CeO₂ were 2.5 g/L and 24.4 g/L, respectively, based on a volume of a portion of the substrate on which the second catalyst layer was provided. In the second catalyst layer of the exhaust gas purification catalyst of Comparative Example 6A, a ratio of the mass of Ce in terms of CeO₂ to the mass of Pt in terms of metal was 9.8.

### <Comparative Example 7A>

### (R) Preparation of slurry for forming second catalyst layer

To pure water, a diamminedinitroplatinum (II) solution in an amount corresponding to 1.5 parts by mass in terms of Pt metal, La₂O₃-modified alumina as a second carrier (La₂O₃ modification amount: 1% by mass) in an amount of 84.6 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer. Note that the slurry for forming the second catalyst layer contains none of a Ce-based oxide, a Ce-Zr-based complex oxide, and a Zr-based oxide, each of which corresponds to a first carrier.

An exhaust gas purification catalyst of Comparative Example 7A was produced in the same manner as in Example 1A except that the slurry for forming the second catalyst layer prepared in (R) above was used.

In the second catalyst layer of the exhaust gas purification catalyst of Comparative Example 7A, a mass of Pt in terms of metal, a mass of Ce in terms of CeO₂, and a mass of Ba in terms of BaO were 2.5 g/L, 3.4 g/L, and 7.8 g/L, respectively, based on a volume of a portion of the substrate on which the second catalyst layer was provided. In the second catalyst layer of the exhaust gas purification catalyst of Comparative Example 7A, a ratio of the mass of Ce in terms of CeO₂ to the mass of Pt in terms of metal was 1.4, and a ratio of the mass of Ce in terms of CeO₂ to the mass of Ba in terms of BaO was 0.4.

### <Comparative Example 8A>

### (S) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 15.4 parts by mass, La₂O₃-modified alumina as a second carrier (La₂O₃ modification amount: 1% by mass) in an amount of 69.2 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Comparative Example 8A was produced in the same manner as in Example 1A except that the slurry for forming the second catalyst layer prepared in (S) above was used.

In the second catalyst layer of the exhaust gas purification catalyst of Comparative Example 8A, a mass of Pt in terms of metal, a mass of Ce in terms of CeO₂, and a mass of Ba in terms of BaO were 2.5 g/L, 13.9 g/L, and 7.8 g/L, respectively, based on a volume of a portion of the substrate on which the second catalyst layer was provided. In the second catalyst layer of the exhaust gas purification catalyst of Comparative Example 8A, a ratio of the mass of Ce in terms of CeO₂ to the mass of Pt in terms of metal was 5.6, and a ratio of the mass of Ce in terms of CeO₂ to the mass of Ba in terms of BaO was 1.8.

### <Comparative Example 9A>

### (T) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 82.4 parts by mass, La₂O₃-modified alumina as a second carrier (La₂O₃ modification amount: 1% by mass) in an amount of 2.2 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

An exhaust gas purification catalyst of Comparative Example 9A was produced in the same manner as in Example 1A except that the slurry for forming the second catalyst layer prepared in (T) above was used.

In the second catalyst layer of the exhaust gas purification catalyst of Comparative Example 9A, a mass of Pt in terms of metal, a mass of Ce in terms of CeO₂, and a mass of Ba in terms of BaO were 2.5 g/L, 59.4 g/L, and 7.8 g/L, respectively, based on a volume of a portion of the substrate on which the second catalyst layer was provided. In the second catalyst layer of the exhaust gas purification catalyst of Comparative Example 9A, a ratio of the mass of Ce in terms of CeO₂ to the mass of Pt in terms of metal was 23.8, and a ratio of the mass of Ce in terms of CeO₂ to the mass of Ba in terms of BaO was 7.6.

### <Comparative Example 10A>

### (U) Preparation of slurry for forming second catalyst layer

To pure water, a diamminedinitroplatinum (II) solution in an amount corresponding to 1.5 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 61.3 parts by mass, La₂O₃-modified alumina as a second carrier (La₂O₃ modification amount: 1% by mass) in an amount of 27.0 parts by mass, barium hydroxide in an amount corresponding to 1.4 parts by mass in terms of BaO (1.8 parts by mass in terms of BaCO₃), a ceria binder in an amount corresponding to 2.1 parts by mass in terms of solid content, and a binder not containing Ce in an amount corresponding to 6.3 parts by mass in terms of solid content were added, followed by mixing and stirring to prepare a slurry for forming a second catalyst layer.

An exhaust gas purification catalyst of Comparative Example 10A was produced in the same manner as in Example 1A except that the slurry for forming the second catalyst layer prepared in (U) above was used and that the washcoat amount of the second catalyst layer was set to 163 g/L.

In the second catalyst layer of the exhaust gas purification catalyst of Comparative Example 10A, a mass of Pt in terms of metal, a mass of Ce in terms of CeO₂, and a mass of Ba in terms of BaO were 2.5 g/L, 43.4 g/L, and 2.3 g/L, respectively, based on a volume of a portion of the substrate on which the second catalyst layer was provided. In the second catalyst layer of the exhaust gas purification catalyst of Comparative Example 10A, a ratio of the mass of Ce in terms of CeO₂ to the mass of Pt in terms of metal was 17.4, and a ratio of the mass of Ce in terms of CeO₂ to the mass of Ba in terms of BaO was 18.6.

### <Comparative Example 11A>

### (V) Preparation of slurry for forming second catalyst layer

To pure water, a diamminedinitroplatinum (II) solution in an amount corresponding to 1.6 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 62.1 parts by mass, La₂O₃-modified alumina as a second carrier (La₂O₃ modification amount: 1% by mass) in an amount of 27.3 parts by mass, barium hydroxide in an amount corresponding to 0.5 parts by mass in terms of BaO (0.6 parts by mass in terms of BaCO₃), a ceria binder in an amount corresponding to 2.1 parts by mass in terms of solid content, and a binder not containing Ce in an amount corresponding to 6.3 parts by mass in terms of solid content were added, followed by mixing and stirring to prepare a slurry for forming a second catalyst layer.

An exhaust gas purification catalyst of Comparative Example 11A was produced in the same manner as in Example 1A except that the slurry for forming the second catalyst layer prepared in (V) above was used and that the washcoat amount of the second catalyst layer was set to 161 g/L.

In the second catalyst layer of the exhaust gas purification catalyst of Comparative Example 11A, a mass of Pt in terms of metal, a mass of Ce in terms of CeO₂, and a mass of Ba in terms of BaO were 2.5 g/L, 43.4 g/L, and 0.8 g/L, respectively, based on a volume of a portion of the substrate on which the second catalyst layer was provided. In the second catalyst layer of the exhaust gas purification catalyst of Comparative Example 11A, a ratio of the mass of Ce in terms of CeO₂ to the mass of Pt in terms of metal was 17.4, and a ratio of the mass of Ce in terms of CeO₂ to the mass of Ba in terms of BaO was 55.9.

### <Example 1B>

The same exhaust gas purification catalyst as that of Example 3A was used as the exhaust gas purification catalyst of Example 1B.

### <Example 2B>

### (W) Preparation of slurry for forming second catalyst layer

To pure water, a diamminedinitroplatinum (II) solution in an amount corresponding to 1.4 parts by mass in terms of Pt metal, a Ce-Zr-based complex oxide as a first carrier (content of Ce in terms of CeO₂: 40% by mass, content of Zr in terms of ZrO₂: 50% by mass, content of oxides of one or more rare earth elements other than Ce: 10% by mass) in an amount of 41.2 parts by mass, La₂O₃-modified alumina as a second carrier (La₂O₃ modification amount: 1% by mass) in an amount of 43.5 parts by mass, barium hydroxide in an amount corresponding to 4.6 parts by mass in terms of BaO (5.9 parts by mass in terms of BaCO₃), a ceria binder in an amount corresponding to 2.0 parts by mass in terms of solid content, and a binder not containing Ce in an amount corresponding to 6.0 parts by mass in terms of solid content were added, followed by mixing and stirring to prepare a slurry for forming a second catalyst layer.

### (X) Preparation of slurry for forming third catalyst layer and fourth catalyst layer

To pure water, a rhodium nitrate aqueous solution in an amount corresponding to 0.2 parts by mass in terms of Rh metal, a diamminedinitroplatinum (II) solution in an amount corresponding to 0.2 parts by mass in terms of Pt metal, a Ce-Zr-based complex oxide (content of Ce in terms of CeO₂: 15% by mass, content of Zr in terms of ZrO₂: 70% by mass, content of oxides of one or more rare earth elements other than Ce: 15% by mass) in an amount of 66.7 parts by mass, La₂O₃-modified alumina (La₂O₃ modification amount: 1% by mass) in an amount of 22.5 parts by mass, barium hydroxide in an amount corresponding to 0.3 parts by mass in terms of BaO (0.4 parts by mass in terms of BaCO₃), and a binder in an amount corresponding to 10.0 parts by mass in terms of solid content were added, followed by mixing and stirring to prepare a slurry for forming a third catalyst layer and a fourth catalyst layer.

An exhaust gas purification catalyst of Example 2B was produced in the same manner as in Example 1A except that the slurry for forming the second catalyst layer prepared in (W) above and the slurry for forming the third catalyst layer and the fourth catalyst layer prepared in (X) above were used.

In the second catalyst layer of the exhaust gas purification catalyst of Example 2B, a mass of Pt in terms of metal, a mass of Ce in terms of CeO₂, and a mass of Ba in terms of BaO were 2.4 g/L, 31.4 g/L, and 7.8 g/L, respectively, based on a volume of a portion of the substrate on which the second catalyst layer was provided. In the second catalyst layer of the exhaust gas purification catalyst of Example 2B, a ratio of the mass of Ce in terms of CeO₂ to the mass of Pt in terms of metal was 13.1, and a ratio of the mass of Ce in terms of CeO₂ to the mass of Ba in terms of BaO was 4.0.

In the third catalyst layer of the exhaust gas purification catalyst of Example 2B, a mass of Rh in terms of metal and a mass of Pt in terms of metal were 0.1 g/L and 0.1 g/L, respectively, based on a volume of a portion of the substrate on which the third catalyst layer was provided. Percentage Q2 in the third catalyst layer was 67.2% by mass.

In the fourth catalyst layer of the exhaust gas purification catalyst of Example 2B, a mass of Rh in terms of metal and a mass of Pt in terms of metal were 0.1 g/L and 0.1 g/L, respectively, based on a volume of a portion of the substrate on which the fourth catalyst layer was provided. Percentage Q2 in the fourth catalyst layer was 67.2% by mass.

### <Comparative Example 1B>

The same exhaust gas purification catalyst as that of Comparative Example 6A was used as the exhaust gas purification catalyst of Comparative Example 1B.

Characteristics of the first catalyst layer, the third catalyst layer, and the fourth catalyst layer of each exhaust gas purification catalyst are shown in Tables 1A and 1B. In Tables 1A and 1B, "WC" represents a mass of each catalyst layer per unit volume of a portion of the substrate on which each catalyst layer is provided (washcoat amount), "Pd content" represents a content of Pd in terms of metal in the first catalyst layer based on the mass of the first catalyst layer, "Rh content" represents a content of Rh in terms of metal in the third catalyst layer or the fourth catalyst layer based on the mass of the third catalyst layer or the fourth catalyst layer, and "Pt content" represents a content of Pt in terms of metal in the third catalyst layer or the fourth catalyst layer based on the mass of the third catalyst layer or the fourth catalyst layer.

Characteristics of the second catalyst layer of each exhaust gas purification catalyst are shown in Tables 2A, 2B, and 2C. In Tables 2A, 2B, and 2C, "WC" represents a mass of the second catalyst layer per unit volume of a portion of the substrate on which the second catalyst layer is provided (washcoat amount), "Pt" represents a mass of Pt in terms of metal in the second catalyst layer based on a volume of a portion of the substrate on which the second catalyst layer is provided, "CeO₂" represents a mass of Ce in terms of CeO₂ in the second catalyst layer based on a volume of a portion of the substrate on which the second catalyst layer is provided, "BaO" represents a mass of Ba in terms of BaO in the second catalyst layer based on a volume of a portion of the substrate on which the second catalyst layer is provided, "CeO₂ / Pt" represents a ratio of the mass of Ce in terms of CeO₂ to the mass of Pt in terms of metal in the second catalyst layer, "CeO₂ / BaO" represents a ratio of the mass of Ce in terms of CeO₂ to the mass of Ba in terms of BaO in the second catalyst layer, "type" of "first carrier" represents a type of an oxide used as the first carrier (Ce-Zr-based complex oxide, Ce-based oxide, or Zr-based oxide), "CeO₂ content" of "first carrier" represents a content of Ce in terms of CeO₂ in the first carrier based on the mass of the first carrier, "amount" of "first carrier" represents a content of the first carrier in the second catalyst layer based on the mass of the second catalyst layer, and "amount" of "ceria binder" represents a content of the ceria binder in the second catalyst layer based on the mass of the second catalyst layer. In the "type" of the "first carrier", "CZ" represents a Ce-Zr-based complex oxide, "Ce" represents a Ce-based oxide, and "Zr" represents a Zr-based oxide.

### <Test Example 1>

### (1) Durability treatment

Each of the exhaust gas purification catalysts of Examples 1A to 12A and Comparative Examples 1A to 11A was mounted in an exhaust pipe, the exhaust pipe was set on a gasoline engine, an engine speed, torque, and the like were adjusted so that a catalyst temperature became 950°C, and durability treatment was performed for 50 hours.

### (2) Evaluation of model gas purification performance

After the durability treatment, each exhaust gas purification catalyst was cut into a size of 12 cells x 12 cells x 120 mm, placed in piping, and while an exhaust model gas (CO: 0.26 vol%, O₂: 0.10 vol%, NO: 900 vol ppm, CH₄: 700 vol ppm, CO₂: 4.4 vol%, H₂O: 10 vol%, N₂: balance) was passed at a space velocity of 100000 per hour, a temperature was increased to 600°C at a heating rate of 30°C per minute and held for 10 minutes. Thereafter, an amount of methane contained in gas flowing out from an outlet of the piping was detected using an engine exhaust gas analyzer MEXA7100 manufactured by Horiba, Ltd., and a methane purification efficiency was determined based on the following formula. In the following formula, X represents a detected methane amount when no catalyst is installed, and Y represents a detected methane amount when the catalyst is installed. $Methane purification efficiency \left(%\right) = \left(X-Y\right) / X \times 100$

Measurement results of the methane purification efficiency are shown in Tables 2A and 2B.

### <Test Example 2>

### (1) Durability treatment

Durability treatment was performed on each of the exhaust gas purification catalysts of Examples 1B to 2B and Comparative Example 1B in the same manner as in (1) of Test Example 1.

### (2) Evaluation of actual vehicle purification performance

After the durability treatment, each exhaust gas purification catalyst was installed in a vehicle. The vehicle was driven in accordance with operating conditions of a Modified Indian Driving Cycle (MIDC). Emission amounts of methane and nitrogen oxides (NOx) in exhaust gas that had passed through the exhaust gas purification catalyst were measured, and emission amounts (mg/km) of methane and NOx per unit travel distance were determined. A compressed natural gas (CNG) vehicle was used as the vehicle. Methane emission amount (mg/km) and NOx emission amount (mg/km) per unit travel distance during the test mode are shown in Table 2C.

### [Table 1A]

**Table 1A**

| | First catalyst layer | | Third catalyst layer | | | Fourth catalyst layer | | |
|---|---|---|---|---|---|---|---|---|
| | WC (g/L) | Pd content (% by mass) | WC (g/L) | Rh content (% by mass) | Pt content (% by mass) | WC (g/L) | Rh content (% by mass) | Pt content (% by mass) |
| Example 1A | 170 | 0.9 | 60 | 0.2 | - | 60 | 0.2 | - |
| Example 2A | 170 | 0.9 | 60 | 0.2 | - | 60 | 0.2 | - |
| Example 3A | 170 | 0.9 | 60 | 0.2 | - | 60 | 0.2 | - |
| Example 4A | 170 | 0.9 | 60 | 0.2 | - | 60 | 0.2 | - |
| Example 5A | 170 | 0.9 | 60 | 0.2 | - | 60 | 0.2 | - |
| Example 6A | 170 | 0.9 | 60 | 0.2 | - | 60 | 0.2 | - |
| Example 7A | 170 | 0.9 | 60 | 0.2 | - | 60 | 0.2 | - |
| Example 8A | 170 | 0.9 | 60 | 0.2 | - | 60 | 0.2 | - |
| Example 9A | 170 | 0.9 | 60 | 0.2 | - | 60 | 0.2 | - |
| Example 10A | 170 | 0.9 | 60 | 0.2 | - | 60 | 0.2 | - |
| Example 11A | 170 | 0.9 | 60 | 0.2 | - | 60 | 0.2 | - |
| Example 12A | 170 | 0.9 | 60 | 0.2 | - | 60 | 0.2 | - |

**Table 1A (continued)**

| | First catalyst layer | | Third catalyst layer | | | Fourth catalyst layer | | |
|---|---|---|---|---|---|---|---|---|
| | WC (g/L) | Pd content (% by mass) | WC (g/L) | Rh content (% by mass) | Pt content (% by mass) | WC (g/L) | Rh content (% by mass) | Pt content (% by mass) |
| Comparative Example 1A | 170 | 0.9 | 60 | 0.2 | - | 60 | 0.2 | - |
| Comparative Example 2A | 170 | 0.9 | 60 | 0.2 | - | 60 | 0.2 | - |
| Comparative Example 3A | 170 | 0.9 | 60 | 0.2 | - | 60 | 0.2 | - |
| Comparative Example 4A | 170 | 0.9 | 60 | 0.2 | - | 60 | 0.2 | - |
| Comparative Example 5A | 170 | 0.9 | 60 | 0.2 | - | 60 | 0.2 | - |
| Comparative Example 6A | 170 | 0.9 | 60 | 0.2 | - | 60 | 0.2 | - |
| Comparative Example 7A | 170 | 0.9 | 60 | 0.2 | - | 60 | 0.2 | - |
| Comparative Example 8A | 170 | 0.9 | 60 | 0.2 | - | 60 | 0.2 | - |
| Comparative Example 9A | 170 | 0.9 | 60 | 0.2 | - | 60 | 0.2 | - |
| Comparative Example 10A | 170 | 0.9 | 60 | 0.2 | - | 60 | 0.2 | - |
| Comparative Example 11A | 170 | 0.9 | 60 | 0.2 | - | 60 | 0.2 | - |

### [Table 1B]

**Table 1B**

| | First catalyst layer | | Third catalyst layer | | | Fourth catalyst layer | | |
|---|---|---|---|---|---|---|---|---|
| | WC (g/L) | Pd content (% by mass) | WC (g/L) | Rh content (% by mass) | Pt content (% by mass) | WC (g/L) | Rh content (% by mass) | Pt content (% by mass) |
| Example 1B | 170 | 0.9 | 60 | 0.2 | - | 60 | 0.2 | - |
| Example 2B | 170 | 0.9 | 60 | 0.2 | 0.2 | 60 | 0.2 | 0.2 |
| Comparative Example 1B | 170 | 0.9 | 60 | 0.2 | - | 60 | 0.2 | - |

### [Table 2A]

**Table 2A**

| | Second catalyst layer | | | | | | | | | | | Methane purification rate (%) |
|---|---|---|---|---|---|---|---|---|---|---|---|---|
| | WC (g/L) | Pt (g/L) | CeO₂ (g/L) | BaO (g/L) | CeO₂/ Pt | CeO₂/ BaO | First carrier | | | Ceria binder | Existence state of Ba | |
| | | | | | | | Type | CeO₂ content (% by mass) | Amount (% by mass) | Amount (% by mass) | | |
| Example 1A | 170 | 2.5 | 17.4 | 7.8 | 7.0 | 2.2 | CZ | 20 | 41.2 | 2.0 | BaCO₃ | 80 |
| Example 2A | 170 | 2.5 | 24.4 | 7.8 | 9.8 | 3.1 | CZ | 30 | 41.2 | 2.0 | BaCO₃ | 83 |
| Example 3A | 170 | 2.5 | 31.4 | 7.8 | 12.6 | 4.0 | CZ | 40 | 41.2 | 2.0 | BaCO₃ | 84 |
| Example 4A | 170 | 2.5 | 38.4 | 7.8 | 15.4 | 4.9 | CZ | 50 | 41.2 | 2.0 | BaCO₃ | 82 |
| Example 5A | 170 | 2.5 | 41.9 | 7.8 | 16.8 | 5.4 | CZ | 55 | 41.2 | 2.0 | BaCO₃ | 82 |
| Example 6A | 170 | 2.5 | 45.4 | 7.8 | 18.2 | 5.8 | CZ | 60 | 41.2 | 2.0 | BaCO₃ | 81 |
| Example 7A | 170 | 2.5 | 48.9 | 7.8 | 19.6 | 6.3 | CZ | 65 | 41.2 | 2.0 | BaCO₃ | 80 |
| Example 8A | 170 | 2.5 | 24.4 | 6.6 | 9.8 | 3.7 | CZ | 30 | 41.2 | 2.0 | BaSO₄ | 83 |
| Example 9A | 170 | 2.5 | 24.4 | 7.8 | 9.8 | 3.1 | CZ | 40 | 30.9 | 2.0 | BaCO₃ | 81 |
| Example 10A | 170 | 2.5 | 43.4 | 7.8 | 17.4 | 5.6 | CZ | 40 | 58.8 | 2.0 | BaCO₃ | 90 |
| Example 11A | 167 | 2.5 | 43.4 | 5.4 | 17.4 | 8.0 | CZ | 40 | 59.9 | 2.0 | BaCO₃ | 87 |
| Example 12A | 165 | 2.5 | 43.4 | 3.9 | 17.4 | 11.2 | CZ | 40 | 60.6 | 2.1 | BaCO₃ | 86 |

### [Table 2B]

**Table 2B**

| | Second catalyst layer | | | | | | | | | | | Methane purification rate (%) |
|---|---|---|---|---|---|---|---|---|---|---|---|---|
| | WC (g/L) | Pt (g/L) | CeO₂ (g/L) | BaO (g/L) | CeO₂/ Pt | CeO₂/ BaO | First carrier | | | Ceria binder | Existence state of Ba | |
| | | | | | | | Type | CeO₂ content (% by mass) | Amount (% by mass) | Amount (% by mass) | | |
| Comparative Example 1A | 170 | 2.5 | 3.4 | 7.8 | 1.4 | 0.4 | Zr | 0 | 41.2 | 2.0 | BaCO₃ | 63 |
| Comparative Example 2A | 170 | 2.5 | 13.9 | 7.8 | 5.6 | 1.8 | CZ | 15 | 41.2 | 2.0 | BaCO₃ | 72 |
| Comparative Example 3A | 170 | 2.5 | 59.4 | 7.8 | 23.8 | 7.6 | CZ | 80 | 41.2 | 2.0 | BaCO₃ | 76 |
| Comparative Example 4A | 170 | 2.5 | 69.9 | 7.8 | 28.0 | 9.0 | Ce | 95 | 41.2 | 2.0 | BaCO₃ | 75 |
| Comparative Example 5A | 170 | 2.5 | 73.4 | 7.8 | 29.4 | 9.4 | Ce | 100 | 41.2 | 2.0 | BaCO₃ | 76 |
| Comparative Example 6A | 160 | 2.5 | 24.4 | - | 9.8 | - | CZ | 30 | 43.8 | 2.1 | - | 39 |
| Comparative Example 7A | 170 | 2.5 | 3.4 | 7.8 | 1.4 | 0.4 | - | 0 | 0 | 2.0 | BaCO₃ | 71 |
| Comparative Example 8A | 170 | 2.5 | 13.9 | 7.8 | 5.6 | 1.8 | CZ | 40 | 15.3 | 2.0 | BaCO₃ | 76 |
| Comparative Example 9A | 170 | 2.5 | 59.4 | 7.8 | 23.8 | 7.6 | CZ | 40 | 82.4 | 2.0 | BaCO₃ | 75 |
| Comparative Example 10A | 163 | 2.5 | 43.4 | 2.3 | 17.4 | 18.6 | CZ | 40 | 61.3 | 2.1 | BaCO₃ | 78 |
| Comparative Example 11A | 161 | 2.5 | 43.4 | 0.8 | 17.4 | 55.9 | CZ | 40 | 62.1 | 2.1 | BaCO₃ | 61 |

### [Table 2C]

**Table 2C**

| | Second catalyst layer | | | | | | | | | | | Emission amount | |
|---|---|---|---|---|---|---|---|---|---|---|---|---|---|
| | WC (g/L) | Pt (g/L) | CeO₂ (g/L) | BaO (g/L) | CeO₂/ Pt | CeO₂/ BaO | First carrier | | | Ceria binder | Existence state of Ba | Methane (mg/km) | NOx (mg/km) |
| | | | | | | | Type | CeO₂ content (% by mass) | Amount (% by mass) | Amount (% by mass) | | | |
| Example 1B | 170 | 2.5 | 31.4 | 7.8 | 12.6 | 4.0 | CZ | 40 | 41.2 | 2.0 | BaCO₃ | 31.5 | 9.2 |
| Example 2B | 170 | 2.4 | 31.4 | 7.8 | 13.1 | 4.0 | CZ | 40 | 41.2 | 2.0 | BaCO₃ | 30.4 | 7.9 |
| Comparative Example 1B | 160 | 2.5 | 24.4 | - | 9.8 | - | CZ | 30 | 43.8 | 2.1 | - | 48.9 | 11.8 |

### DESCRIPTION OF REFERENCE SIGNS

1A, 1B ... Exhaust gas purification catalyst
10 ... Substrate
10a ... First substrate portion
10b ... Second substrate portion
11a, 11b ... Tubular member
12a, 12b ... Partition wall
13a, 13b ... Cell
20 ... First catalyst layer
30 ... Second catalyst layer
40 ... Third catalyst layer
50 ... Fourth catalyst layer
L10a ... Length of first substrate portion
L10b ... Length of second substrate portion
L20 ... Average length of first catalyst layer
L30 ... Average length of second catalyst layer
L40 ... Average length of third catalyst layer
L50 ... Average length of fourth catalyst layer
P ... Exhaust pipe of internal combustion engine

## Claims

1. An exhaust gas purification catalyst comprising:
a substrate extending in an exhaust gas flow direction and having a first substrate portion located on an upstream side in the exhaust gas flow direction and a second substrate portion located on a downstream side in the exhaust gas flow direction;
a first catalyst layer provided on the first substrate portion;
a second catalyst layer provided on the second substrate portion; and
a third catalyst layer provided on an upper side of the first catalyst layer and/or a fourth catalyst layer provided on an upper side of the second catalyst layer,
wherein the first catalyst layer comprises Pd,
wherein the second catalyst layer comprises Pt, Ce, and an alkaline earth metal element,
wherein the third catalyst layer and the fourth catalyst layer each comprise Rh,
wherein a mass of Pt in terms of metal in the second catalyst layer is 1.0 g/L or more based on a volume of a portion of the second substrate portion on which the second catalyst layer is provided,
wherein in the second catalyst layer, a ratio of a mass of Ce in terms of CeO₂ to a mass of Pt in terms of metal is 6.0 or more and 20.0 or less, and
wherein in the second catalyst layer, a ratio of a mass of Ce in terms of CeO₂ to a mass of the alkaline earth metal element in terms of oxide is 2.0 or more and 18.0 or less.

2. The exhaust gas purification catalyst as claimed in claim 1, wherein the second catalyst layer comprises a Ce-Zr-based complex oxide as a Ce source.

3. The exhaust gas purification catalyst as claimed in claim 2, wherein a content of Ce in terms of CeO₂ in the Ce-Zr-based complex oxide is 18% by mass or more and 70% by mass or less based on a mass of the Ce-Zr-based complex oxide.

4. The exhaust gas purification catalyst as claimed in claim 3, wherein the content of Ce in terms of CeO₂ in the Ce-Zr-based complex oxide is 25% by mass or more and 63% by mass or less based on the mass of the Ce-Zr-based complex oxide.

5. The exhaust gas purification catalyst as claimed in claim 2, wherein a content of the Ce-Zr-based complex oxide in the second catalyst layer is 20% by mass or more and 80% by mass or less based on a mass of the second catalyst layer.

6. The exhaust gas purification catalyst as claimed in claim 2, wherein at least a part of Pt in the second catalyst layer is supported on the Ce-Zr-based complex oxide in the second catalyst layer.

7. The exhaust gas purification catalyst as claimed in any one of claims 1 to 6, wherein the second catalyst layer comprises an alkaline earth metal compound as an alkaline earth metal element source, and wherein the alkaline earth metal compound is selected from an oxide thereof, a carbonate thereof, and a sulfate thereof.

8. The exhaust gas purification catalyst as claimed in any one of claims 1 to 6, wherein the second catalyst layer comprises one or more alkaline earth metal elements selected from Ca, Sr, and Ba.

9. The exhaust gas purification catalyst as claimed in any one of claims 1 to 6, wherein the third catalyst layer and the fourth catalyst layer each comprise Pt.

10. The exhaust gas purification catalyst as claimed in claim 9, wherein the third catalyst layer and the fourth catalyst layer each comprise Ce.

11. The exhaust gas purification catalyst as claimed in claim 10, wherein the third catalyst layer and the fourth catalyst layer each comprise a Ce-Zr-based complex oxide as a Ce source.

12. The exhaust gas purification catalyst as claimed in claim 11, wherein at least a part of Pt in the third catalyst layer is supported on the Ce-Zr-based complex oxide in the third catalyst layer, and wherein at least a part of Pt in the fourth catalyst layer is supported on the Ce-Zr-based complex oxide in the fourth catalyst layer.
